# EUROPEAN PATENT APPLICATION

(11) **EP 4 822 645 A1**
(43) Date of publication of application: **14.10.2026**
(21) Application number: 24900683.4
(22) Date of filing: 05.12.2024
(51) Int. Cl.: G06T 9/00

(54) **ENCODING METHOD, DECODING METHOD, ENCODING DEVICE, AND DECODING DEVICE**

(30) Priority: 08.12.2023 US 202363607860 P; 22.12.2023 US 202363614009 P
(71) Applicant: Panasonic Intellectual Property Corporation of America, Torrance, CA 90504 (US)
(72) Inventor: SUGIO, Toshiyasu, Kadoma-shi, Osaka 571-0057 (JP); IGUCHI, Noritaka, Kadoma-shi, Osaka 571-0057 (JP); NISHI, Takahiro, Kadoma-shi, Osaka 571-0057 (JP); ITO, Atsushi, Kadoma-shi, Osaka 571-0057 (JP); OHKAWA, Masato, Kadoma-shi, Osaka 571-0057 (JP)
(74) Representative: Grünecker Patent- und Rechtsanwälte PartG mbB
(86) International application number: PCT/JP2024/043132
(87) International publication number: WO 2025/121390

(57) **Abstract**

An encoding method includes: obtaining a first frame to be encoded (step S13101); and encoding first data using second data as a reference, the first data included in the first frame and including one or more layers, the second data included in a second frame and including one or more layers (step S13102). The encoding of the first data includes, for each layer among the one or more layers included in the first data, determining one process among a plurality of processes, using a value indicating the layer and a value related to the one or more layers included in the second data, and executing the determined one process on the first data of the layer.

## Description

### [Technical Field]

The present disclosure relates to, for example, an encoding method.

### [Background Art]

Patent Literature (PTL) 1 proposes a method and a device for encoding and decoding three-dimensional mesh data.

### [Citation List]

### [Patent Literature]

[PTL 1] Japanese Unexamined Patent Application Publication No. 2006-187015

### [Summary of Invention]

### [Technical Problem]

There is a demand for further improvement in an encoding or decoding process related to displacement vectors. An object of the present disclosure is to improve the encoding or decoding process related to displacement vectors.

### [Solution to Problem]

An encoding method according to one aspect of the present invention includes: obtaining a first frame to be encoded; and encoding first data using second data as a reference. The first data is included in the first frame and includes one or more layers. The second data is included in a second frame and includes one or more layers. The encoding of the first data includes: for each layer among the one or more layers included in the first data, determining one process among a plurality of processes, using a value indicating the layer and a value related to the one or more layers included in the second data, and executing the one process determined on the first data of the layer.

Note that these general or specific aspects may be implemented using a system, a device, an integrated circuit, a computer program, or a computer-readable recording medium such as a CD-ROM, or any combination of systems, devices, integrated circuits, computer programs, and recording media.

### [Advantageous Effects of Invention]

The present disclosure can contribute toward improving encoding processing related to displacement vectors and the like.

### [Brief Description of Drawings]

[FIG. 1]

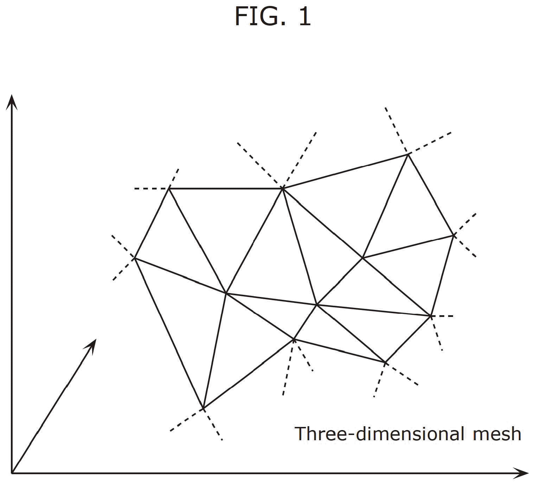

   FIG. 1 is a conceptual diagram illustrating a three-dimensional mesh according to an embodiment.
[FIG. 2]

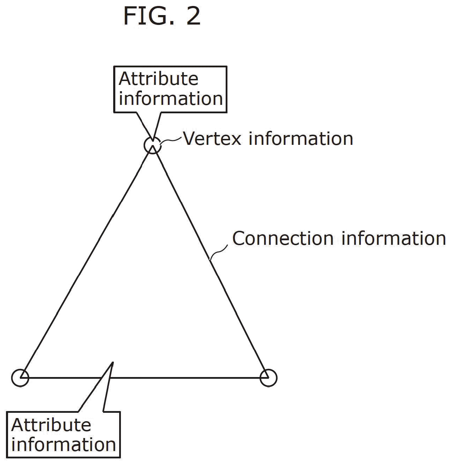

   FIG. 2 is a conceptual diagram illustrating basic elements of a three-dimensional mesh according to the embodiment.
[FIG. 3]

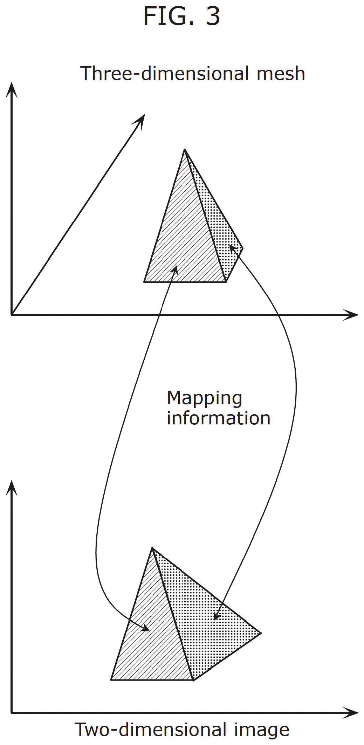

   FIG. 3 is a conceptual diagram illustrating mapping according to the embodiment.
[FIG. 4]

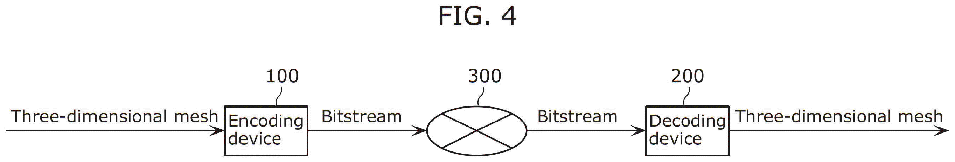

   FIG. 4 is a block diagram illustrating a configuration example of the encoding/decoding system according to the embodiment.
[FIG. 5]

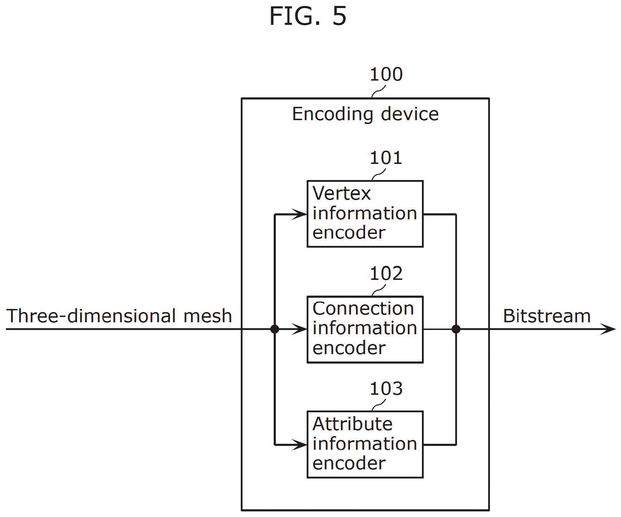

   FIG. 5 is a block diagram illustrating a configuration example of the encoding device according to the embodiment.
[FIG. 6]

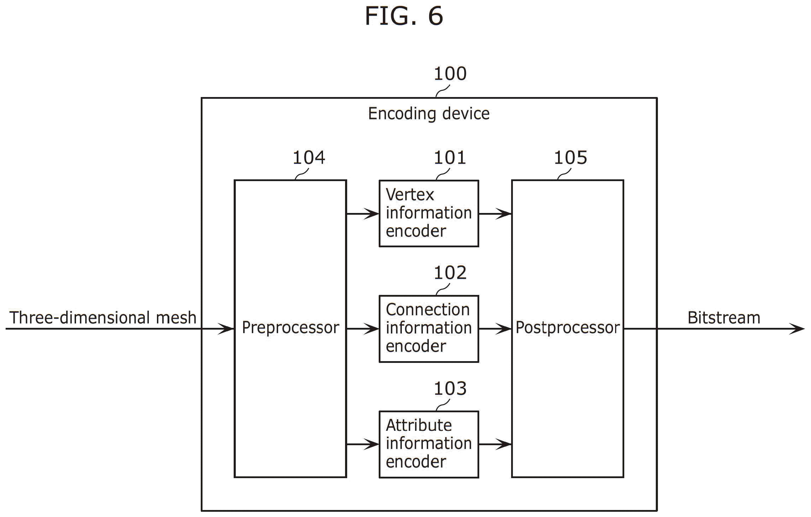

   FIG. 6 is a block diagram illustrating another configuration example of the encoding device according to the embodiment.
[FIG. 7]

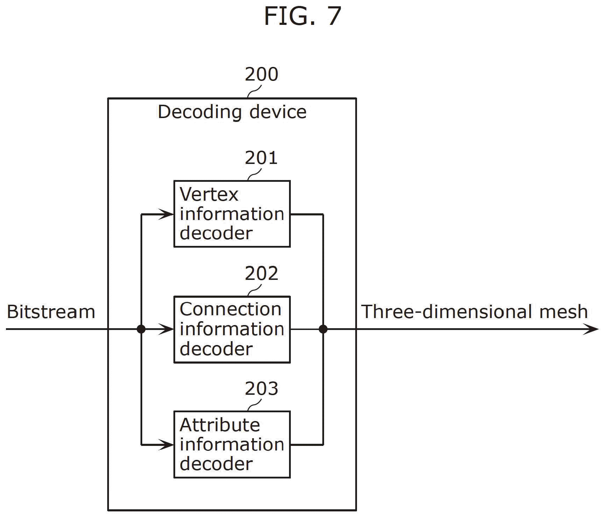

   FIG. 7 is a block diagram illustrating a configuration example of the decoding device according to the embodiment.
[FIG. 8]

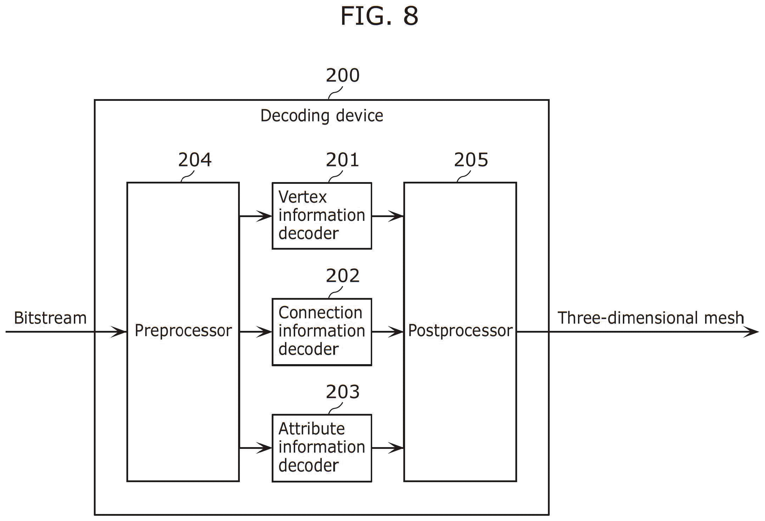

   FIG. 8 is a block diagram illustrating another configuration example of the decoding device according to the embodiment.
[FIG. 9]

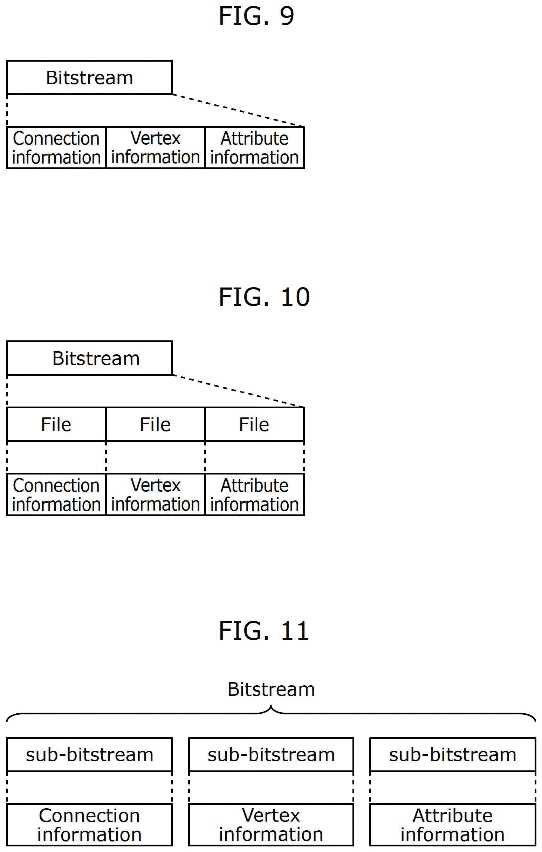

   FIG. 9 is a conceptual diagram illustrating a configuration example of a bitstream according to the embodiment.
[FIG. 10]
   FIG. 10 is a conceptual diagram illustrating another configuration example of a bitstream according to the embodiment.
[FIG. 11]
   FIG. 11 is a conceptual diagram illustrating yet another configuration example of a bitstream according to the embodiment.
[FIG. 12]

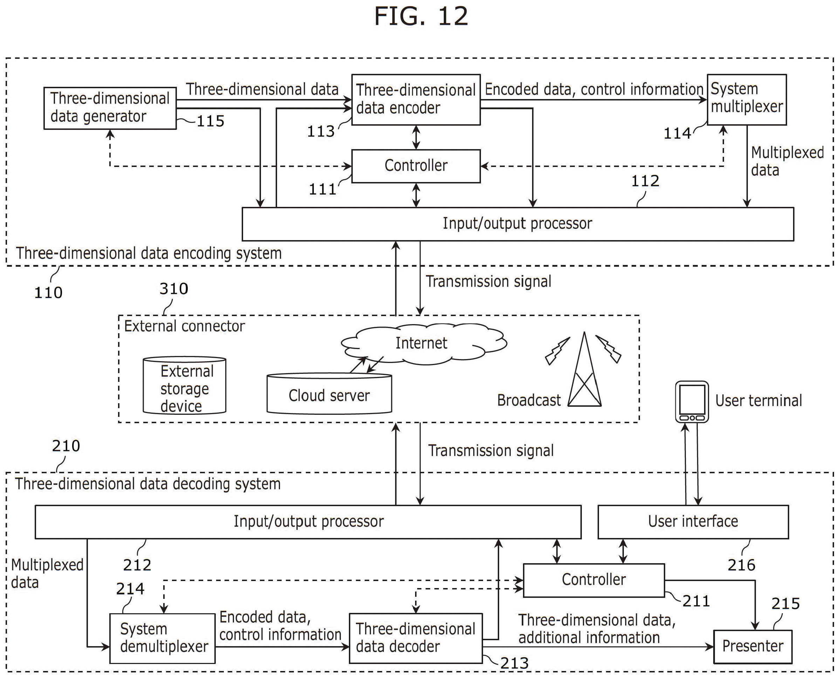

   FIG. 12 is a block diagram illustrating a specific example of the encoding/decoding system according to the embodiment.
[FIG. 13]

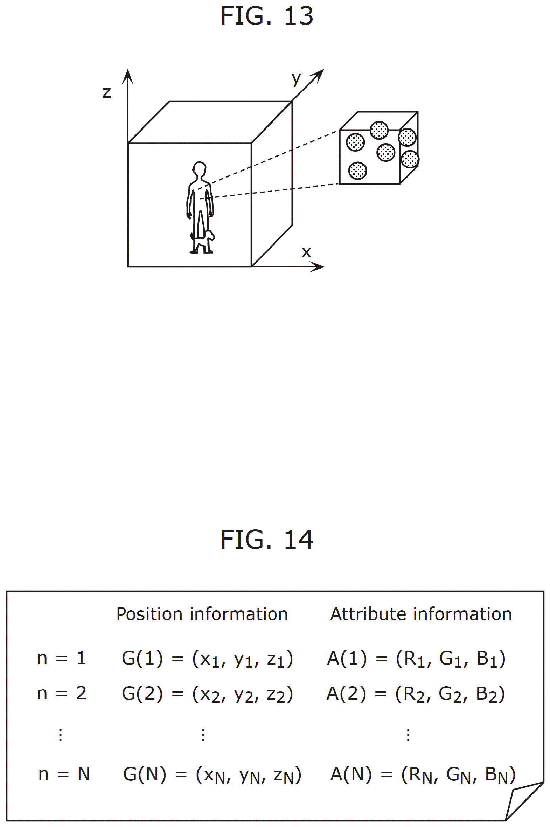

   FIG. 13 is a conceptual diagram illustrating a configuration example of point cloud data according to the embodiment.
[FIG. 14]
   FIG. 14 is a conceptual diagram illustrating a data file example of the point cloud data according to the embodiment.
[FIG. 15]

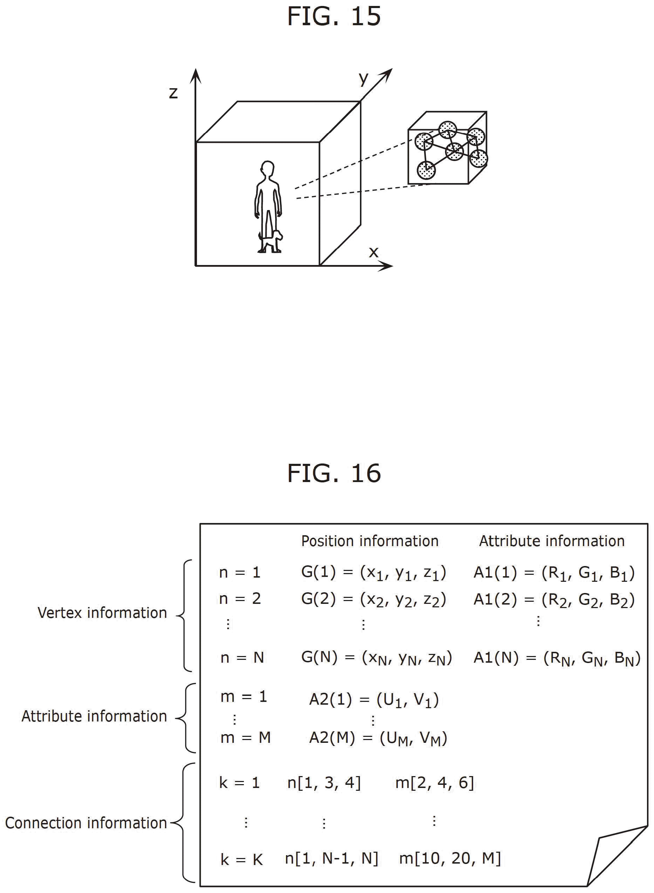

   FIG. 15 is a conceptual diagram illustrating a configuration example of mesh data according to the embodiment.
[FIG. 16]
   FIG. 16 is a conceptual diagram illustrating a data file example of the mesh data according to the embodiment.
[FIG. 17]

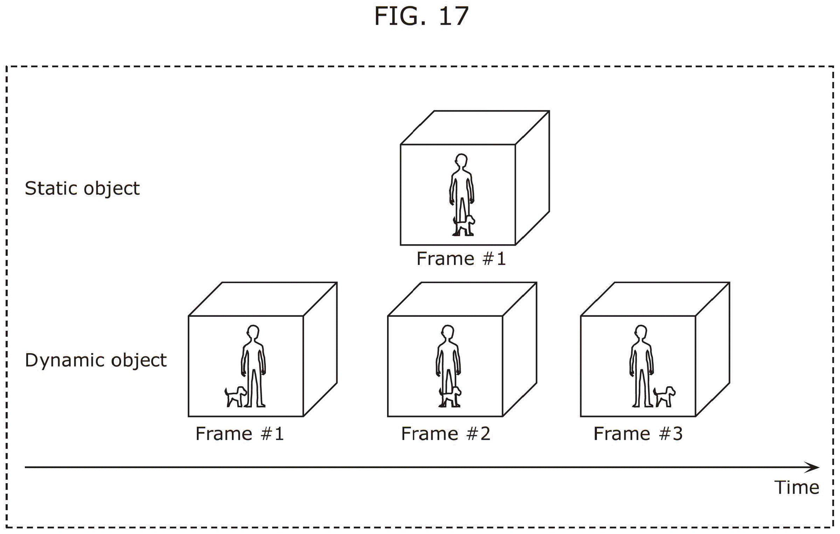

   FIG. 17 is a conceptual diagram illustrating a type of three-dimensional data according to the embodiment.
[FIG. 18]

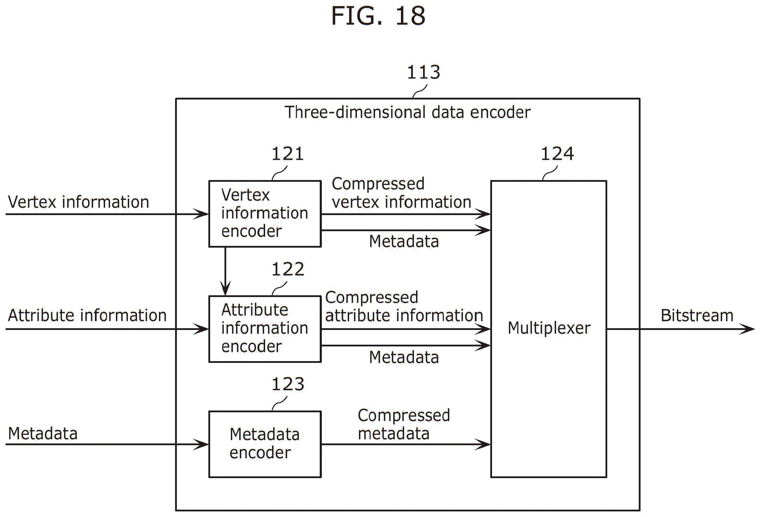

   FIG. 18 is a block diagram illustrating a configuration example of the three-dimensional data encoder according to the embodiment.
[FIG. 19]

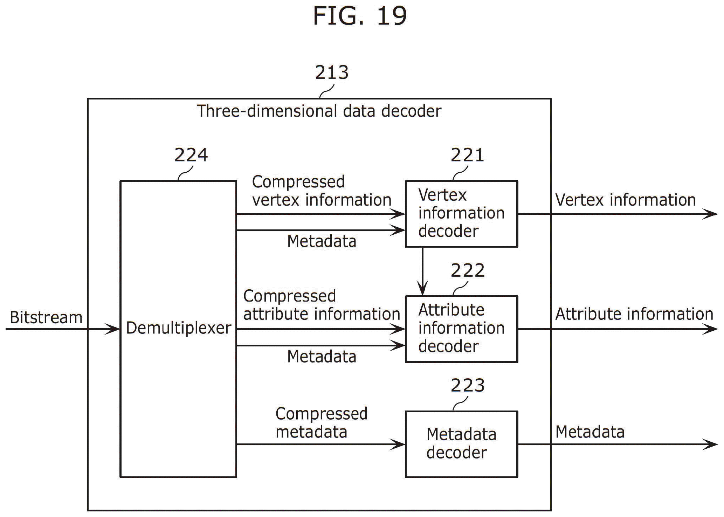

   FIG. 19 is a block diagram illustrating a configuration example of the three-dimensional data decoder according to the embodiment.
[FIG. 20]

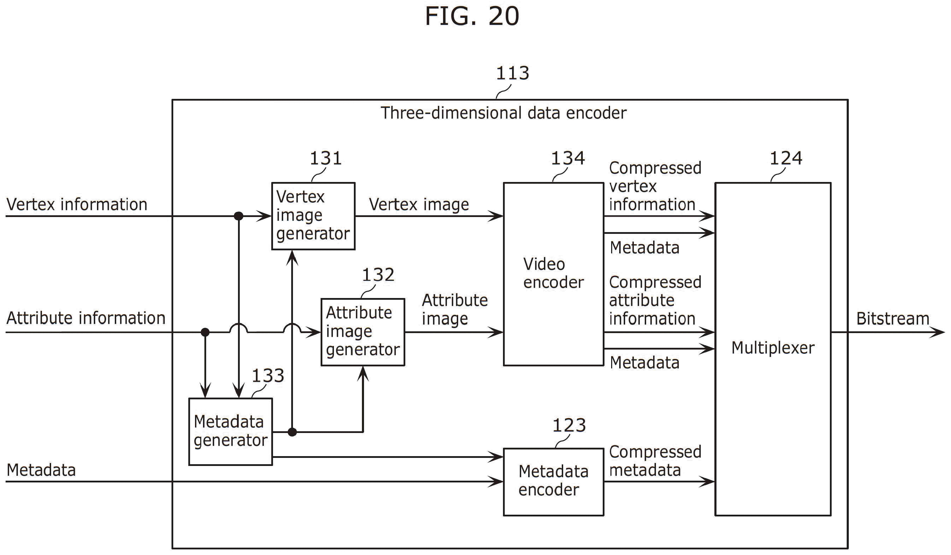

   FIG. 20 is a block diagram illustrating another configuration example of the three-dimensional data encoder according to the embodiment.
[FIG. 21]

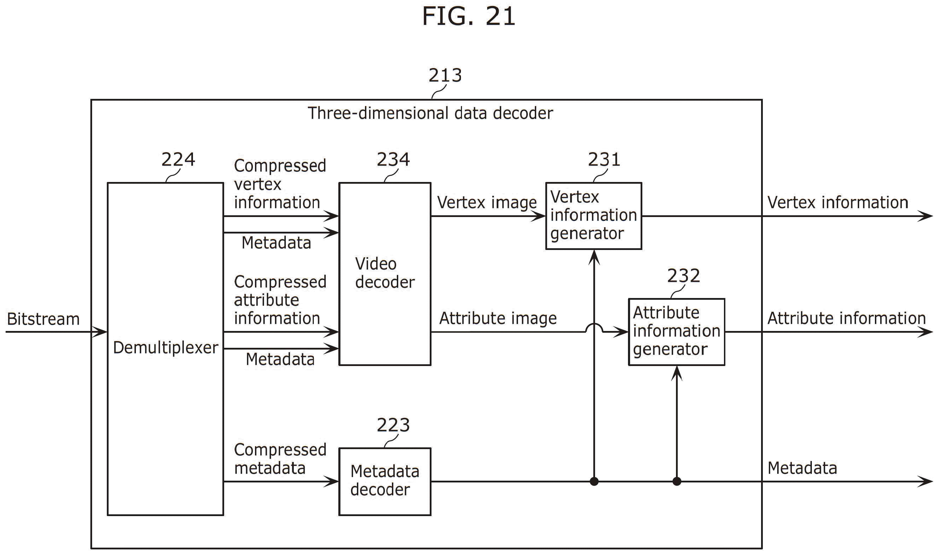

   FIG. 21 is a block diagram illustrating another configuration example of the three-dimensional data decoder according to the embodiment.
[FIG. 22]

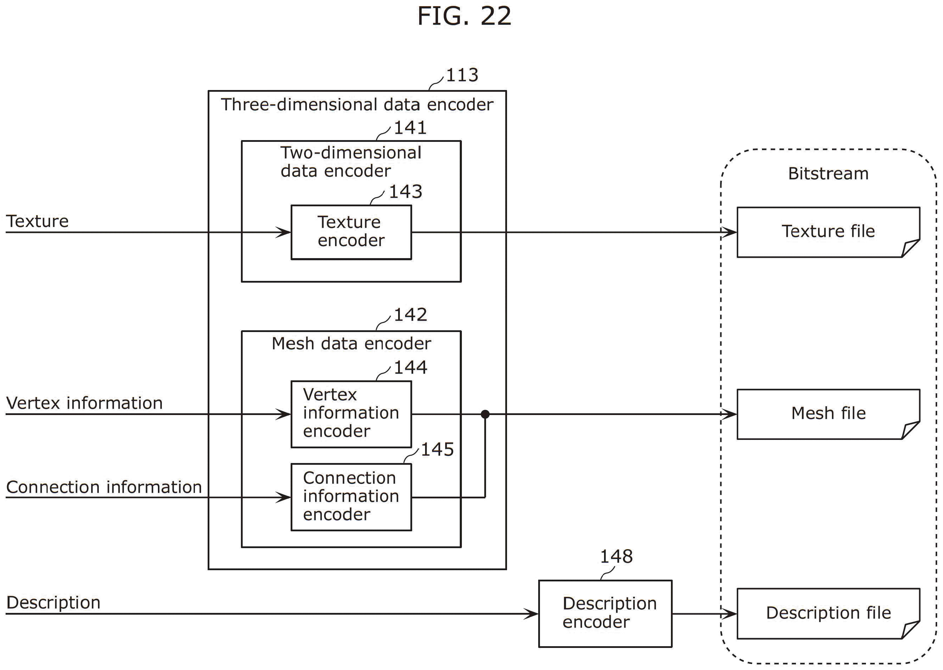

   FIG. 22 is a conceptual diagram illustrating a specific example of encoding processing according to the embodiment.
[FIG. 23]

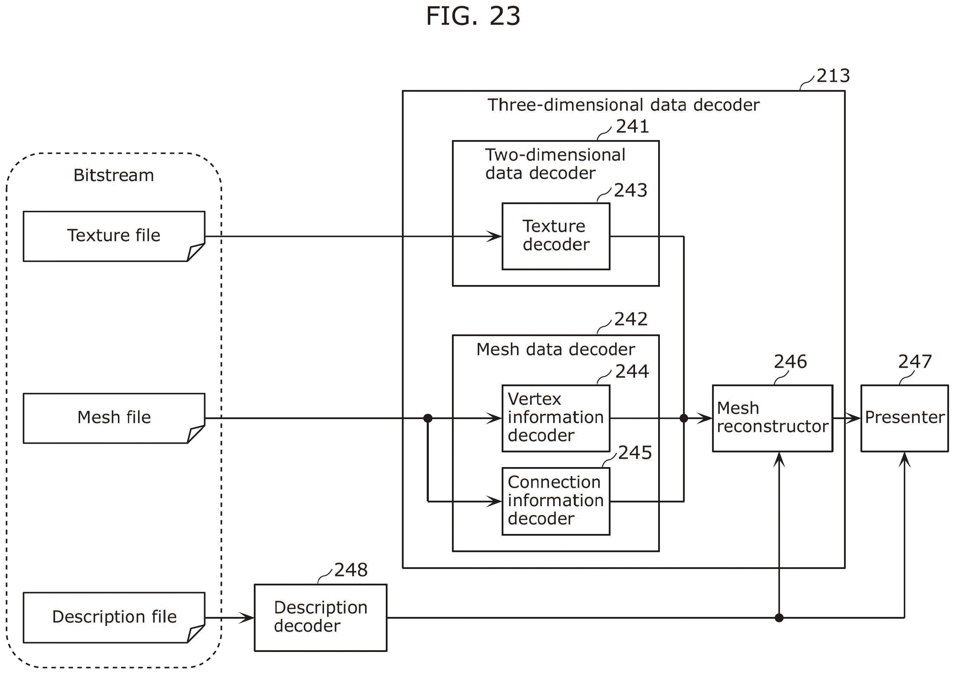

   FIG. 23 is a conceptual diagram illustrating a specific example of decoding processing according to the embodiment.
[FIG. 24]

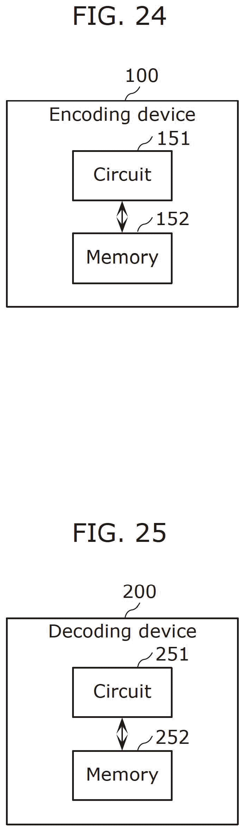

   FIG. 24 is a block diagram illustrating an implementation example of the encoding device according to the embodiment.
[FIG. 25]
   FIG. 25 is a block diagram illustrating an implementation example of the decoding device according to the embodiment.
[FIG. 26]

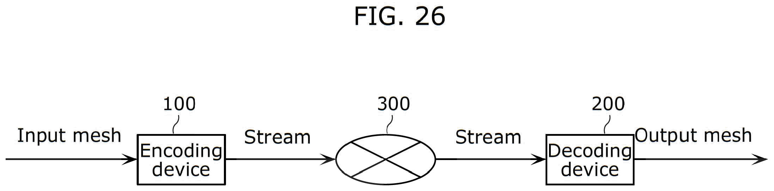

   FIG. 26 is a block diagram illustrating another configuration example of the encoding/decoding system according to the embodiment.
[FIG. 27]

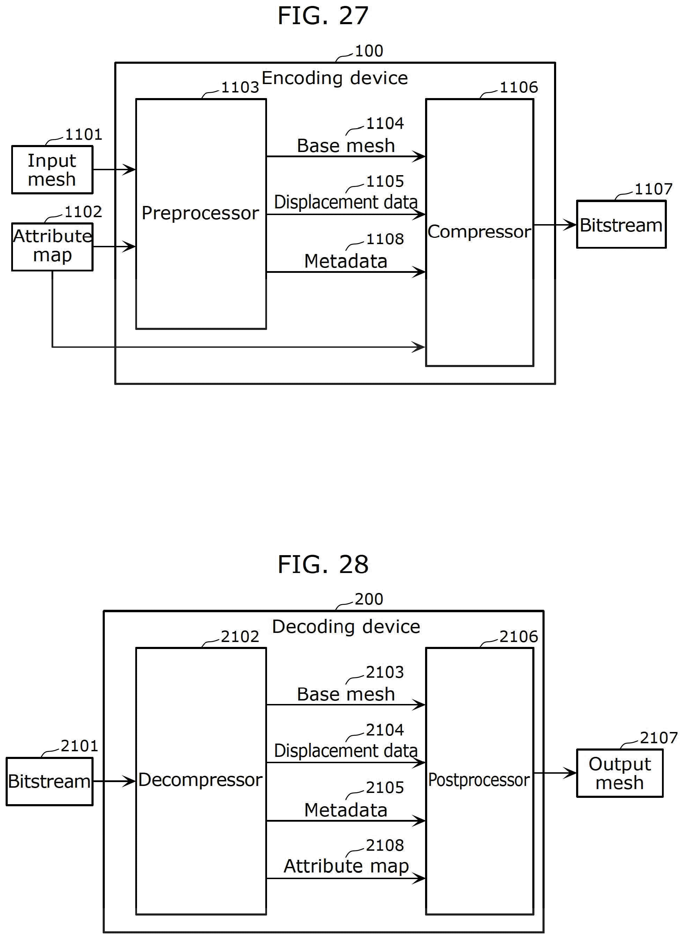

   FIG. 27 is a block diagram illustrating another configuration example of the encoding device according to the embodiment.
[FIG. 28]
   FIG. 28 is a block diagram illustrating another configuration example of the decoding device according to the embodiment.
[FIG. 29]

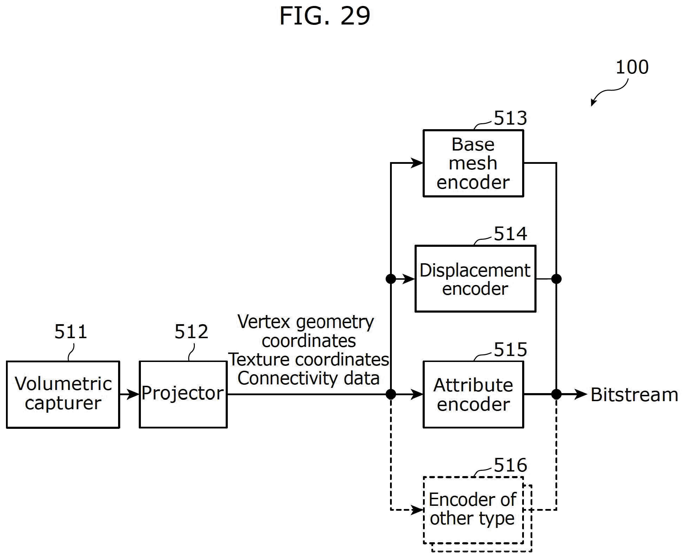

   FIG. 29 is a block diagram illustrating another configuration example of the encoding device according to the embodiment.
[FIG. 30]

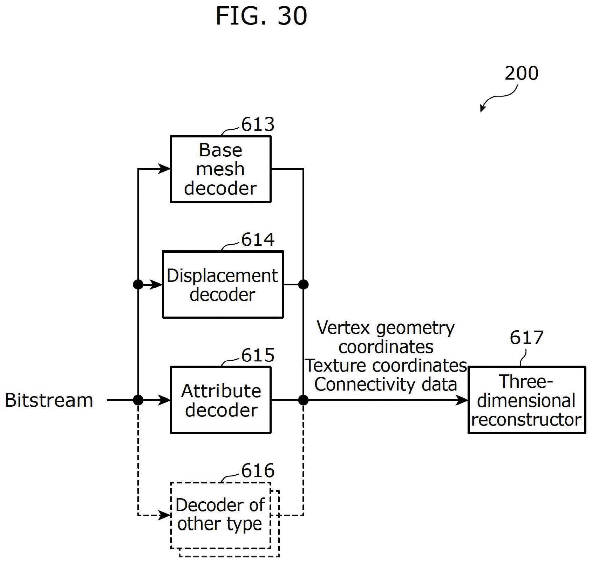

   FIG. 30 is a block diagram illustrating another configuration example of the decoding device according to the embodiment.
[FIG. 31]

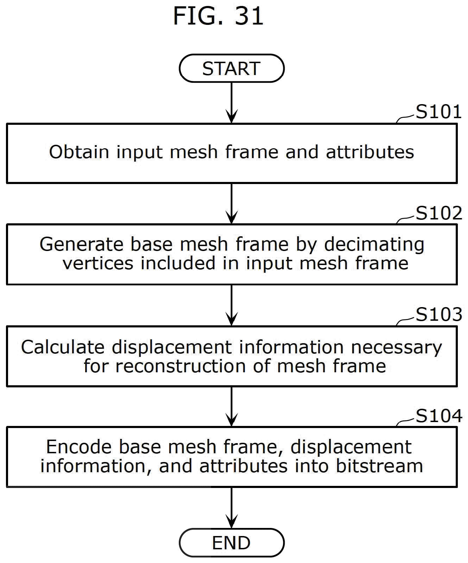

   FIG. 31 is a flowchart illustrating processing of the encoding device according to the embodiment.
[FIG. 32]

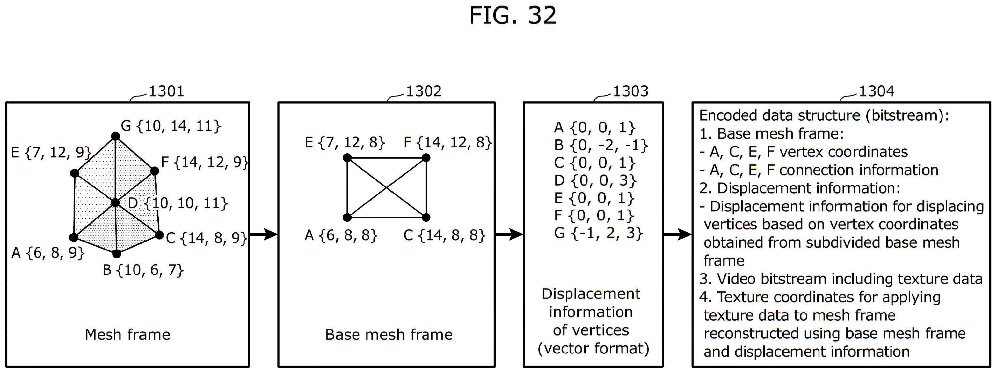

   FIG. 32 is an explanatory diagram conceptually illustrating encoding of a mesh frame according to the embodiment.
[FIG. 33]

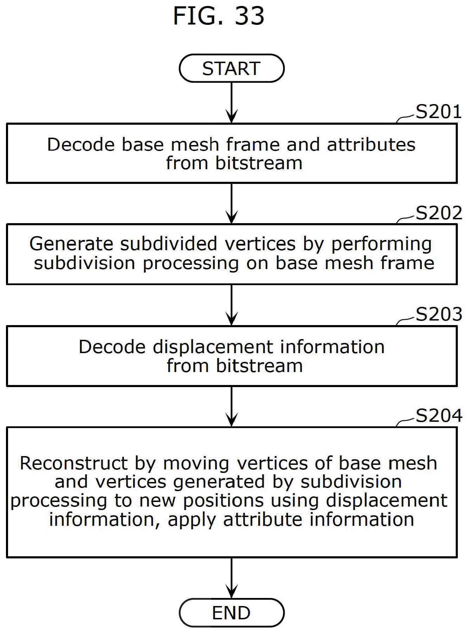

   FIG. 33 is a flowchart illustrating processing of the decoding device according to the embodiment.
[FIG. 34]

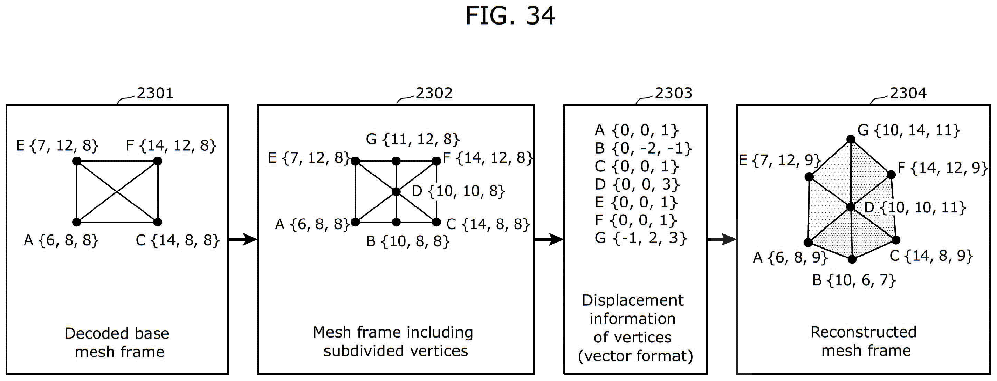

   FIG. 34 is an explanatory diagram conceptually illustrating decoding of a mesh frame according to the embodiment.
[FIG. 35]

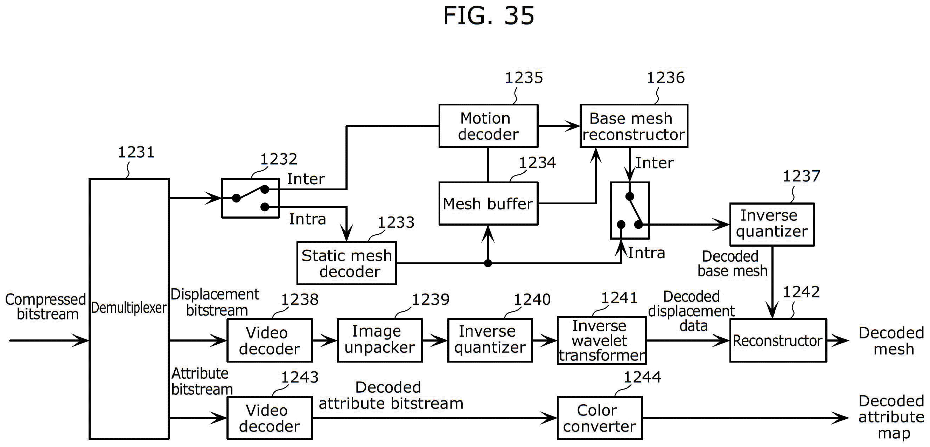

   FIG. 35 is a block diagram illustrating a configuration example of the decoding device according to the embodiment.
[FIG. 36]

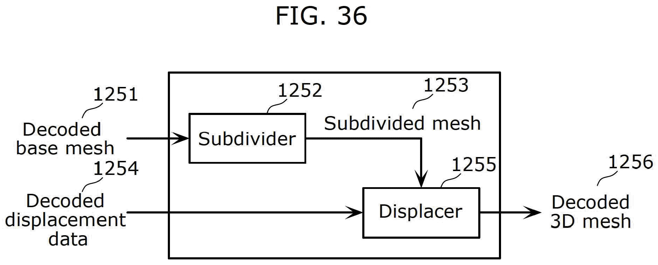

   FIG. 36 is a block diagram illustrating a configuration example of the decoding device according to the embodiment.
[FIG. 37]

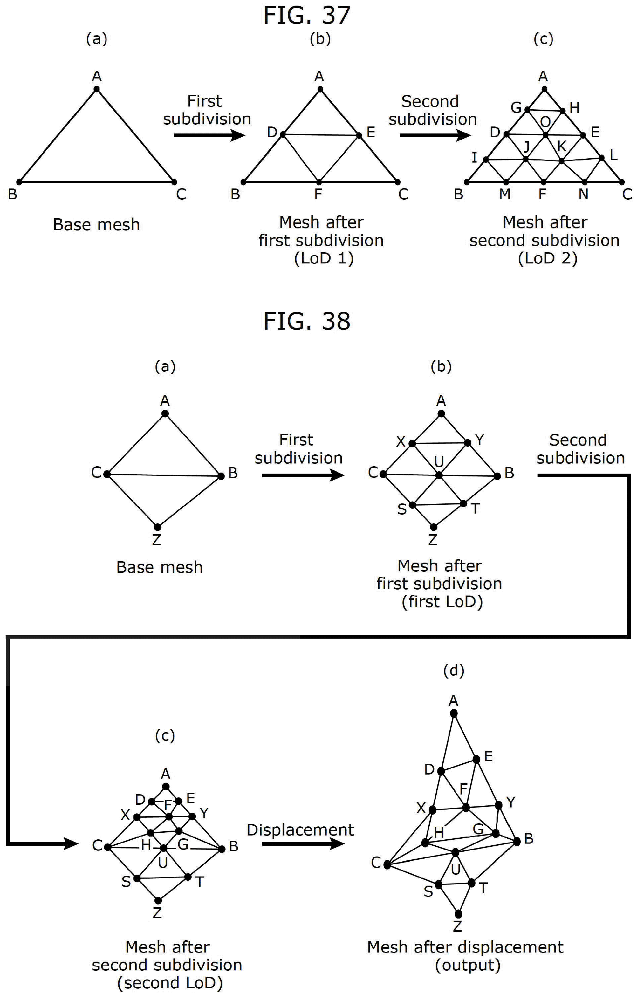

   FIG. 37 is an explanatory diagram illustrating an example of subdivision according to the embodiment.
[FIG. 38]
   FIG. 38 is an explanatory diagram illustrating an example of displacement of vertices after being displaced after subdivision according to the embodiment.
[FIG. 39]

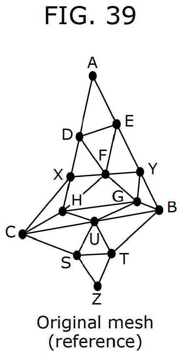

   FIG. 39 is an explanatory diagram illustrating an example of vertices of an original mesh according to the embodiment.
[FIG. 40]

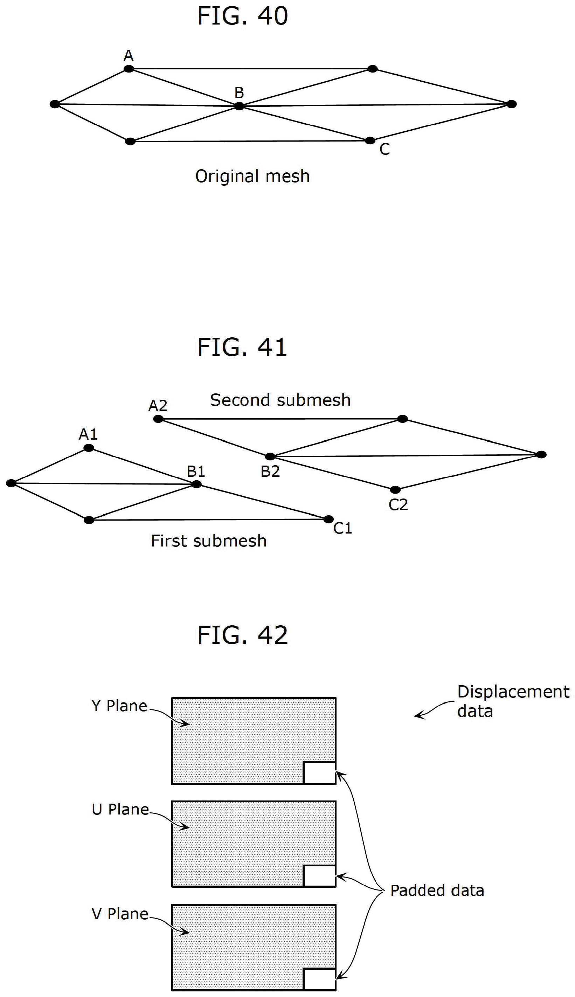

   FIG. 40 is an explanatory diagram illustrating an example of a mesh according to the embodiment.
[FIG. 41]
   FIG. 41 is an explanatory diagram illustrating an example of the division of a mesh into submeshes according to the embodiment.
[FIG. 42]
   FIG. 42 is a first explanatory diagram illustrating an example of packing of displacement information into an image frame according to the embodiment.
[FIG. 43]

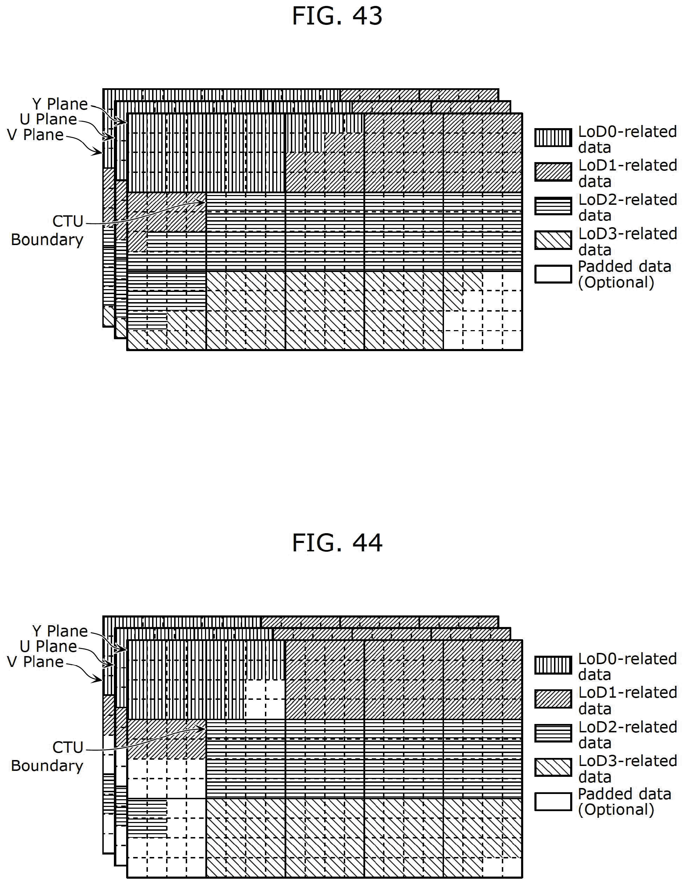

   FIG. 43 is a second explanatory diagram illustrating an example of packing of displacement information into an image frame according to the embodiment.
[FIG. 44]
   FIG. 44 is a third explanatory diagram illustrating an example of packing of displacement information into an image frame according to the embodiment.
[FIG. 45]

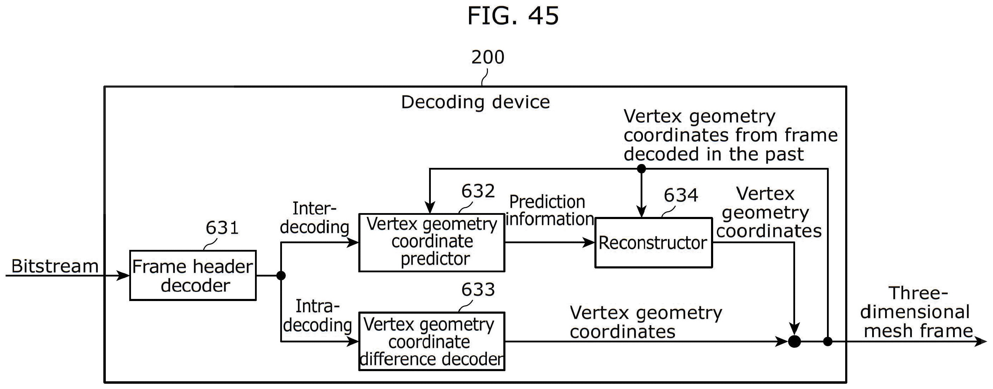

   FIG. 45 is a block diagram illustrating a detailed configuration example of the decoding device according to the embodiment.
[FIG. 46]

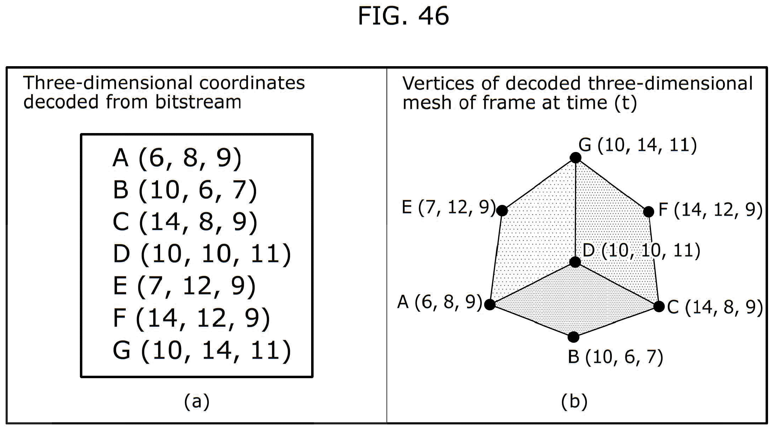

   FIG. 46 is an explanatory diagram illustrating coordinates of vertices in a three-dimensional mesh according to the embodiment.
[FIG. 47]

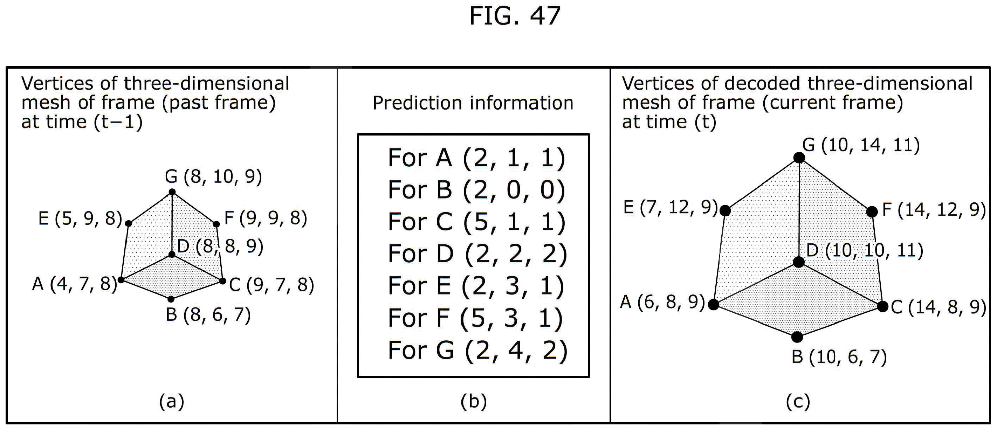

   FIG. 47 is an explanatory diagram illustrating prediction information according to the embodiment.
[FIG. 48]

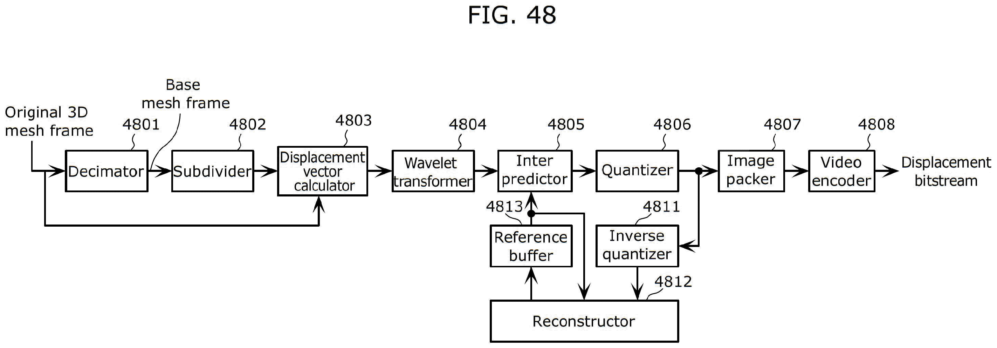

   FIG. 48 is a block diagram illustrating a configuration example of the encoding device according to the embodiment.
[FIG. 49]

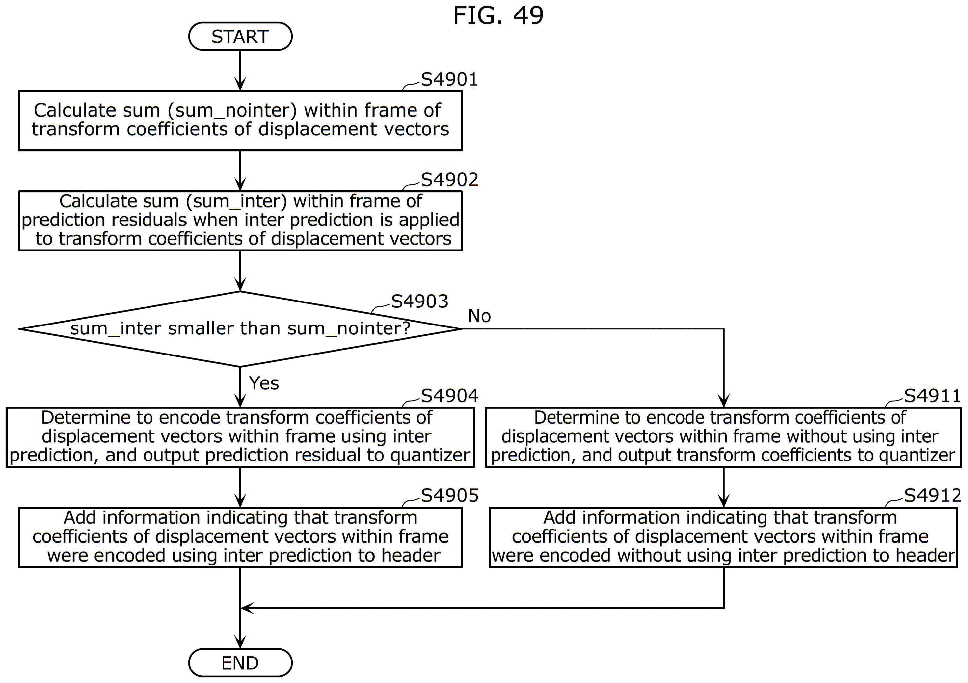

   FIG. 49 is a flowchart illustrating a specific example of encoding processing according to the embodiment.
[FIG. 50]

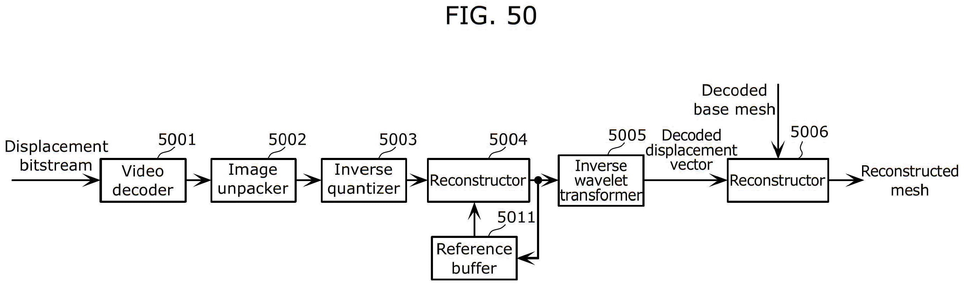

   FIG. 50 is a block diagram illustrating a configuration example of the decoding device according to the embodiment.
[FIG. 51]

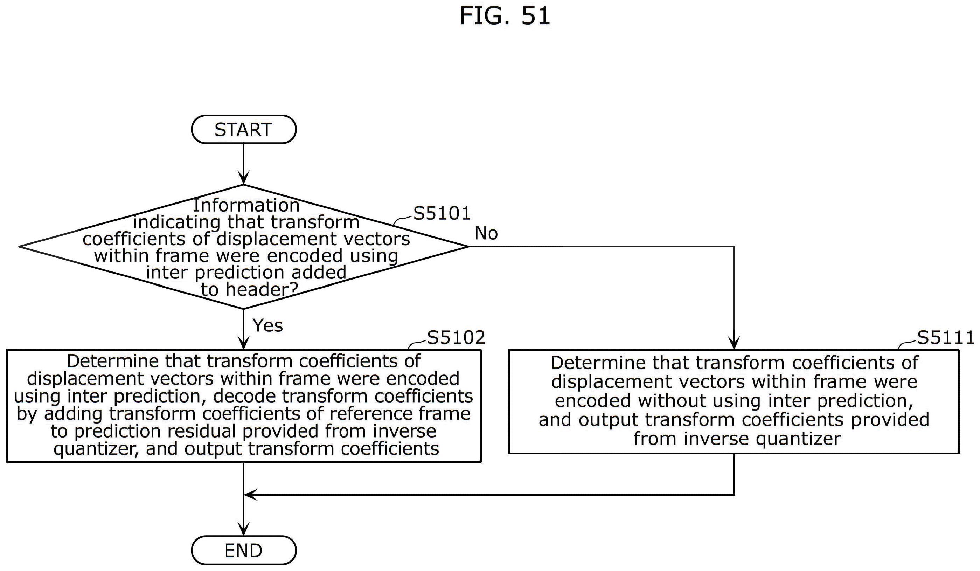

   FIG. 51 is a flowchart illustrating a specific example of decoding processing according to the embodiment.
[FIG. 52]

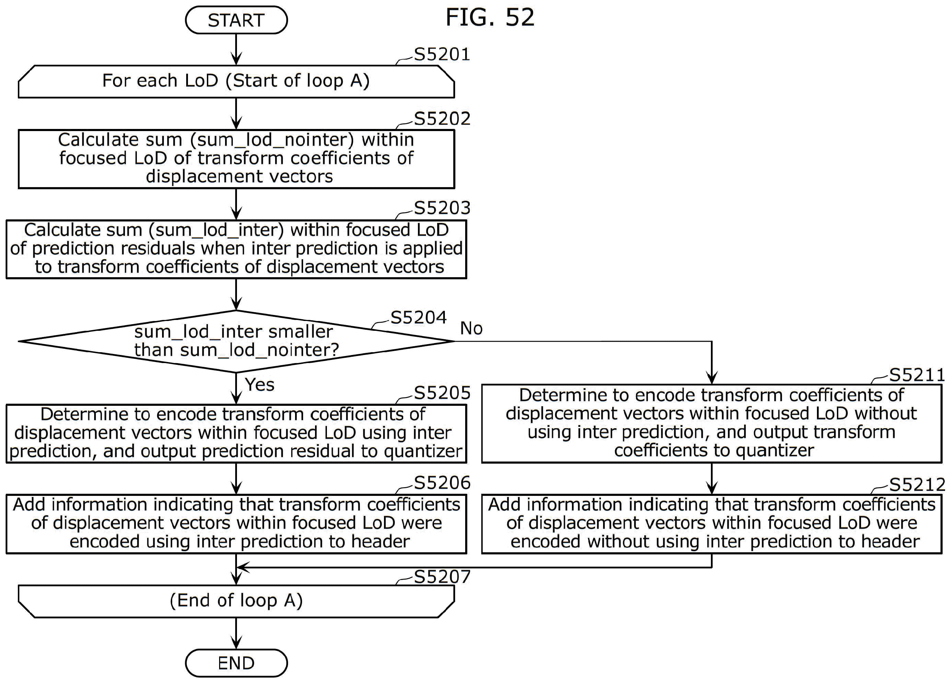

   FIG. 52 is a flowchart illustrating a specific example of encoding processing according to the embodiment.
[FIG. 53]

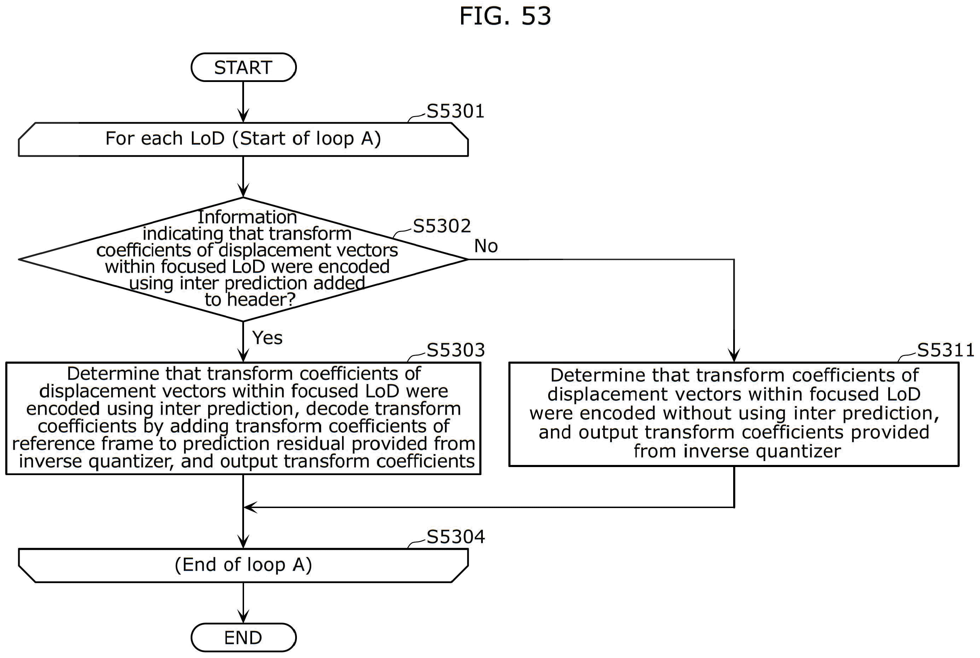

   FIG. 53 is a flowchart illustrating a specific example of decoding processing according to the embodiment.
[FIG. 54]

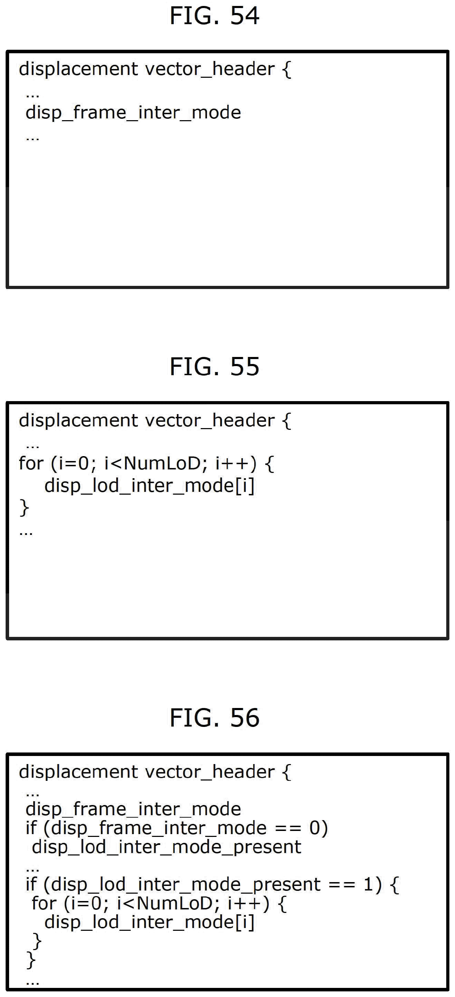

   FIG. 54 is an explanatory diagram illustrating an example of syntax according to the embodiment.
[FIG. 55]
   FIG. 55 is an explanatory diagram illustrating an example of syntax according to the embodiment.
[FIG. 56]
   FIG. 56 is an explanatory diagram illustrating an example of syntax according to the embodiment.
[FIG. 57]

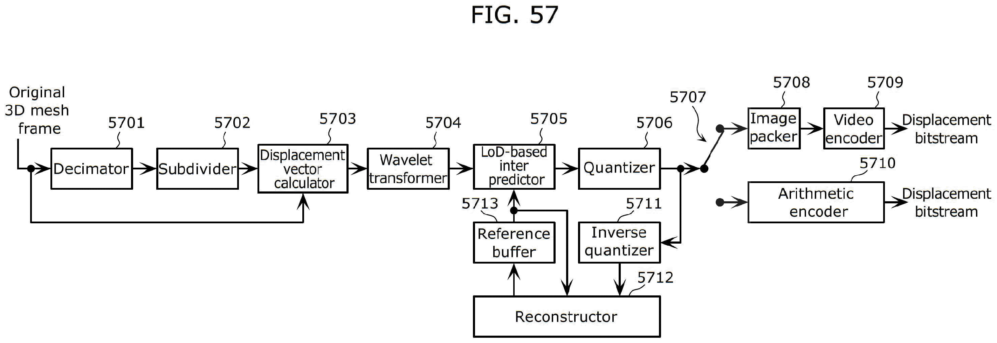

   FIG. 57 is a block diagram illustrating a configuration example of the encoding device according to the embodiment.
[FIG. 58]

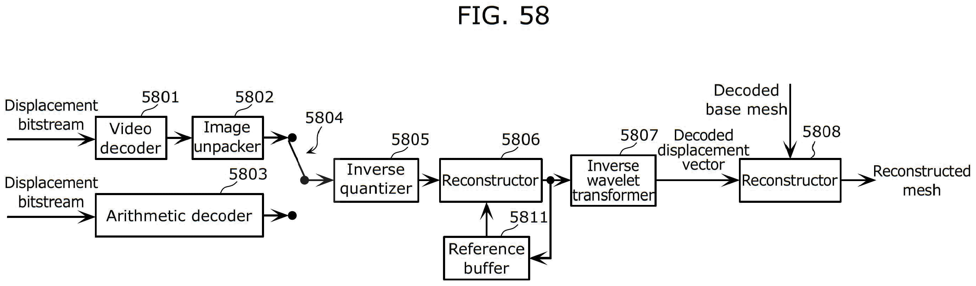

   FIG. 58 is a block diagram illustrating a configuration example of the decoding device according to the embodiment.
[FIG. 59]

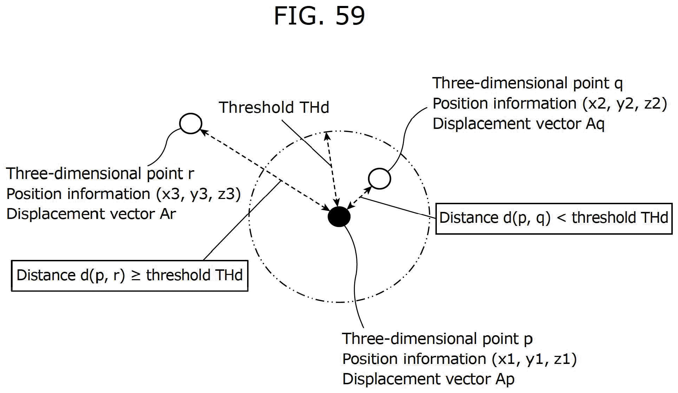

   FIG. 59 is an explanatory diagram illustrating the positional relationship of three-dimensional points according to the embodiment.
[FIG. 60]

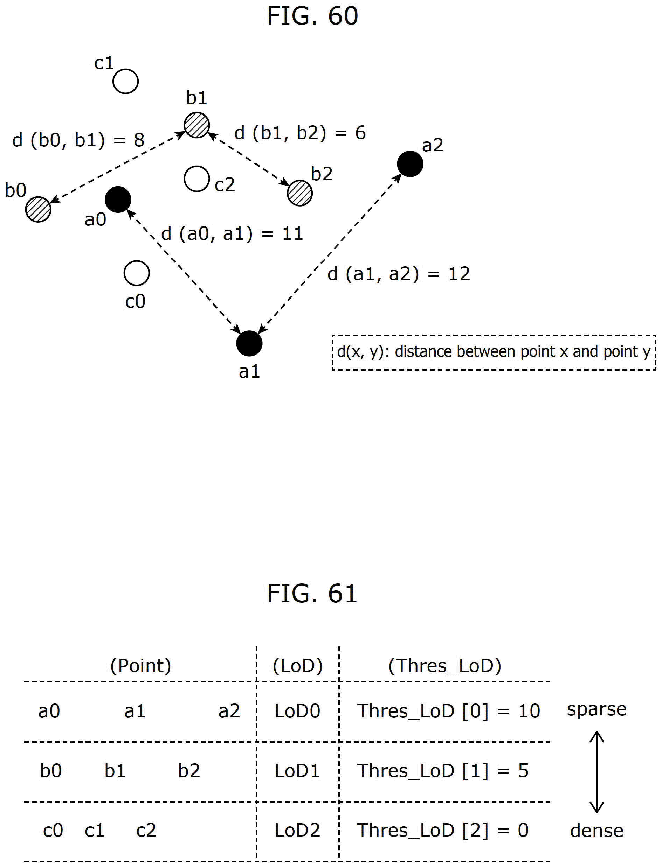

   FIG. 60 is an explanatory diagram illustrating a method of generating LoD according to the embodiment.
[FIG. 61]
   FIG. 61 is an explanatory diagram illustrating a method of generating LoD according to the embodiment.
[FIG. 62]

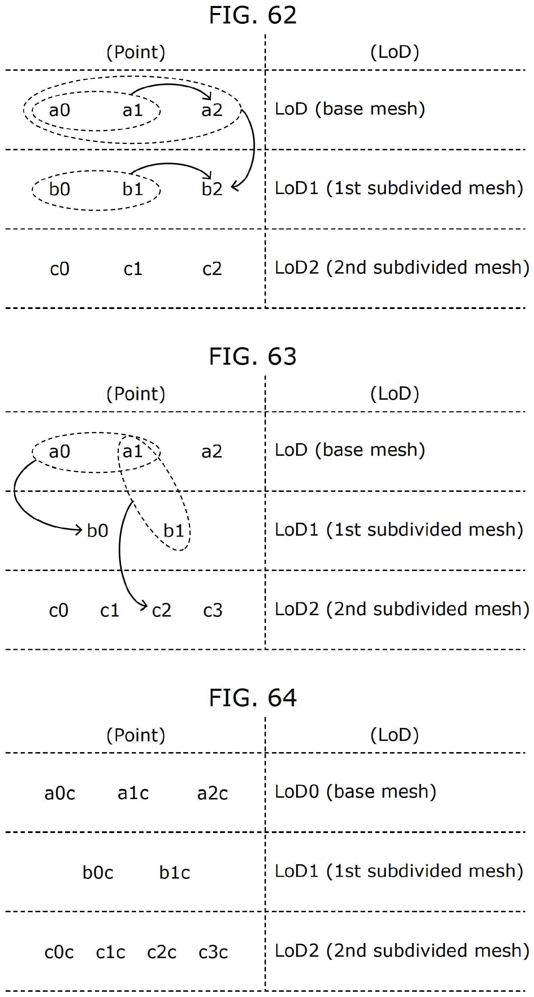

   FIG. 62 is an explanatory diagram illustrating a method for generating a prediction value of a displacement vector according to the embodiment.
[FIG. 63]
   FIG. 63 is an explanatory diagram illustrating an example of calculation of a prediction value according to the embodiment.
[FIG. 64]
   FIG. 64 is an explanatory diagram illustrating an example of calculation of transform coefficients according to the embodiment.
[FIG. 65]

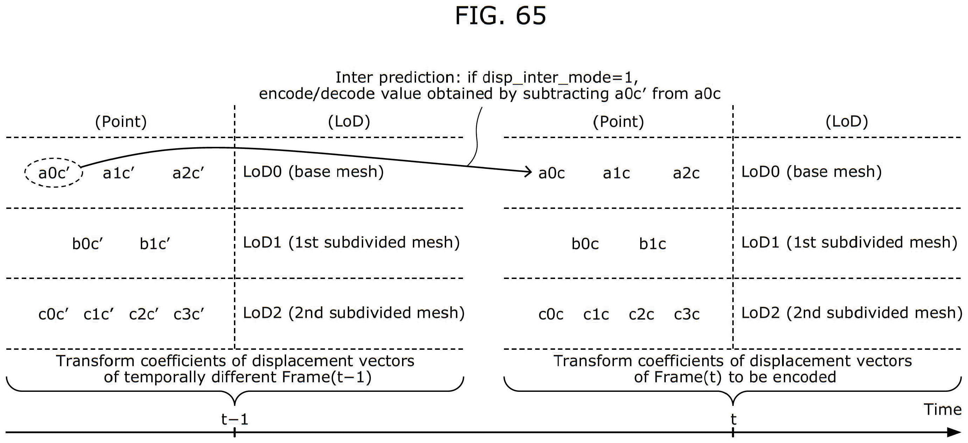

   FIG. 65 is an explanatory diagram illustrating an example of inter prediction of transform coefficients according to the embodiment.
[FIG. 66]

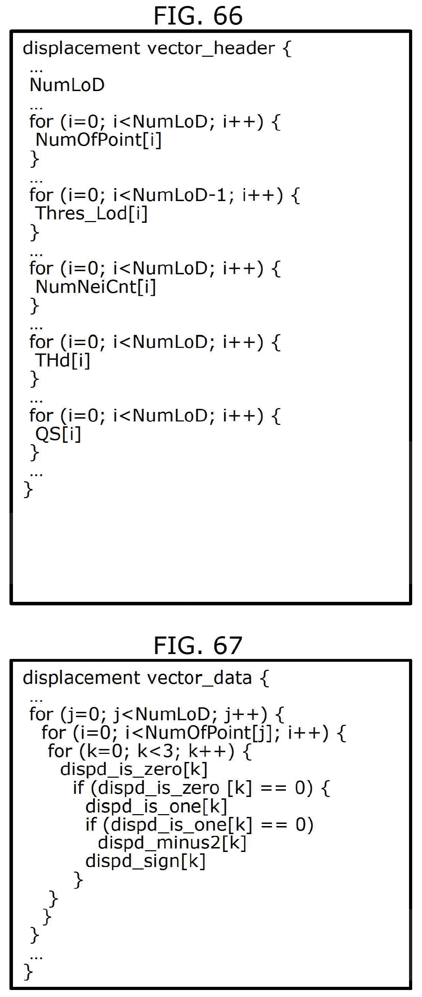

   FIG. 66 is an explanatory diagram illustrating an example of syntax according to the embodiment.
[FIG. 67]
   FIG. 67 is an explanatory diagram illustrating an example of syntax according to the embodiment.
[FIG. 68]

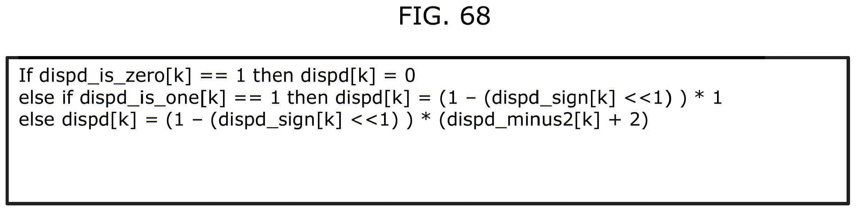

   FIG. 68 is an explanatory diagram illustrating an example of calculation of a prediction residual according to the embodiment.
[FIG. 69]

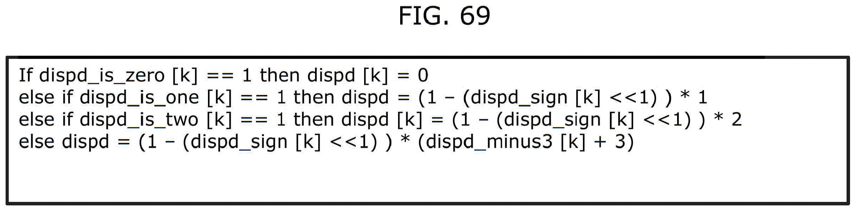

   FIG. 69 is an explanatory diagram illustrating an example of calculation of a prediction residual according to the embodiment.
[FIG. 70]

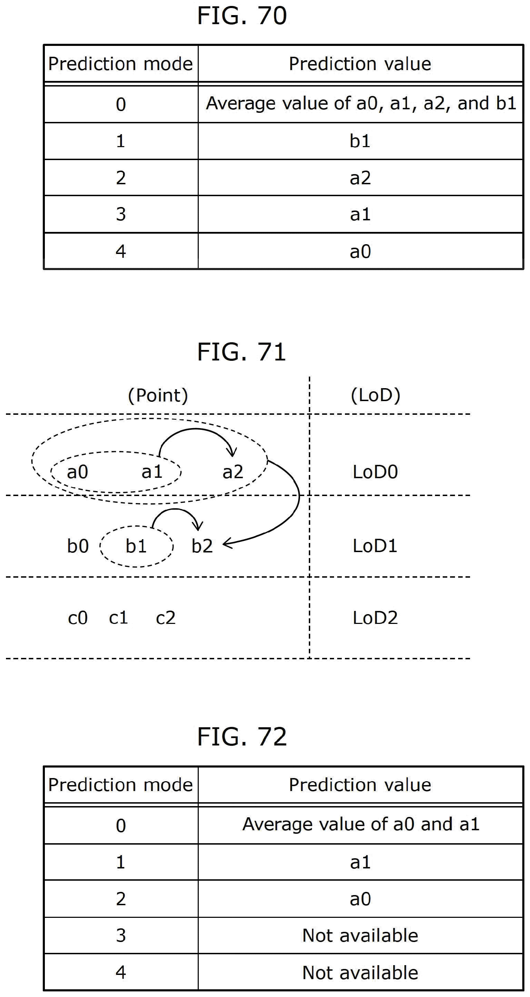

   FIG. 70 is an explanatory diagram illustrating an example of prediction value information of displacement vectors according to the embodiment.
[FIG. 71]
   FIG. 71 is an explanatory diagram illustrating a method for generating a prediction value of a displacement vector according to the embodiment.
[FIG. 72]
   FIG. 72 is an explanatory diagram illustrating an example of prediction value information of displacement vectors according to the embodiment.
[FIG. 73]

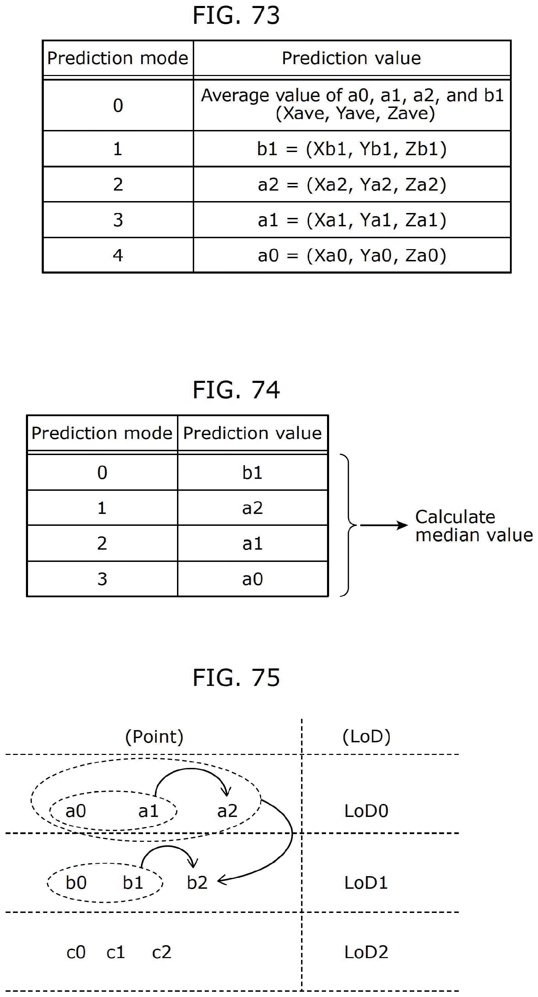

   FIG. 73 is an explanatory diagram illustrating an example of prediction value information of displacement vectors according to the embodiment.
[FIG. 74]
   FIG. 74 is an explanatory diagram illustrating an example of prediction value information of displacement vectors according to the embodiment.
[FIG. 75]
   FIG. 75 is an explanatory diagram illustrating a method for generating a prediction value of a displacement vector according to the embodiment.
[FIG. 76]

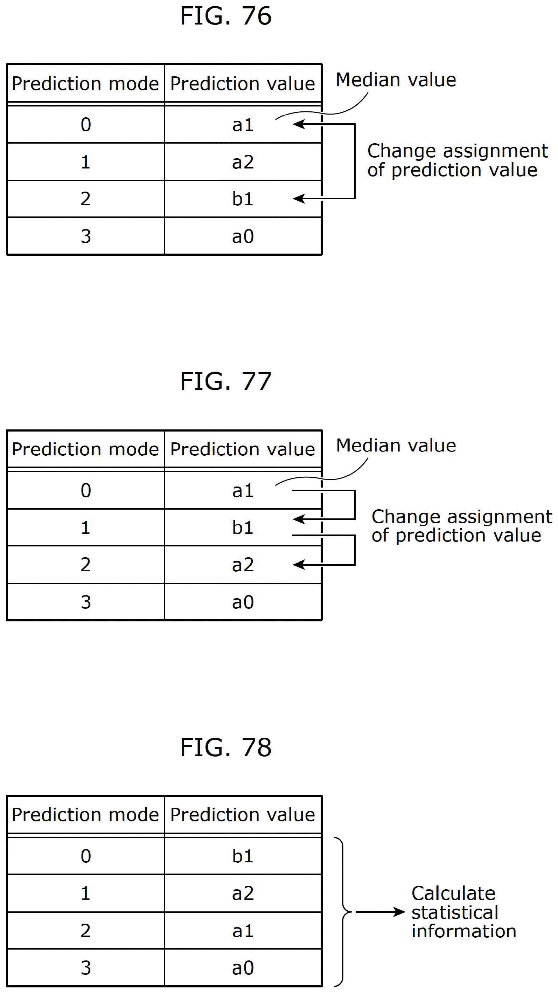

   FIG. 76 is an explanatory diagram illustrating an example of prediction value information of displacement vectors according to the embodiment.
[FIG. 77]
   FIG. 77 is an explanatory diagram illustrating an example of prediction value information of motion vectors according to the embodiment.
[FIG. 78]
   FIG. 78 is an explanatory diagram illustrating an example of prediction value information of motion vectors according to the embodiment.
[FIG. 79]

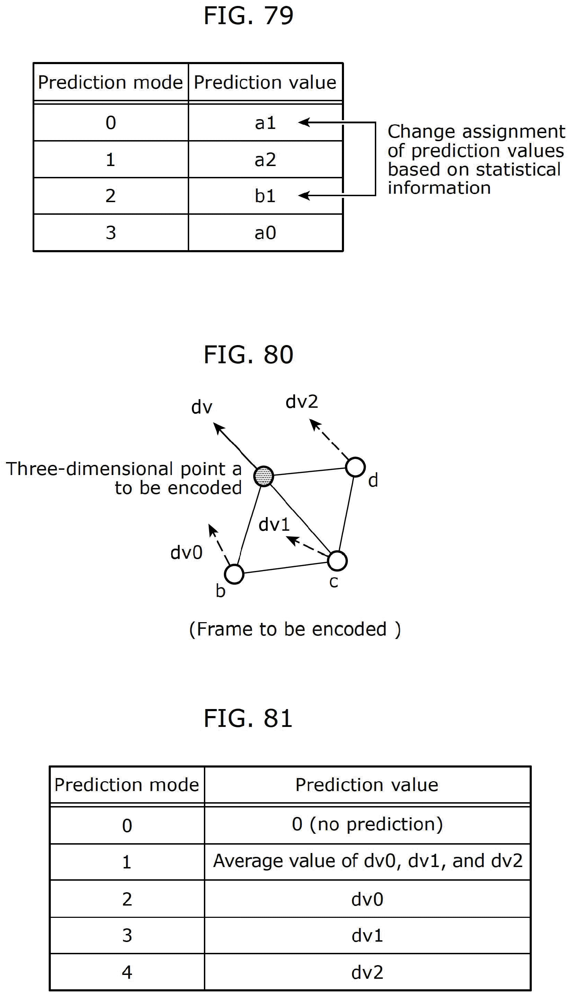

   FIG. 79 is an explanatory diagram illustrating an example of prediction value information of motion vectors according to the embodiment.
[FIG. 80]
   FIG. 80 is an explanatory diagram illustrating an example of points to be encoded according to the embodiment.
[FIG. 81]
   FIG. 81 is an explanatory diagram illustrating an example of prediction value information of displacement vectors according to the embodiment.
[FIG. 82]

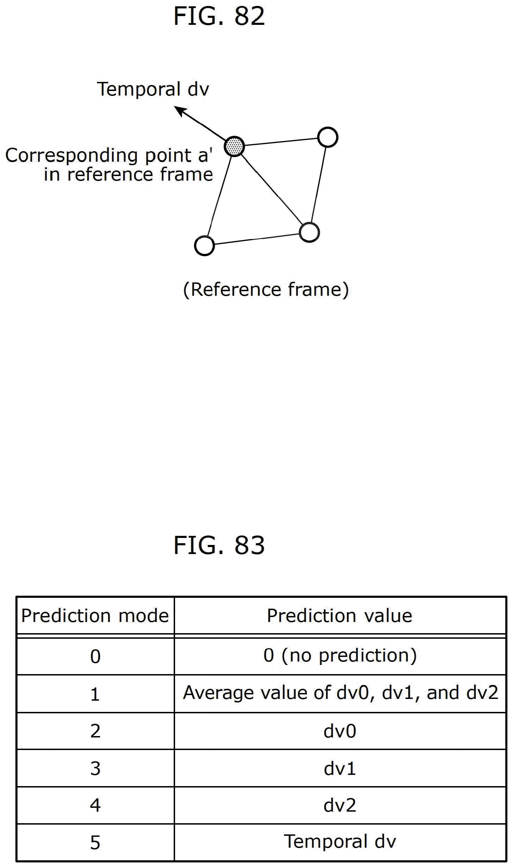

   FIG. 82 is an explanatory diagram illustrating an example of temporal dv according to the embodiment.
[FIG. 83]
   FIG. 83 is an explanatory diagram illustrating an example of prediction value information of displacement vectors according to the embodiment.
[FIG. 84]

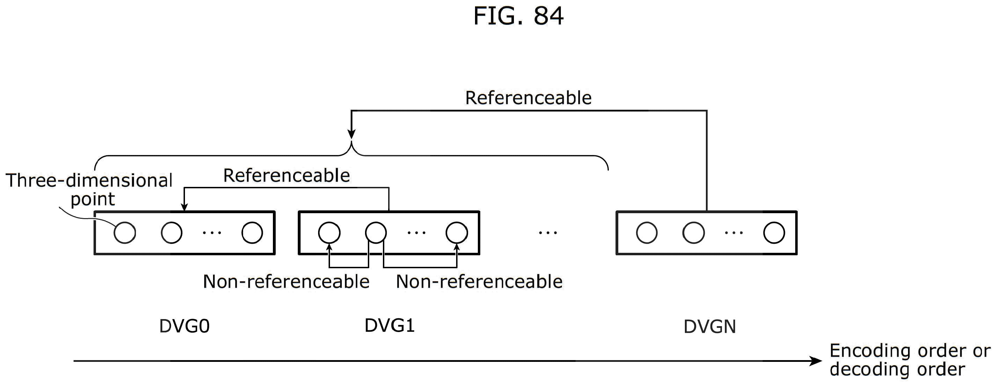

   FIG. 84 is an explanatory diagram illustrating an example of reference destinations of DVG according to the embodiment.
[FIG. 85]

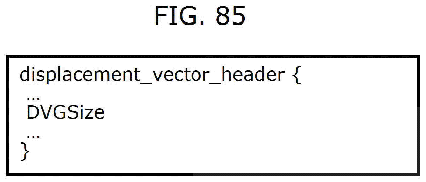

   FIG. 85 is an explanatory diagram illustrating an example of syntax according to the embodiment.
[FIG. 86]

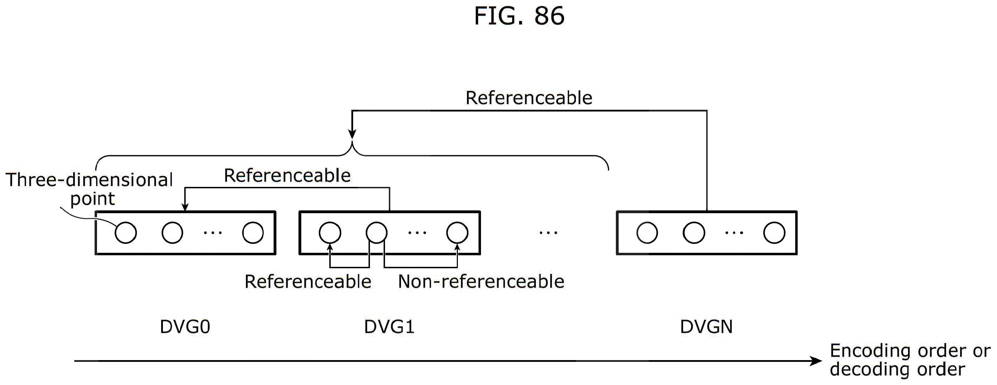

   FIG. 86 is an explanatory diagram illustrating an example of reference destinations of DVG according to the embodiment.
[FIG. 87]

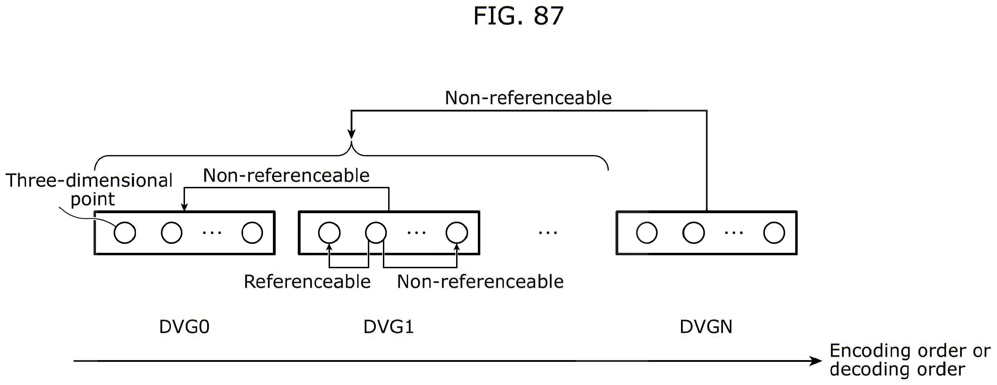

   FIG. 87 is an explanatory diagram illustrating an example of reference destinations of DVG according to the embodiment.
[FIG. 88]

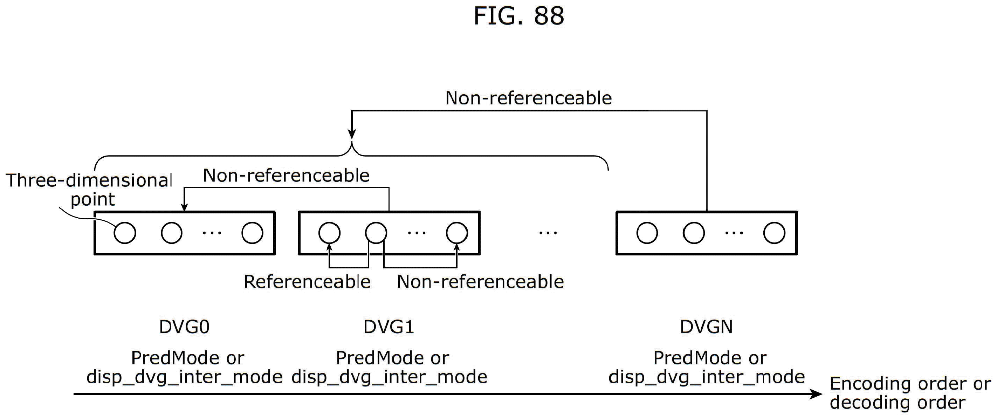

   FIG. 88 is an explanatory diagram illustrating an example of reference destinations of DVG according to the embodiment.
[FIG. 89]

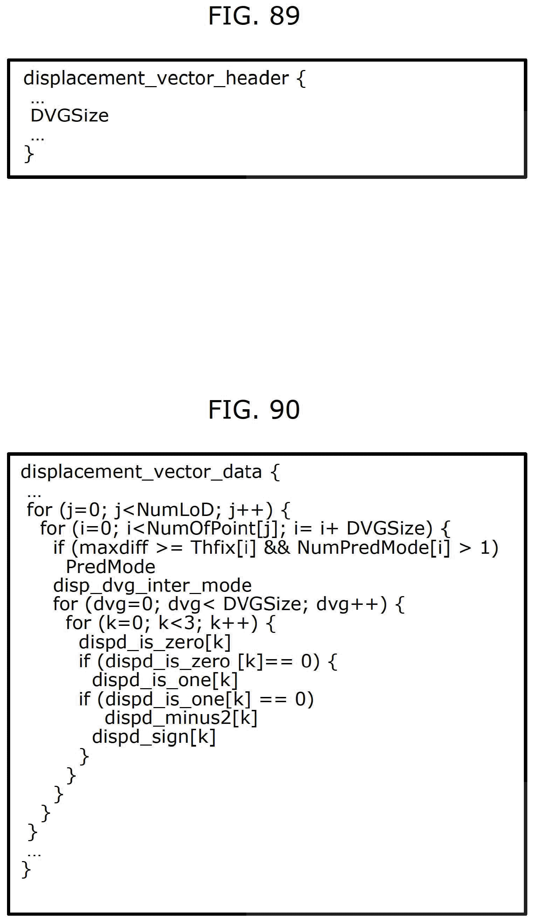

   FIG. 89 is an explanatory diagram illustrating an example of syntax according to the embodiment.
[FIG. 90]
   FIG. 90 is an explanatory diagram illustrating an example of syntax according to the embodiment.
[FIG. 91]

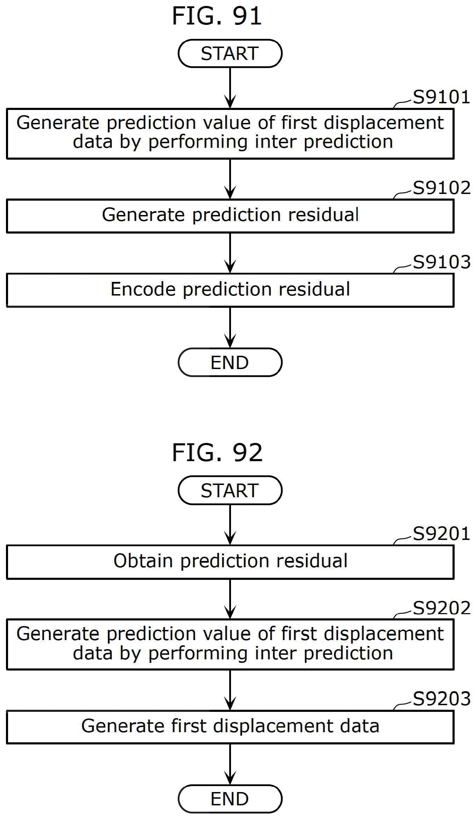

   FIG. 91 is a flowchart illustrating an example of encoding processing according to the embodiment.
[FIG. 92]
   FIG. 92 is a flowchart illustrating an example of decoding processing according to the embodiment.
[FIG. 93]

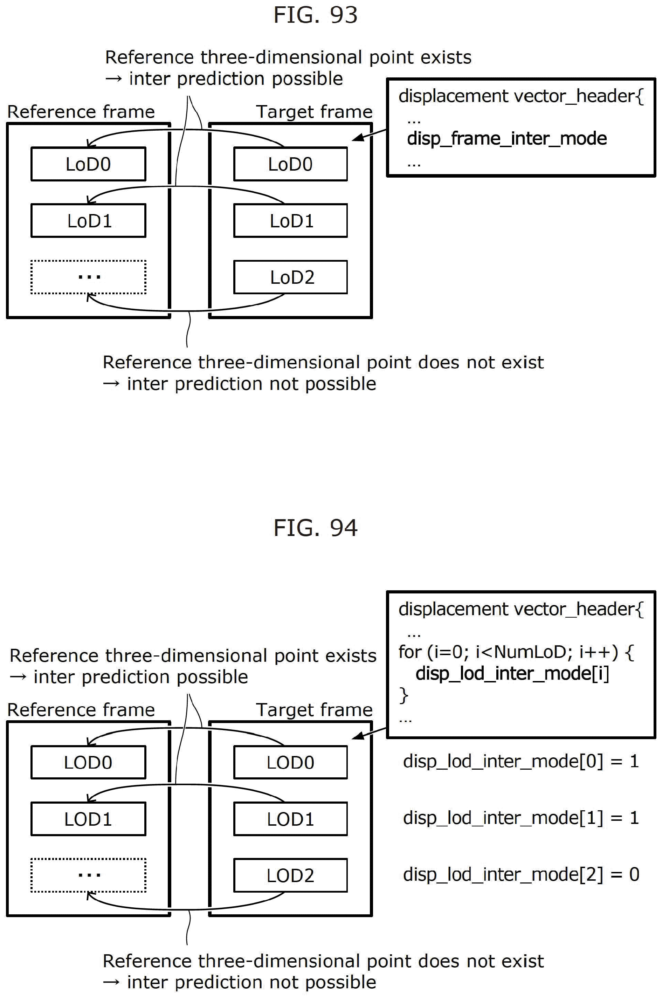

   FIG. 93 is an explanatory diagram illustrating an example of a structure of a frame according to the embodiment.
[FIG. 94]
   FIG. 94 is an explanatory diagram illustrating an example of a structure of a frame according to the embodiment.
[FIG. 95]

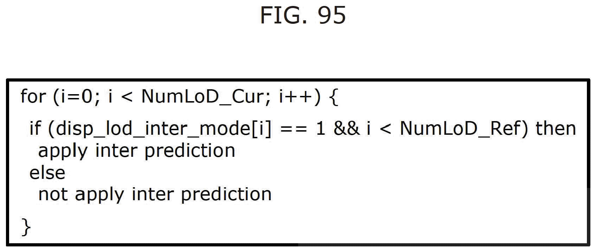

   FIG. 95 is an explanatory diagram illustrating an example of processing for determining whether to apply inter prediction according to the embodiment.
[FIG. 96]

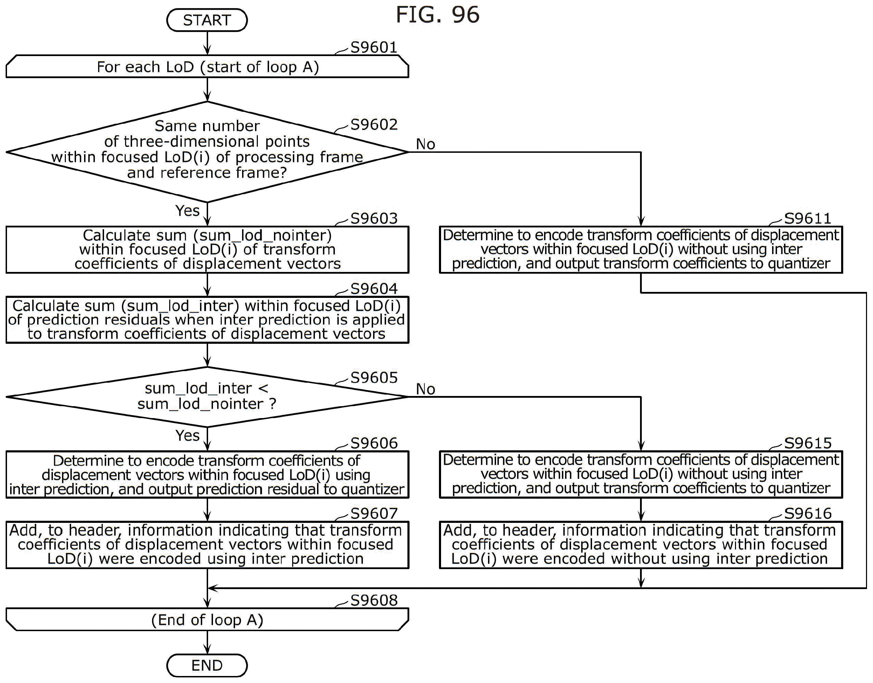

   FIG. 96 is a flowchart illustrating a specific example of encoding processing according to the embodiment.
[FIG. 97]

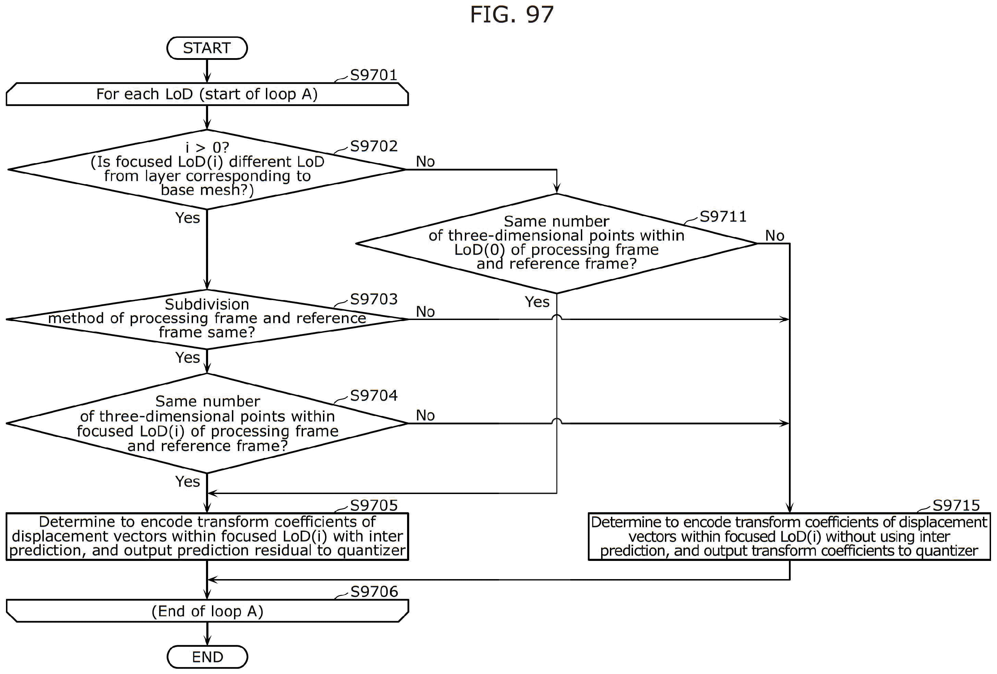

   FIG. 97 is a flowchart illustrating a specific example of encoding processing according to the embodiment.
[FIG. 98]

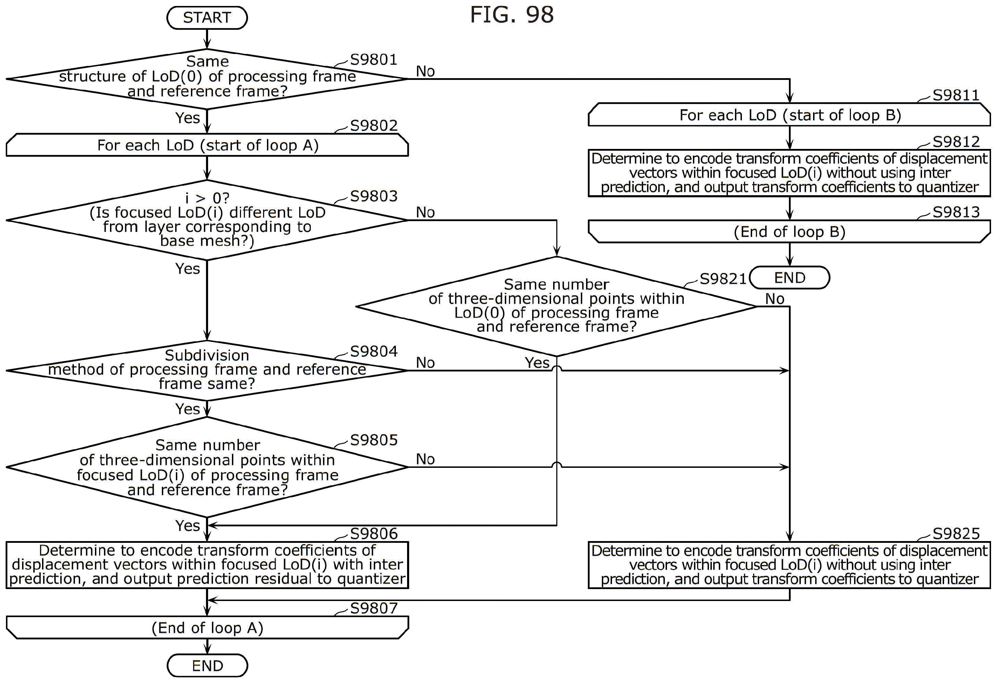

   FIG. 98 is a flowchart illustrating a specific example of encoding processing according to the embodiment.
[FIG. 99]

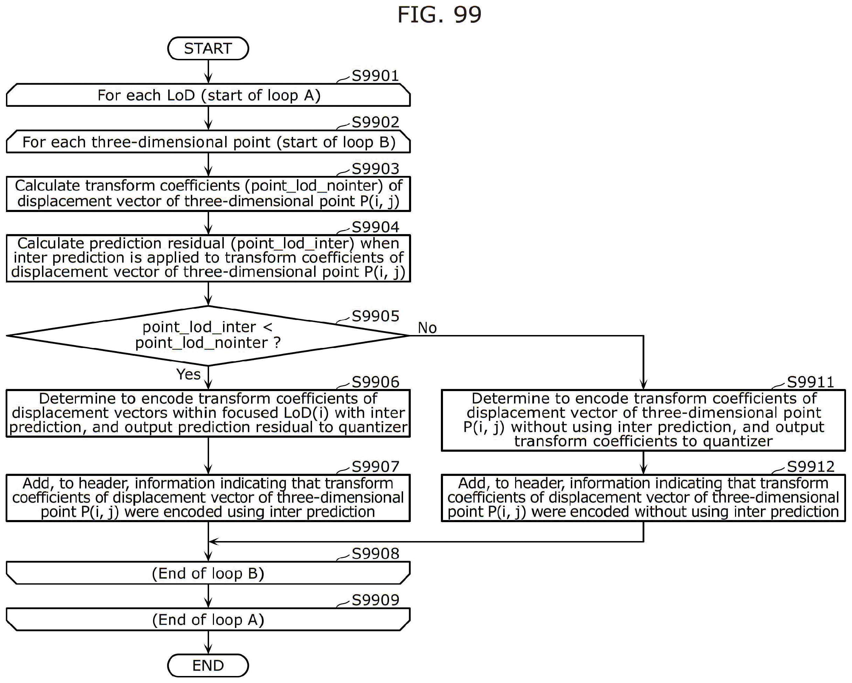

   FIG. 99 is a flowchart illustrating a specific example of encoding processing according to the embodiment.
[FIG. 100]

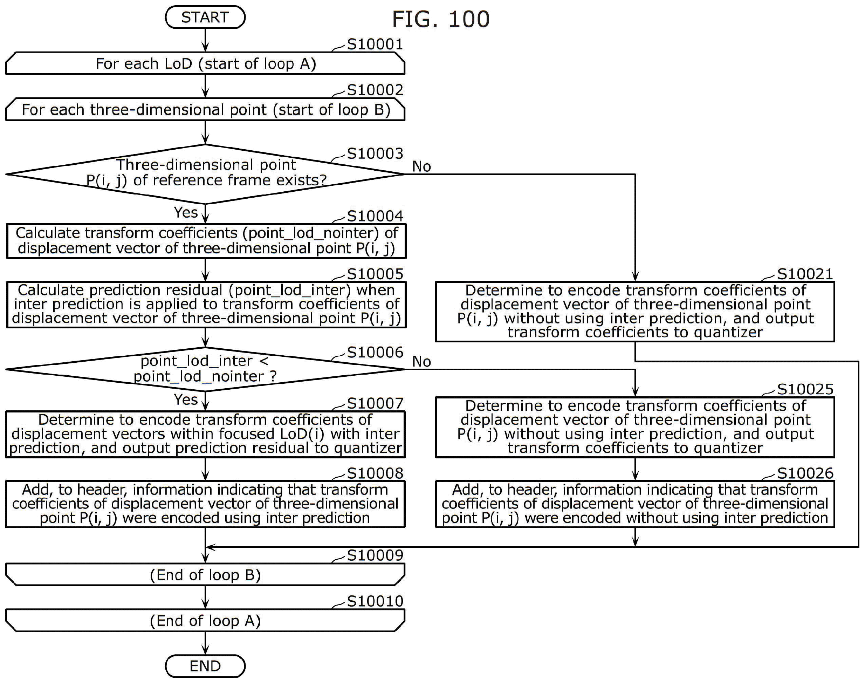

   FIG. 100 is a flowchart illustrating a specific example of encoding processing according to the embodiment.
[FIG. 101]

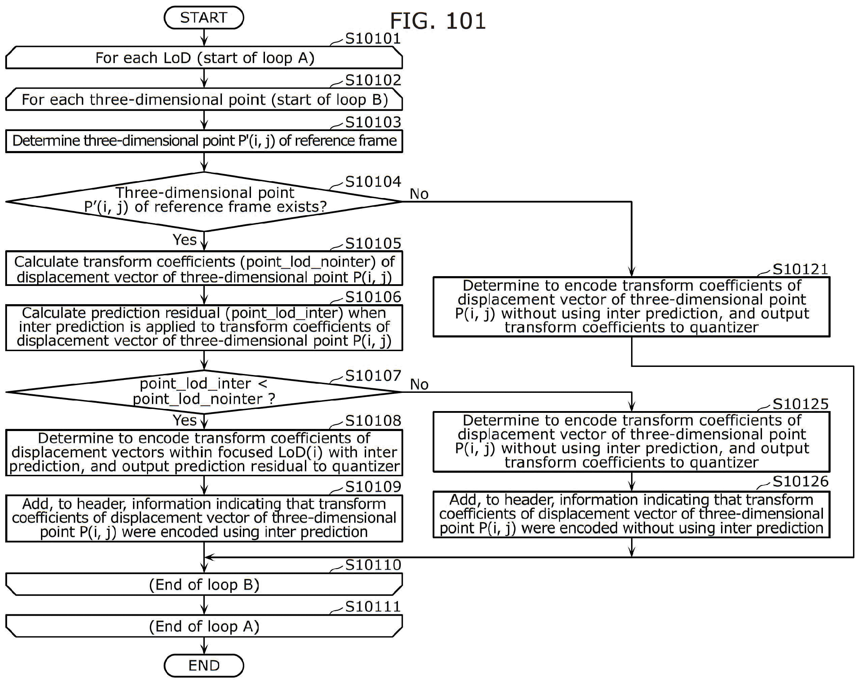

   FIG. 101 is a flowchart illustrating a specific example of encoding processing according to the embodiment.
[FIG. 102]

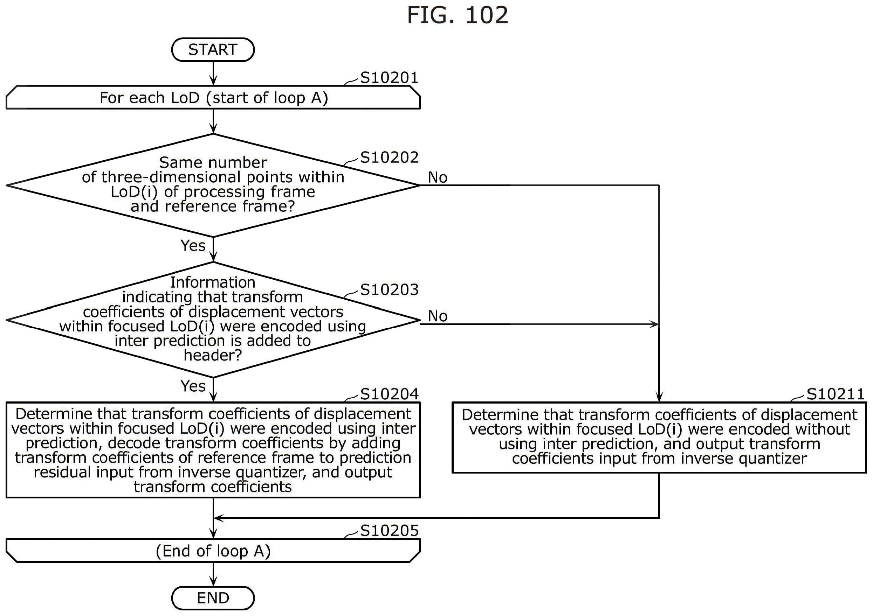

   FIG. 102 is a flowchart illustrating a specific example of decoding processing according to the embodiment.
[FIG. 103]

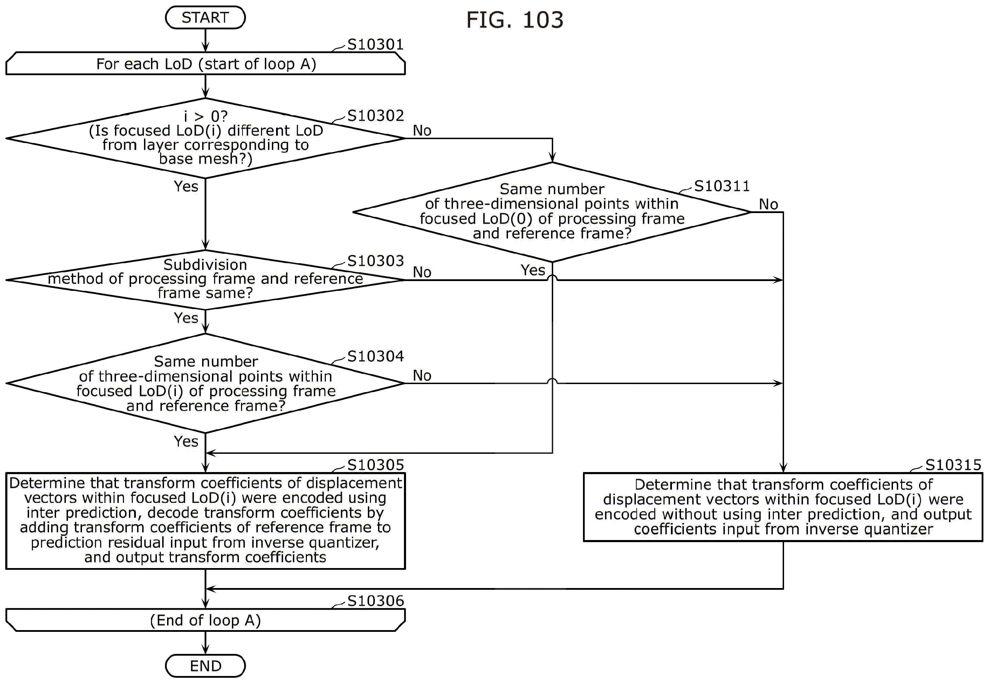

   FIG. 103 is a flowchart illustrating a specific example of decoding processing according to the embodiment.
[FIG. 104]

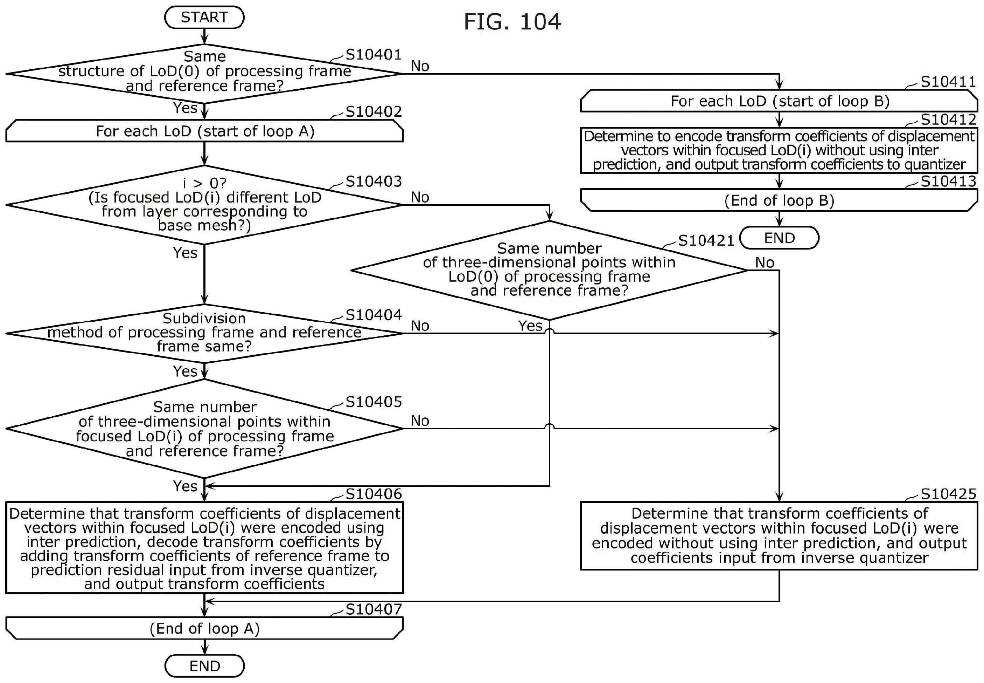

   FIG. 104 is a flowchart illustrating a specific example of decoding processing according to the embodiment.
[FIG. 105]

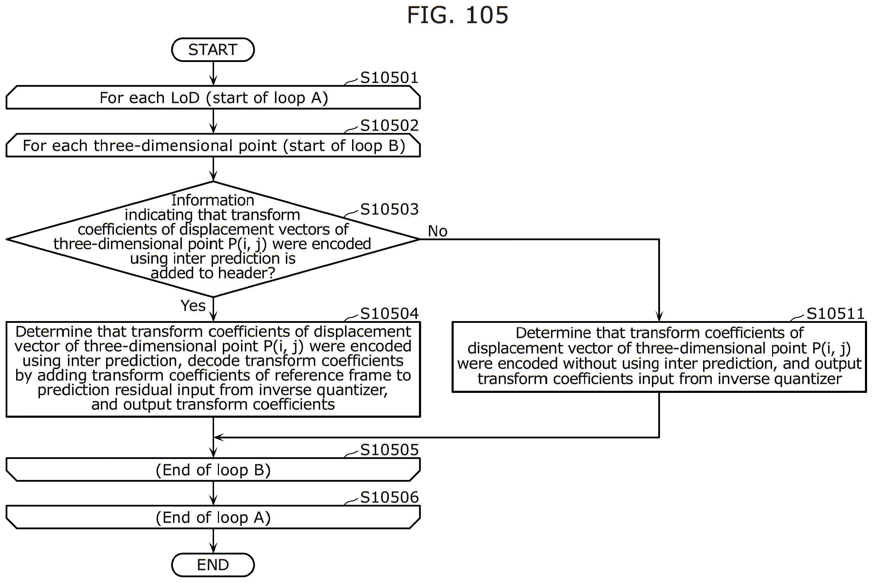

   FIG. 105 is a flowchart illustrating a specific example of decoding processing according to the embodiment.
[FIG. 106]

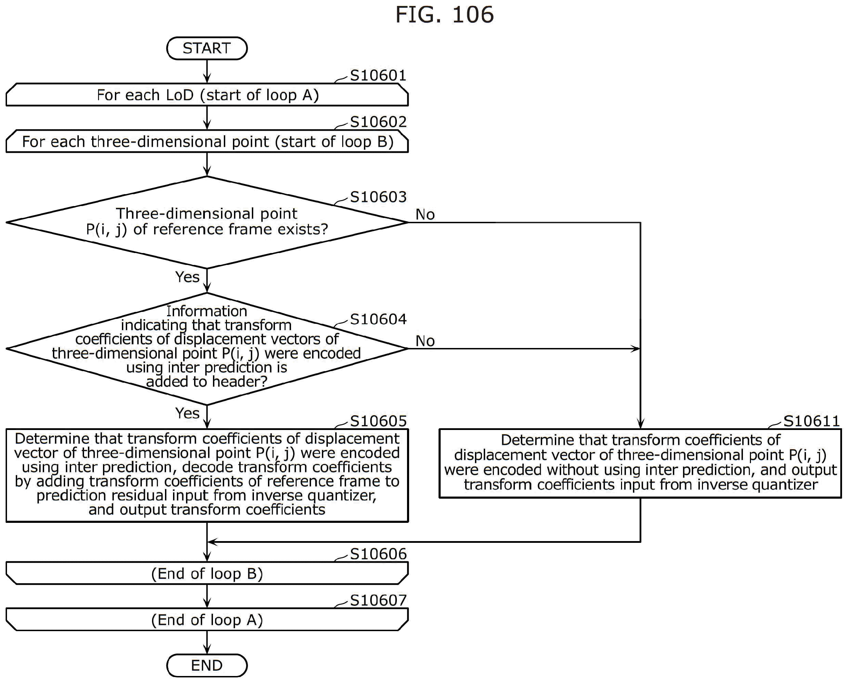

   FIG. 106 is a flowchart illustrating a specific example of decoding processing according to the embodiment.
[FIG. 107]

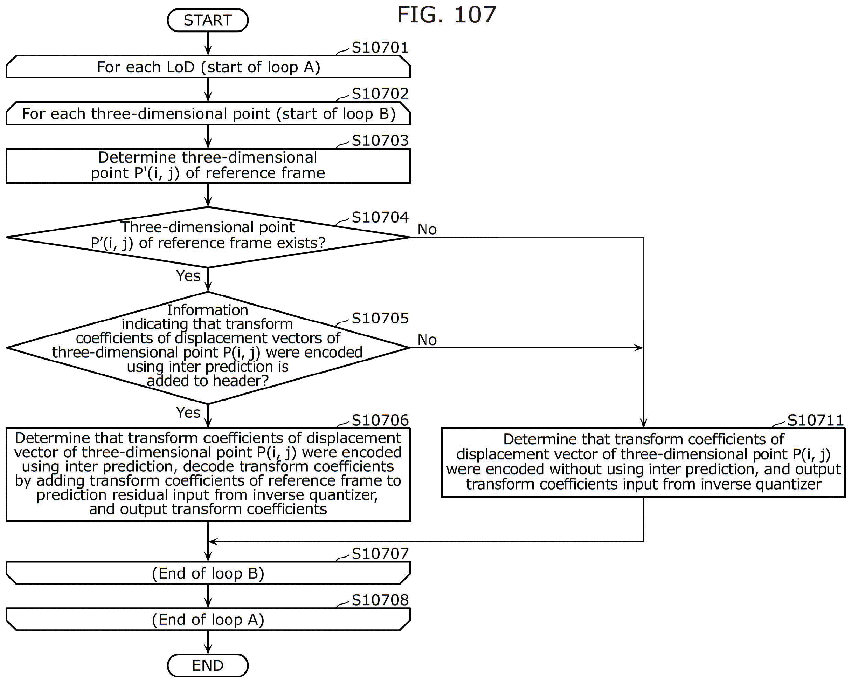

   FIG. 107 is a flowchart illustrating a specific example of decoding processing according to the embodiment.
[FIG. 108]

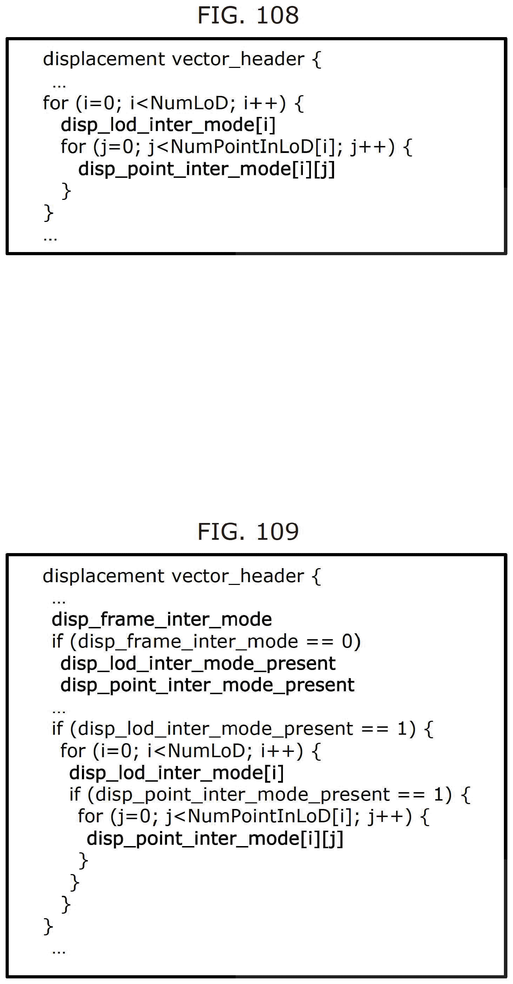

   FIG. 108 is an explanatory diagram illustrating an example of syntax according to the embodiment.
[FIG. 109]
   FIG. 109 is an explanatory diagram illustrating an example of syntax according to the embodiment.
[FIG. 110]

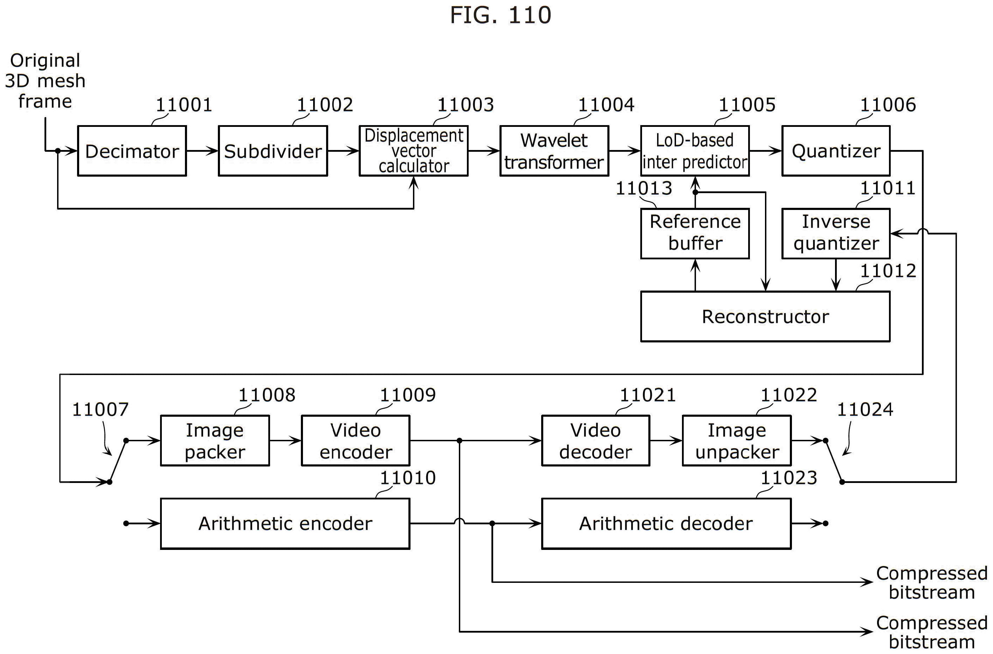

   FIG. 110 is a block diagram illustrating a configuration example of the encoding device according to the embodiment.
[FIG. 111]

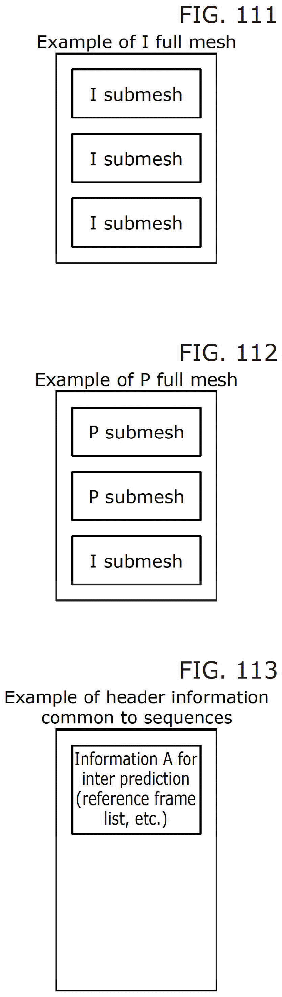

   FIG. 111 is an explanatory diagram illustrating an example of an I full mesh according to the embodiment.
[FIG. 112]
   FIG. 112 is an explanatory diagram illustrating an example of a P full mesh according to the embodiment.
[FIG. 113]
   FIG. 113 is an explanatory diagram illustrating an example of header information common to sequences according to the embodiment.
[FIG. 114]

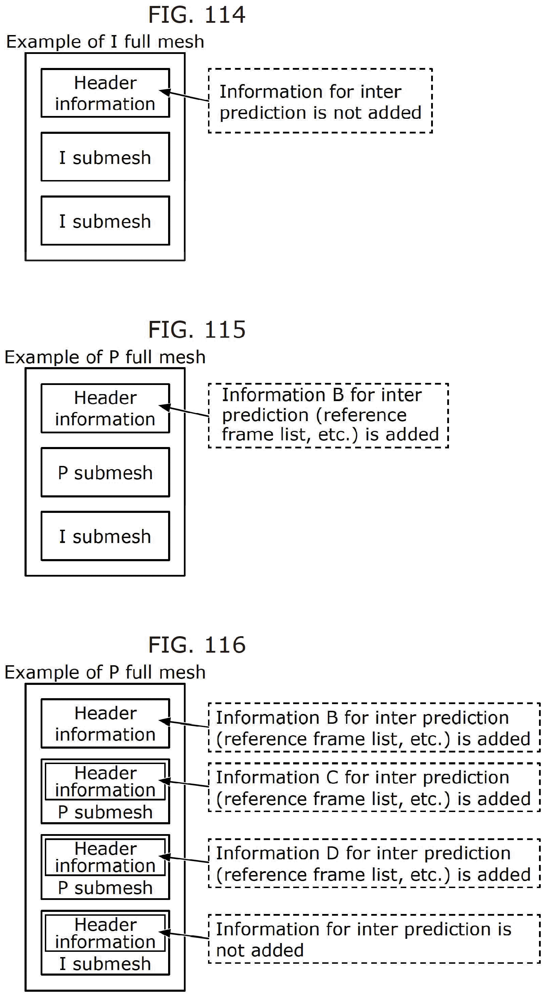

   FIG. 114 is an explanatory diagram illustrating an example of an I full mesh according to the embodiment.
[FIG. 115]
   FIG. 115 is an explanatory diagram illustrating an example of a P full mesh according to the embodiment.
[FIG. 116]
   FIG. 116 is an explanatory diagram illustrating an example of a P full mesh according to the embodiment.
[FIG. 117]

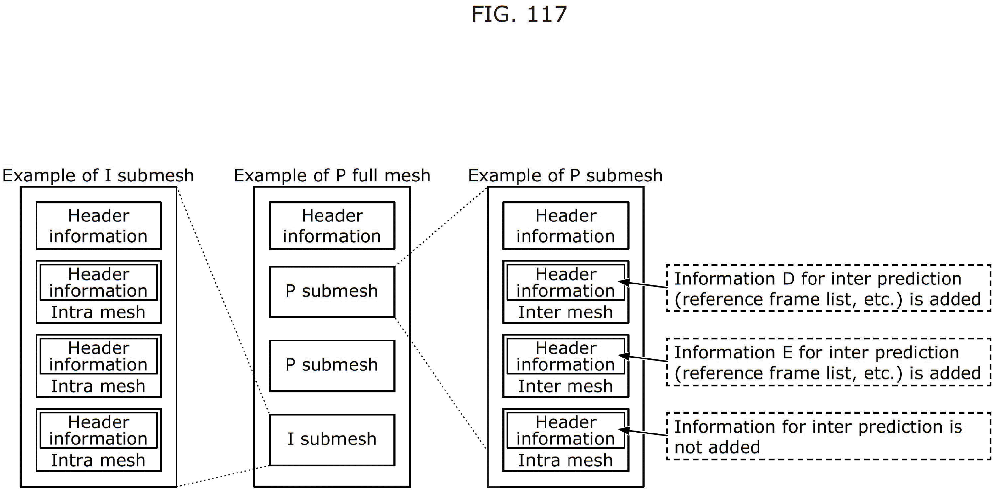

   FIG. 117 is an explanatory diagram illustrating an example of a P full mesh according to the embodiment.
[FIG. 118]

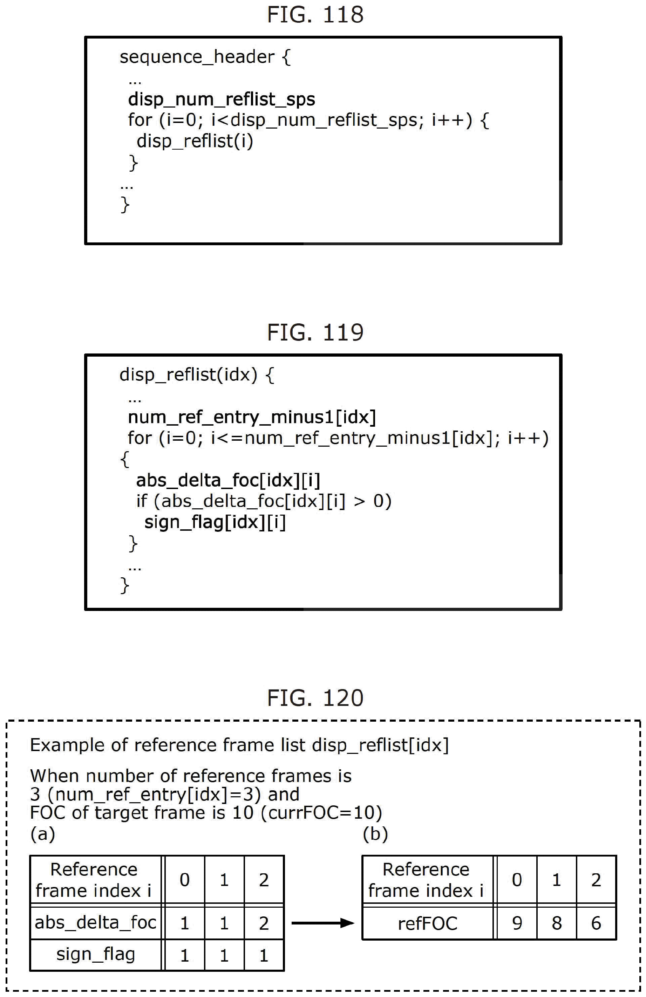

   FIG. 118 is an explanatory diagram illustrating an example of header information common to sequences according to the embodiment.
[FIG. 119]
   FIG. 119 is an explanatory diagram illustrating an example of syntax of a reference frame list according to the embodiment.
[FIG. 120]
   FIG. 120 is an explanatory diagram illustrating an example of a reference frame list according to the embodiment.
[FIG. 121]

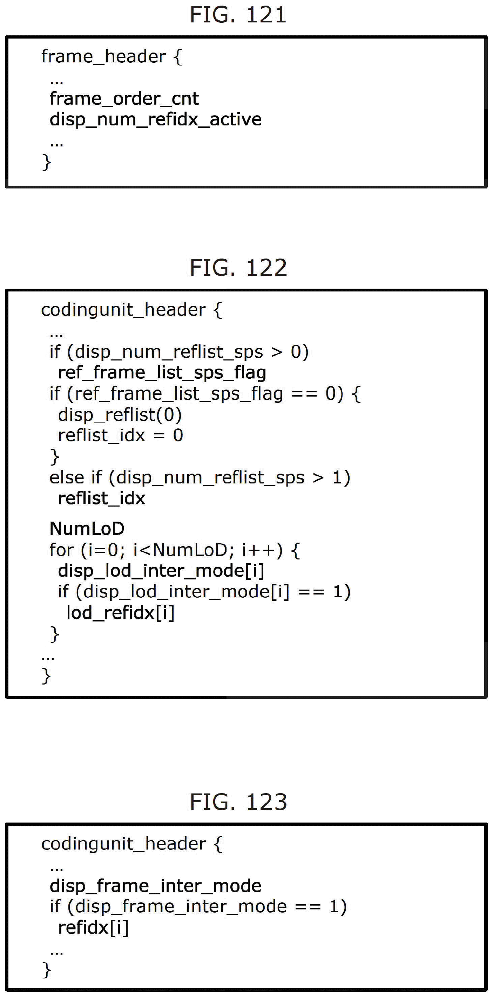

   FIG. 121 is an explanatory diagram illustrating an example of header information corresponding to a full mesh frame according to the embodiment.
[FIG. 122]
   FIG. 122 is an explanatory diagram illustrating an example of header information corresponding to a submesh or coding unit according to the embodiment.
[FIG. 123]
   FIG. 123 is an explanatory diagram illustrating an example of header information corresponding to a submesh or coding unit according to the embodiment.
[FIG. 124]

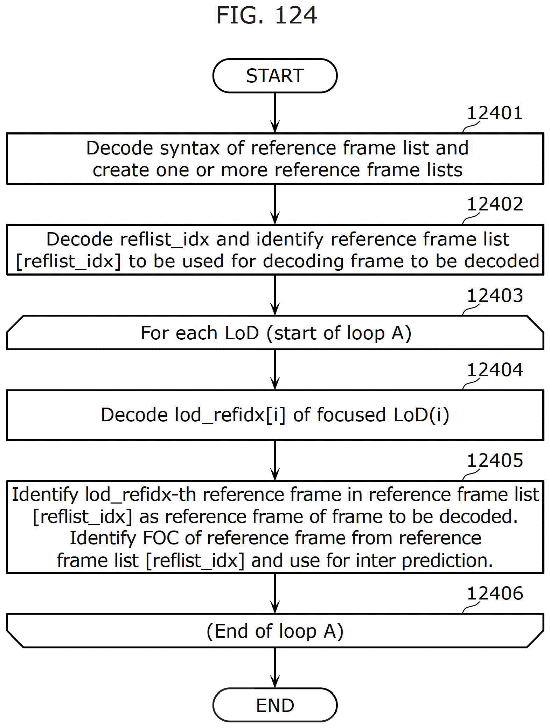

   FIG. 124 is a flowchart illustrating a specific example of processing for specifying FOC of a reference frame according to the embodiment.
[FIG. 125]

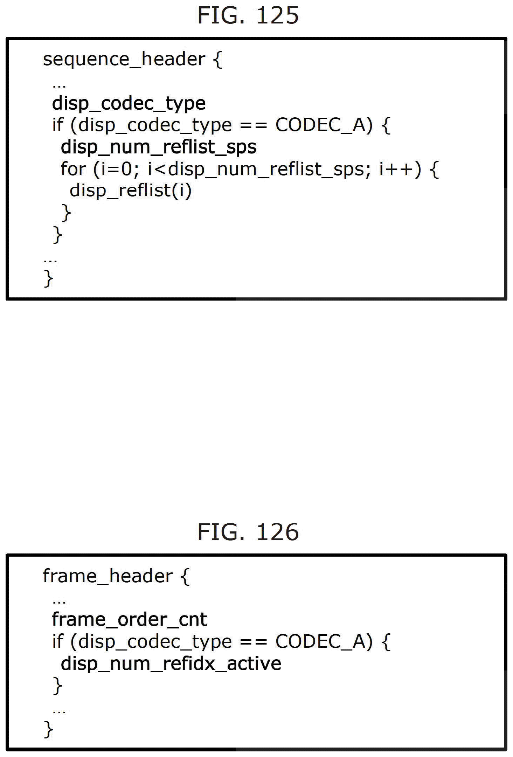

   FIG. 125 is an explanatory diagram illustrating an example of header information common to sequences according to the embodiment.
[FIG. 126]
   FIG. 126 is an explanatory diagram illustrating an example of header information corresponding to a full mesh frame according to the embodiment.
[FIG. 127]

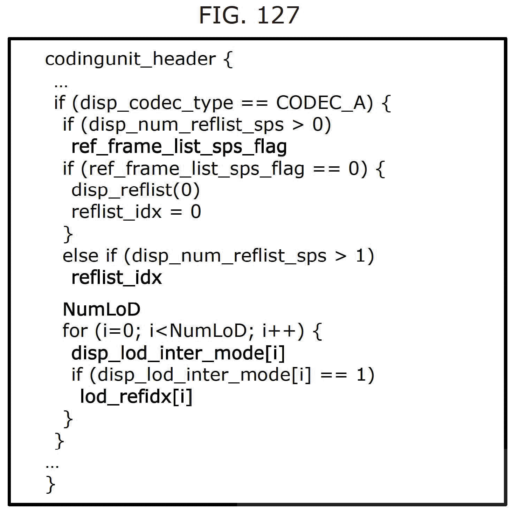

   FIG. 127 is an explanatory diagram illustrating an example of header information corresponding to a submesh or coding unit according to the embodiment.
[FIG. 128]

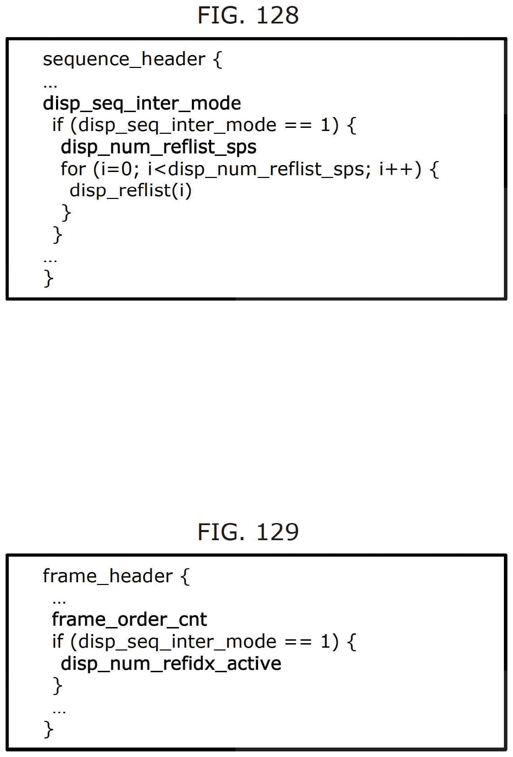

   FIG. 128 is an explanatory diagram illustrating an example of header information common to sequences according to the embodiment.
[FIG. 129]
   FIG. 129 is an explanatory diagram illustrating an example of header information corresponding to a full mesh frame according to the embodiment.
[FIG. 130]

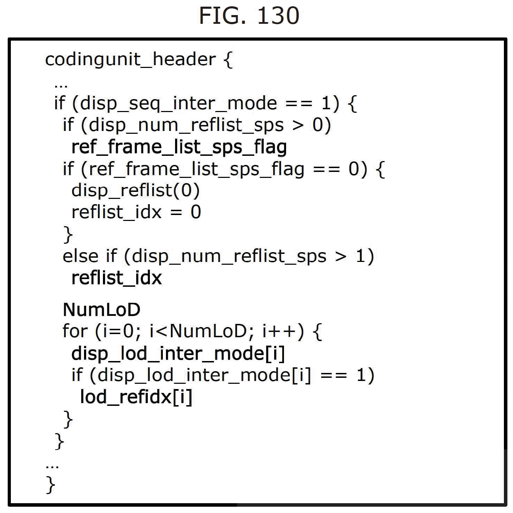

   FIG. 130 is an explanatory diagram illustrating an example of header information corresponding to a submesh or coding unit according to the embodiment.
[FIG. 131]

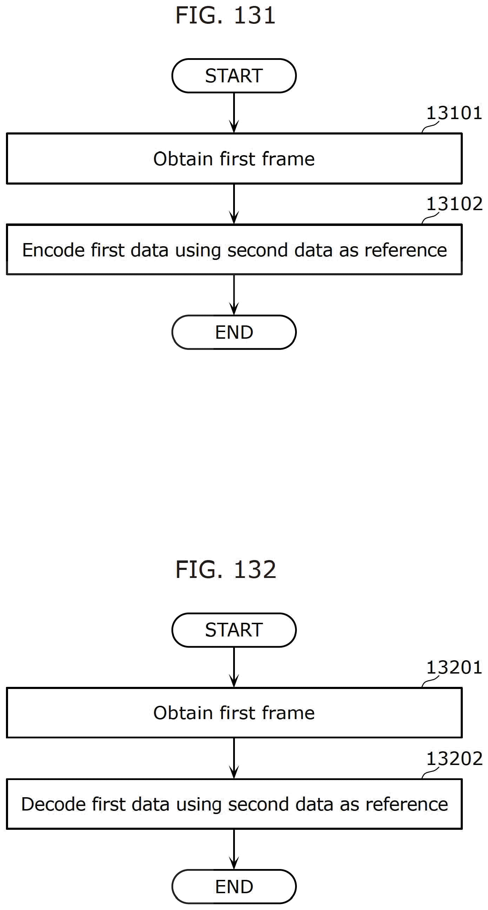

   FIG. 131 is a flowchart illustrating an example of encoding processing according to the embodiment.
[FIG. 132]
   FIG. 132 is a flowchart illustrating an example of decoding processing according to the embodiment.

### [Description of Embodiments]

### <Overview of Present Disclosure>

A three-dimensional (3D) mesh is used for a computer graphics video, for example. For example, the computer graphics video is formed by a plurality of frames that temporally differs from each other, and each frame may be represented by a three-dimensional mesh.

In addition, the three-dimensional mesh is formed by vertex information that indicates a position of each of a plurality of vertices in a three-dimensional space, connection information that indicates a connection relationship between the plurality of vertices, and attribute information that indicates an attribute of each vertex or each face. Each face is constructed according to a connection relationship between a plurality of vertices. Such a three-dimensional mesh can represent various computer graphics videos.

Furthermore, for transmission and storage of a three-dimensional mesh, efficient encoding and decoding of a three-dimensional mesh is expected. For efficient encoding and decoding of a three-dimensional mesh, arithmetic encoding and arithmetic decoding may be used.

There is a demand for further improvement in an encoding or decoding process related to three-dimensional data. An object of the present disclosure is to improve the encoding or decoding process related to three-dimensional data.

Hereinafter, aspects of the present invention derived from the content of the disclosure of the present disclosure will be described by way of example, and the effects and the like derived from the aspect of the invention will be described.

(1) An encoding method including: obtaining a first frame to be encoded; and encoding first data using second data as a reference, the first data included in the first frame and including one or more layers, the second data included in a second frame and including one or more layers, wherein the encoding of the first data includes: for each layer among the one or more layers included in the first data, determining one process among a plurality of processes, using a value indicating the layer and a value related to the one or more layers included in the second data, and executing the one process determined on the first data of the layer.

According to the above aspect, the encoding method can execute different processes for each layer among the one or more layers included in the first frame that is to be encoded, according to a value related to the one or more layers included in the second data. In this way, the encoding processing may be able to be improved. As seen from the above, the encoding method can contribute toward improving encoding processing.

(2) The encoding method according to (1), wherein the encoding of the first data includes: executing different processes on the first data depending on whether a total number of the one or more layers included in the first data is identical to a total number of the one or more layers included in the second data.

According to the above aspect, the encoding method can execute different processes on the first data depending on whether the total number of the one or more layers included in the first frame that is to be encoded is identical to the total number of the one or more layers included in the second frame that is referenced during encoding. With this, processing that can be executed on the first data when the total number of the one or more layers included in the first frame is identical to the total number of the one or more layers included in the second frame, and that cannot be executed on the first data when the total number of the one or more layers included in the first frame is not identical to the total number of the one or more layers included in the second frame, can be appropriately used in the encoding processing. In this way, the encoding processing may be able to be improved. As seen from the above, the encoding method can contribute toward improving encoding processing.

(3) The encoding method according to (2), wherein the encoding of the first data includes: for each layer among the one or more layers included in the first data, determining whether the second data includes a same layer as the layer, and executing different processes on the layer depending on whether it is determined that the second data includes the same layer as the layer or it is determined that the second data does not include the same layer as the layer.

According to the above aspect, the encoding method can more easily determine whether the total number of the one or more layers included in the first frame is identical to the total number of the one or more layers included in the second frame, and can use the determination result to execute different processes on the first data depending on whether the total numbers are identical. As seen from the above, the encoding method can more easily contribute toward improving encoding processing.

(4) The encoding method according to (2), wherein the first data includes first displacement data included in the first frame and including one or more layers, the encoding of the first data includes: determining whether a total number of the one or more layers included in the first data is identical to a total number of the one or more layers included in the second data; executing a first process on the first data when it is determined that the total number of the one or more layers included in the first data is identical to the total number of the one or more layers included in the second data; and executing a second process different from the first process on the first data when it is determined that the total number of the one or more layers included in the first data is not identical to the total number of the one or more layers included in the second data, the first process includes encoding the first displacement data by generating a prediction residual using (i) a prediction value of the first displacement data and (ii) the first displacement data, and encoding the prediction residual generated, the prediction value of the first displacement data being generated by performing inter prediction using second displacement data corresponding to a different time than the first displacement data, and the second process includes encoding the first displacement data without performing the inter prediction.

According to the above aspect, the encoding method can determine whether the total number of the one or more layers included in the first frame is identical to the total number of the one or more layers included in the second frame, and can selectively enable or disable inter prediction for the encoding processing of the first displacement data included in the first data according to the determination result. With this, the encoding method may be able to reduce the code amount that is the target of the encoding processing of the first displacement data. As seen from the above, the encoding method can contribute toward improving encoding processing.

(5) The encoding method according to (4), wherein the encoding of the first data includes: for each layer among the one or more layers included in the first data, determining whether a total number of three-dimensional points belonging to the layer is identical to a total number of three-dimensional points belonging to a same layer as the layer among the one or more layers included in the second data; and executing the second process on the layer when it is determined that the total number of three-dimensional points belonging to the layer is not identical to the total number of three-dimensional points belonging to the same layer as the layer among the one or more layers included in the second data.

According to the above aspect, the encoding method can disable inter prediction for the encoding processing of the first displacement data included in the first data when the total number of three-dimensional points belonging to a layer is not identical between the one or more layers included in the first frame and the one or more layers included in the second frame. With this, the encoding method may be able to reduce the code amount that is the target of the encoding processing of the first displacement data. As seen from the above, the encoding method can contribute toward improving encoding processing.

(6) The encoding method according to (4), wherein the one or more layers included in the first data are two or more layers including a first base layer and one or more first sub-layers sequentially generated by performing a first subdivision process based on the first base layer, the one or more layers included in the second data are two or more layers including a second base layer and one or more second sub-layers sequentially generated by performing a second subdivision process based on the second base layer, and the encoding of the first data includes: for each first sub-layer among the one or more first sub-layers included in the first data, determining whether the first subdivision process used to generate the layer is identical to the second subdivision process used for a same layer as the layer among the one or more second sub-layers included in the second data; and executing the second process on the layer when it is determined that the first subdivision process used to generate the layer is not identical to the second subdivision process used for the same layer as the layer among the one or more second sub-layers included in the second data.

According to the above aspect, the encoding method can disable inter prediction for the encoding processing of the first displacement data included in the first data when the subdivision process used to generate a layer is not identical between the one or more sub-layers included in the first frame and the one or more sub-layers included in the second frame. With this, the encoding method may be able to reduce the code amount that is the target of the encoding processing of the first displacement data. As seen from the above, the encoding method can contribute toward improving encoding processing.

(7) The encoding method according to (6), wherein the encoding of the first data includes: determining whether a structure of the first base layer is identical to a structure of the second base layer; and executing the second process when it is determined that the structure of the first base layer is not identical to the structure of the second base layer.

According to the above aspect, the encoding method can disable inter prediction for the encoding processing of the first displacement data included in the first data when the structure is not identical between the base layer included in the first frame and the base layer included in the second frame. With this, the encoding method may be able to reduce the code amount that is the target of the encoding processing of the first displacement data. As seen from the above, the encoding method can contribute toward improving encoding processing.

(8) The encoding method according to (4), wherein the encoding of the first data includes: for each first three-dimensional point among one or more first three-dimensional points belonging to each layer among the one or more layers included in the first data, determining whether a second three-dimensional point corresponding to the first three-dimensional point belongs to a same layer as the layer among the one or more layers included in the second data; and executing the second process when it is determined that the second three-dimensional point corresponding to the first three-dimensional point does not belong to the same layer as the layer among the one or more layers included in the second data.

According to the above aspect, the encoding method can disable inter prediction for the encoding processing of the first displacement data included in the first data when, among the one or more layers of the first frame and the one or more layers of the second frame, three-dimensional points corresponding to each other do not belong to the same layer. With this, the encoding method may be able to reduce the code amount that is the target of the encoding processing of the first displacement data. As seen from the above, the encoding method can contribute toward improving encoding processing.

(9) The encoding method according to (4), wherein the encoding of the first data includes: for each first three-dimensional point among one or more first three-dimensional points belonging to each layer among the one or more layers included in the first data, determining whether a third three-dimensional point within a predetermined distance from a position corresponding to the first three-dimensional point belongs to a same layer as the layer among the one or more layers included in the second data; and executing the second process when it is determined that the third three-dimensional point within the predetermined distance from the position corresponding to the first three-dimensional point does not belong to the same layer as the layer among the one or more layers included in the second data.

According to the above aspect, the encoding method can disable inter prediction for the encoding processing of the first displacement data included in the first data when, among the one or more layers of the first frame and the one or more layers of the second frame, three-dimensional points within a predetermined distance from three-dimensional points corresponding to each other do not belong to the same layer. With this, the encoding method may be able to reduce the code amount that is the target of the encoding processing of the first displacement data. As seen from the above, the encoding method can contribute toward improving encoding processing.

(10) A decoding method including: obtaining a first frame to be decoded; and decoding first data using second data as a reference, the first data included in the first frame and including one or more layers, the second data included in a second frame and including one or more layers, wherein the decoding of the first data includes: for each layer among the one or more layers included in the first data, determining one process among a plurality of processes, using a value indicating the layer and a value related to the one or more layers included in the second data, and executing the one process determined on the first data of the layer.

According to the above aspect, the decoding method can execute different processes for each layer among the one or more layers included in the first frame that is to be decoded, according to a value related to the one or more layers included in the second data. In this way, the decoding processing may be able to be improved. As seen from the above, the decoding method can contribute toward improving decoding processing.

(11) The decoding method according to (10), wherein the decoding of the first data includes: executing different processes on the first data depending on whether a total number of the one or more layers included in the first data is identical to a total number of the one or more layers included in the second data.

According to the above aspect, the decoding method can execute different processes on the first data depending on whether the total number of the one or more layers included in the first frame that is to be decoded is identical to the total number of the one or more layers included in the second frame that is referenced during decoding. With this, processing that can be executed on the first data when the total number of the one or more layers included in the first frame is identical to the total number of the one or more layers included in the second frame, and that cannot be executed on the first data when the total number of the one or more layers included in the first frame is not identical to the total number of the one or more layers included in the second frame, can be appropriately used in the decoding processing. In this way, the decoding processing may be able to be improved. As seen from the above, the decoding method can contribute toward improving decoding processing.

(12) The decoding method according to (11), wherein the decoding of the first data includes: for each layer among the one or more layers included in the first data, determining whether the second data includes a same layer as the layer, and executing different processes on the layer depending on whether it is determined that the second data includes the same layer as the layer or it is determined that the second data does not include the same layer as the layer.

According to the above aspect, the decoding method can more easily determine whether the total number of the one or more layers included in the first frame is identical to the total number of the one or more layers included in the second frame, and can use the determination result to execute different processes on the first data depending on whether the total numbers are identical. As seen from the above, the decoding method can more easily contribute toward improving decoding processing.

(13) The decoding method according to (11), wherein the first data includes first displacement data included in the first frame and including one or more layers, the decoding of the first data includes: determining whether a total number of the one or more layers included in the first data is identical to a total number of the one or more layers included in the second data; executing a first process on the first data when it is determined that the total number of the one or more layers included in the first data is identical to the total number of the one or more layers included in the second data; and executing a second process different from the first process on the first data when it is determined that the total number of the one or more layers included in the first data is not identical to the total number of the one or more layers included in the second data, the first process includes obtaining a prediction value of the first displacement data by decoding the first displacement data encoded, the prediction value of the first displacement data being generated by performing inter prediction using second displacement data corresponding to a different time than the first displacement data, and obtaining the first displacement data using the prediction value of the first displacement data obtained, and the second process includes obtaining the first displacement data generated without performing the inter prediction, by decoding the first displacement data encoded.

According to the above aspect, the decoding method can determine whether the total number of the one or more layers included in the first frame is identical to the total number of the one or more layers included in the second frame, and can selectively enable or disable inter prediction for the decoding processing of the first displacement data included in the first data according to the determination result. With this, the decoding method may be able to reduce the code amount that is the target of the decoding processing of the first displacement data. As seen from the above, the decoding method can contribute toward improving decoding processing.

(14) The decoding method according to (13), wherein the decoding of the first data includes: for each layer among the one or more layers included in the first data, determining whether a total number of three-dimensional points belonging to the layer is identical to a total number of three-dimensional points belonging to a same layer as the layer among the one or more layers included in the second data; and executing the second process on the layer when it is determined that the total number of three-dimensional points belonging to the layer is not identical to the total number of three-dimensional points belonging to the same layer as the layer among the one or more layers included in the second data.

According to the above aspect, the decoding method can disable inter prediction for the decoding processing of the first displacement data included in the first data when the total number of three-dimensional points belonging to a layer is not identical between the one or more layers included in the first frame and the one or more layers included in the second frame. With this, the decoding method may be able to reduce the code amount that is the target of the decoding processing of the first displacement data. As seen from the above, the decoding method can contribute toward improving decoding processing.

(15) The decoding method according to (13), wherein the one or more layers included in the first data are two or more layers including a first base layer and one or more first sub-layers sequentially generated by performing a first subdivision process based on the first base layer, the one or more layers included in the second data are two or more layers including a second base layer and one or more second sub-layers sequentially generated by performing a second subdivision process based on the second base layer, and the decoding of the first data includes: for each first sub-layer among the one or more first sub-layers included in the first data, determining whether the first subdivision process used to generate the layer is identical to the second subdivision process used for a same layer as the layer among the one or more second sub-layers included in the second data; and executing the second process on the layer when it is determined that the first subdivision process used to generate the layer is not identical to the second subdivision process used for the same layer as the layer among the one or more second sub-layers included in the second data.

According to the above aspect, the decoding method can disable inter prediction for the decoding processing of the first displacement data included in the first data when the subdivision process used to generate a layer is not identical between the one or more sub-layers included in the first frame and the one or more sub-layers included in the second frame. With this, the decoding method may be able to reduce the code amount that is the target of the decoding processing of the first displacement data. As seen from the above, the decoding method can contribute toward improving decoding processing.

(16) The decoding method according to (15), wherein the decoding of the first data includes: determining whether a structure of the first base layer is identical to a structure of the second base layer; and executing the second process when it is determined that the structure of the first base layer is not identical to the structure of the second base layer.

According to the above aspect, the decoding method can disable inter prediction for the decoding processing of the first displacement data included in the first data when the structure is not identical between the base layer included in the first frame and the base layer included in the second frame. With this, the decoding method may be able to reduce the code amount that is the target of the decoding processing of the first displacement data. As seen from the above, the decoding method can contribute toward improving decoding processing.

(17) The decoding method according to (13), wherein the decoding of the first data includes: for each first three-dimensional point among one or more first three-dimensional points belonging to each layer among the one or more layers included in the first data, determining whether a second three-dimensional point corresponding to the first three-dimensional point belongs to a same layer as the layer among the one or more layers included in the second data; and executing the second process when it is determined that the second three-dimensional point corresponding to the first three-dimensional point does not belong to the same layer as the layer among the one or more layers included in the second data.

According to the above aspect, the decoding method can disable inter prediction for the decoding processing of the first displacement data included in the first data when, among the one or more layers of the first frame and the one or more layers of the second frame, three-dimensional points corresponding to each other do not belong to the same layer. With this, the decoding method may be able to reduce the code amount that is the target of the decoding processing of the first displacement data. As seen from the above, the decoding method can contribute toward improving decoding processing.

(18) The decoding method according to (13), wherein the decoding of the first data includes: for each first three-dimensional point among one or more first three-dimensional points belonging to each layer among the one or more layers included in the first data, determining whether a third three-dimensional point within a predetermined distance from a position corresponding to the first three-dimensional point belongs to a same layer as the layer among the one or more layers included in the second data; and executing the second process when it is determined that the third three-dimensional point within the predetermined distance from the position corresponding to the first three-dimensional point does not belong to the same layer as the layer among the one or more layers included in the second data.

According to the above aspect, the decoding method can disable inter prediction for the decoding processing of the first displacement data included in the first data when, among the one or more layers of the first frame and the one or more layers of the second frame, three-dimensional points within a predetermined distance from three-dimensional points corresponding to each other do not belong to the same layer. With this, the encoding method may be able to reduce the code amount that is the target of the decoding processing of the first displacement data. As seen from the above, the decoding method can contribute toward improving decoding processing.

(19) An encoding device includes: memory; and a circuit having access to the memory, wherein in operation, the circuit performs: obtaining a first frame to be encoded; and encoding first data using second data as a reference, the first data included in the first frame and including one or more layers, the second data included in a second frame and including one or more layers, wherein the encoding of the first data includes: for each layer among the one or more layers included in the first data, determining one process among a plurality of processes, using a value indicating the layer and a value related to the one or more layers included in the second data, and executing the one process determined on the first data of the layer.

This aspect produces the same advantageous effects as with the above encoding process.

(20) A decoding device includes: memory; and a circuit having access to the memory, wherein in operation, the circuit performs: obtaining a first frame to be decoded; and decoding first data using second data as a reference, the first data included in the first frame and including one or more layers, the second data included in a second frame and including one or more layers, wherein the decoding of the first data includes: for each layer among the one or more layers included in the first data, determining one process among a plurality of processes, using a value indicating the layer and a value related to the one or more layers included in the second data, and executing the one process determined on the first data of the layer.

This aspect produces the same advantageous effects as with the above decoding process.

Note that these general or specific aspects may be implemented using a system, a device, an integrated circuit, a computer program, or a computer-readable recording medium such as a CD-ROM, or any combination of systems, devices, integrated circuits, computer programs, or recording media.

Hereinafter, an embodiment of the present disclosure will be described in detail with reference to the drawings.

The embodiments described below each illustrate a general or specific example of the present disclosure. The numerical values, shapes, materials, elements, the arrangement and connection of the elements, steps, order of the steps, etc., shown in the following embodiments are mere examples, and therefore do not limit the scope of the present invention. Accordingly, among the elements in the following embodiments, those not recited in any of the independent claims defining the broadest concept are described as optional elements.

### [Embodiment]

In the present embodiment, an encoding method and a decoding method will be described.

### <Expressions and terms>

The following expressions and terms will be used herein.

### (1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

### (2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

### (3) Connection information

Connection information is information indicating a connection between vertices. For example, connection information indicates a connection for constructing a face or an edge of a three-dimensional mesh. Connection information may be expressed as "connectivity". In addition, connection information may also be expressed as face information.

### (4) Attribute information

Attribute information is information indicating an attribute of a vertex or a face. For example, attribute information indicates an attribute such as a color, an image, a normal vector, and the like associated with a vertex or a face. Attribute information may be expressed as "texture".

### (5) Face

A face is an element that constitutes a three-dimensional mesh. Specifically, a face is a polygon on a plane in a three-dimensional space. For example, a face can be determined as a triangle in the three-dimensional space.

### (6) Plane

A plane is a two-dimensional plane in a three-dimensional space. For example, a polygon is formed on a plane and a plurality of polygons are formed on a plurality of planes.

### (7) Bitstream

A bitstream corresponds to encoded information. A bitstream can also be expressed as a stream, an encoded bitstream, a compressed bitstream, or an encoded signal.

### (8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

### (9) Ordinal numbers

In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

### <Three-dimensional mesh>

FIG. 1 is a conceptual diagram illustrating a three-dimensional mesh according to the present embodiment. The three-dimensional mesh is constituted of a plurality of faces. For example, each face is a triangle. Vertices of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertices. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertices of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, texture coordinates, or an "attribute UV coordinate".

Furthermore, information on a color, an image, a moving image, and the like to be used as attribute information may be expressed as "parametric space".

A texture may be reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

### <System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

### <Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be further divided into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

### <Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be further divided into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

### <Bitstream>

Vertex information, connection information, and attribute information are encoded and stored in a bitstream. A relationship between these items of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the items of information may be sequentially stored such as a first portion of connection information, a first portion of vertex information, a first portion of attribute information, a second portion of connection information, a second portion of vertex information, a second portion of attribute information, and so on. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the items of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image encoding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these items of information may be stored in a bitstream.

Furthermore, each of connection information, vertex information, and attribute information may be divided into a plurality of data items, and the plurality of data items may be stored in a bitstream in a periodic order or in a random order.

### <Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertices or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Wi-Fi, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertices. Each face corresponds to an area enclosed by three or more edges.

In addition, a three-dimensional mesh has position information indicating three-dimensional coordinate positions of vertices. The position information is also expressed as vertex information or geometry. Furthermore, a three-dimensional mesh has connection information indicating a relationship among a plurality of vertices constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes items of position information G(1) to G(N) of N vertices and items of attribute information A1(1) to A1(N) of N vertices which constitute a three-dimensional mesh. In addition, in the example, M items of attribute information A2(1) to A2(M) are included. An item of attribute information need not correspond one-to-one to a vertex and need not correspond one-to-one to a face. In addition, attribute information need not exist.

Connection information is indicated by a combination of indexes of vertices. n[1, 3, 4] indicates a face of a triangle constituted of three vertices n = 1, n = 3, and n = 4. In addition, m[2, 4, 6] indicates that items of attribute information m = 2, m = 4, and m = 6 respectively correspond to the three vertices.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in items of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. This can reduce the size and complexity of circuits and software programs.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be high efficiency video coding (HEVC), versatile video coding (VVC), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the items of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be high efficiency video coding (HEVC), versatile video coding (VVC), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as graphics language transmission format (glTF) or universal scene description (USD).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called dynamic mesh coding (DMC). In addition, a video-based encoding system of a dynamic three-dimensional mesh may be called video-based dynamic mesh coding (V-DMC).

An encoding system of a point cloud may be called point cloud compression (PCC). A video-based encoding system of a point cloud may be called video-based point cloud compression (V-PCC). In addition, a geometry-based encoding system of a point cloud may be called geometry-based point cloud compression (G-PCC).

### <Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

### <Encoding and Decoding of Displacement>

The following terms will be used herein as examples.

### (1) Image

An image is a data unit composed of a set of pixels, and includes a picture or a block smaller than a picture. Images include video as well as still pictures.

### (2) Picture

A picture is an image processing unit composed of a set of pixels, and may also be referred to as a frame or field.

### (3) Block

A block is a processing unit composed of a specific number of pixels. The following terms may also be used for blocks as illustrated in the examples below. The shape of a block is not particularly limited. A block can be, for example, a rectangular shape of M×N pixels, or a square shape of M×M pixels. A block may be a triangular shape, a circular shape, or other shapes. Examples of blocks are as follows.

- slice, tile, or brick
- CTU, superblock, or basic splitting unit
- VPDU, hardware processing splitting unit
- CU, processing block unit, prediction block unit (PU), or orthogonal transform block unit (TU)
- sub-block

### (4) Pixel or sample

A pixel or sample is the smallest point of an image, in other words, the smallest unit. A pixel or sample includes not only pixels at integer positions, but also pixels at sub-pixel positions generated based on pixels at integer positions.

### (5) Pixel value or sample value

A pixel value or sample value is an eigenvalue of a pixel. A pixel value or sample value includes a luma value, a chroma value, or an RGB gradation level, and can also include a depth value or a binary value of 0 or 1.

### (6) Flag

A flag indicates one or more bits. A flag is, for example, a parameter or index represented by two or more bits. A flag can also indicate not only a value represented by a binary number, but also a value represented by a number other than a binary number.

### (7) Signal

A signal refers to something that has been symbolized or encoded to convey information. A signal includes a discrete digital signal or a continuous analog signal.

### (8) Stream or bitstream

A stream or bitstream is a digital data sequence indicating a flow of digital data. A stream or bitstream may be one stream or may include a plurality of streams having a plurality of hierarchical layers. A stream or bitstream may be transmitted by serial communication using a single transmission path or may be transmitted by packet communication using a plurality of transmission paths.

### (9) Difference

In the case of a scalar quantity, a difference can include a simple difference (x - y) and difference calculation. A difference can include an absolute value of a difference (|x - y|), a square of a difference (x^2 - y^2), a square root of a difference (√(x - y)), a weighted difference (ax - by, where a and b are constants), an offset difference (x - y + a, where a is an offset), or the like.

### (10) Sum

In the case of a scalar quantity, a sum can include a simple sum (x + y) and addition calculation. A sum can include an absolute value of a sum (|x + y|), a sum of squares (x^2 + y^2), a square root of a sum (√(x + y)), a weighted sum (ax + by, where a and b are constants), an offset sum (x + y + a, where a is an offset), or the like.

### (11) Based on

The expression "based on something" means that things other than that "something" may be considered. "Based on" may be used both when a direct result is obtained and when a result is obtained through an intermediate result.

### (12) "Used" or "use"

The expression "something is used" or "something was used" means that things other than that "something" may be considered. The expression "used" or "was used" may be used both when a direct result is obtained and when a result is obtained through an intermediate result.

### (13) Prohibited

"Prohibited" can be rephrased as "not permitted". "Not prohibited/prohibited" or "permitted/permitted" does not necessarily mean an obligation.

### (14) "Restriction" or "limitation"

"Restriction" or "limitation" can be rephrased as "do not permit/do not allow" or "not permitted/permitted". "Prohibited/not prohibited" or "not permitted/permitted" does not necessarily mean an obligation. What is prohibited quantitatively or qualitatively may be a part or all.

### (15) Chroma

The term chroma is an adjective represented by the symbol Cb or Cr, and indicates that a sample array or single sample represents one of two color difference signals related to primary colors. The term chroma may be used in place of the term chrominance.

### (16) Luma

The term luma is an adjective represented by the symbol or subscript Y or L, and indicates that a sample array or single sample represents a monochrome signal related to primary colors. Term luma may be used in place of the term luminance.

Hereinafter, the encoding/decoding system according to the present embodiment will be described.

In general, a three-dimensional model (also referred to as a 3D model) represents an object digitally such that a user can explore the model using zooming, panning, and rotation in all three dimensions while rendering it temporally. One way to construct such a representation is to construct a 3D mesh using triangles. The model stores the positions of the vertices of the triangles, connectivity of the vertices of the triangles with each other, and the attributes associated therewith (such as a normal or UV patches).

Storing all of this information in an uncompressed format requires very large storage space, and therefore the bandwidth for transmission becomes very large. The triangles forming the mesh often have a repetitive pattern and similar attributes especially in the temporal and spatial neighborhood. The repetition can be used to formulate efficient encoding and decoding methods for storage and transmission. One such encoding method and decoding method is Video-based Dynamic Mesh Coding (V-DMC).

FIG. 26 is a block diagram illustrating another configuration example of the encoding/decoding system according to the present embodiment. As illustrated in FIG. 26, the encoding/decoding system includes encoding device 100 and decoding device 200.

The encoding/decoding system receives a three-dimensional mesh (also referred to as 3D mesh) that is input in the format of three-dimensional coordinates of vertices (vertex information), connectivity (connection information), and associated attributes (attribute information). Note that the 3D mesh can include not only geometry but also a texture map.

Encoding device 100 receives the 3D mesh that has been input (also referred to as input 3D mesh or input mesh) in the format of three-dimensional coordinates of vertices, connectivity, and associated attributes. Encoding device 100 encodes all related information into a stream. The stream may be a single bitstream or a plurality of bitstreams.

Network 300 transmits the stream generated by the encoding device to decoding device 200. Network 300 may be the Internet, a wide area network (WAN), a local area network (LAN), or any combination thereof. Network 300 is not necessarily limited to a two-way communication network and may be a unidirectional communication network that transmits broadcast waves for terrestrial digital broadcasting, satellite broadcasting, or the like. In addition, instead of network 300, a recording medium such as a DVD (digital versatile disc) or a BD (Blu-Ray Disc) on which a stream is recorded may be used.

The stream is transmitted to decoding device 200 via network 300. Decoding device 200 decodes the bitstream to produce a three-dimensional mesh using the decoded vertices' three-dimensional coordinates, connectivity, and associated attributes. Decoding device 200 outputs the generated three-dimensional mesh (also referred to as output 3D mesh or output mesh).

FIG. 27 illustrates another configuration example of encoding device 100.

As illustrated in FIG. 27, encoding device 100 includes preprocessor 1103 and compressor 1106.

Encoding device 100 reads input mesh 1101 and attribute map 1102, and passes them to preprocessor 1103. Preprocessor 1103 processes the input mesh to extract base mesh 1104 and displacement data 1105. Attribute map 1102 is passed to compressor 1106 together with extracted base mesh 1104 and displacement data 1105.

Compressor 1106 compresses base mesh 1104, displacement data 1105, and attribute map 1102 to generate bitstream 1107. Compressor 1106 can transmit additional information to decoding device 200 by further including metadata 1108 in bitstream 1107.

FIG. 28 illustrates another configuration example of decoding device 200.

As illustrated in FIG. 28, decoding device 200 includes decompressor 2102 and postprocessor 2106.

Decoding device 200 reads bitstream 2101 and passes it to decompressor 2102. Decompressor 2102 decompresses base mesh 2103, displacement data 2104, and attribute map 2108 from bitstream 2101, and passes them to postprocessor 2106. One example of displacement data 2104 is displacement vectors.

Postprocessor 2106 processes base mesh 2103 according to displacement data 2104 and attribute map 2108 to generate output mesh 2107. Postprocessor 2106 may further use information from metadata 2105 to generate output mesh 2107.

FIG. 29 is a block diagram illustrating yet another configuration example of encoding device 100 according to the present embodiment.

In this example, encoding device 100 includes volumetric capturer 511, projector 512, base mesh encoder 513, displacement encoder 514, and attribute encoder 515, and optionally includes one or more encoders 516 of other types.

Volumetric capturer 511 captures a content and outputs the captured content to projector 512.

Projector 512 projects the content onto a three-dimensional mesh frame that includes vertex geometry coordinates (vertex coordinates indicating the position of a vertex), texture coordinates, and connectivity data (connection information). The data is output to base mesh encoder 513, displacement encoder 514, and attribute encoder 515, and optionally to one or more encoders 516 of other types. Each encoder compresses the data into a bitstream.

FIG. 30 is a block diagram illustrating yet another configuration example of decoding device 200 according to the present embodiment.

In this example, decoding device 200 includes base mesh decoder 613, displacement decoder 614, attribute decoder 615, one or more decoders 616 of other types, and three-dimensional reconstructor 617.

A bitstream is sent to base mesh decoder 613, displacement decoder 614, and attribute decoder 615 and optionally to one or more decoders 616 of other types. These decoders decode the bitstream to produce decoded data including vertex geometry coordinates, texture coordinates, and connectivity data. The decoded data is then sent to three-dimensional reconstructor 617, where a three-dimensional mesh frame is reconstructed.

Hereinafter, the encoding processing performed by encoding device 100 will be described in detail.

FIG. 31 is a flowchart illustrating processing of encoding device 100. FIG. 32 is an explanatory diagram conceptually illustrating encoding of a mesh frame. With reference to FIG. 31 and FIG. 32, processes performed by encoding device 100 will be described.

In step S101, encoding device 100 reads the 3D mesh frame that is the input mesh frame, and its attributes. The input mesh frame is a mesh frame input into encoding device 100. An example of a 3D mesh frame that is the input mesh frame is illustrated as mesh frame 1301 (see FIG. 32).

In step S102, encoding device 100 generates a base mesh frame having fewer vertices than the input mesh frame by performing decimation processing on the input mesh frame read in step S101. A base mesh frame generated by decimating mesh frame 1301 is illustrated as base mesh frame 1302 (see FIG. 32).

In step S103, encoding device 100 calculates displacement information used by decoding device 200 to reconstruct the mesh frame. The displacement information corresponds to displacement vectors from vertices of the base mesh frame generated in step S102 toward vertices of the input mesh frame. Methods for calculating the displacement information include a method of subtracting the coordinates of vertices of the base mesh frame from the coordinates of vertices of the input mesh frame. Displacement information calculated from mesh frame 1301 and base mesh frame 1302 is illustrated as displacement information 1303 (see FIG. 32). Displacement information 1303 is in vector format, or in other words, is expressed as displacement vectors.

In step S104, encoding device 100 encodes the base mesh frame generated in step S102, the displacement information generated in step S103, and the attributes of the input mesh frame into a bitstream (corresponding to a compressed bitstream). An example of a bitstream is illustrated as bitstream 1304 (see FIG. 32).

More specifically, bitstream 1304 includes the vertex coordinates and connection information of vertices A, C, E, and F, the displacement information, a video bitstream including the texture data, and a compressed attribute map (see FIG. 32). The displacement information includes displacement information for displacing vertices based on vertex coordinates obtained from the subdivided base mesh frame. The compressed attribute map is texture coordinates for applying texture data to a mesh frame reconstructed using the base mesh frame and the displacement information.

Hereinafter, the decoding processing performed by decoding device 200 will be described in detail.

FIG. 33 is a flowchart illustrating processing of decoding device 200. FIG. 34 is an explanatory diagram conceptually illustrating decoding of a 3D mesh. With reference to FIG. 33 and FIG. 34, processes performed by decoding device 200 will be described.

In step S201, decoding device 200 decodes the base mesh frame and attributes from the bitstream (corresponding to the compressed bitstream). An example of a decoded base mesh frame (corresponding to a decoded base mesh frame) is illustrated as decoded base mesh frame 2301 (see FIG. 34).

In step S202, decoding device 200 generates subdivided vertices by performing subdivision processing on the base mesh frame decoded in step S201. An example of a base mesh frame including subdivided vertices is illustrated as base mesh frame 2302 (see FIG. 34).

In step S203, decoding device 200 decodes displacement information from the bitstream (corresponding to the compressed bitstream). An example of decoded displacement information is illustrated as displacement information 2303 (see FIG. 34). Displacement information 2303 is in vector format, or in other words, is expressed as displacement vectors.

In step S204, decoding device 200 reconstructs the shape of the mesh frame by moving the vertices of the base mesh frame including the subdivided vertices to new positions using the displacement information, and restores the mesh frame by applying the attribute information. One example of an attribute is texture. An example of a reconstructed mesh frame is illustrated as mesh frame 2304 (see FIG. 34).

FIG. 35 is a block diagram illustrating a configuration example of the decoding device according to the present embodiment.

FIG. 35 illustrates an example of a block diagram of general intra decoding.

The decoding device illustrated in FIG. 35 includes demultiplexer 1231, switch 1232, static mesh decoder 1233, mesh buffer 1234, motion decoder 1235, base mesh reconstructor 1236, inverse quantizer 1237, video decoder 1238, image unpacker 1239, inverse quantizer 1240, inverse wavelet transformer 1241, reconstructor 1242, video decoder 1243, and color converter 1244.

Demultiplexer 1231 obtains the compressed bitstream and separates compressed data related to the base mesh, video including displacement data (also referred to as displacement bitstream), and video including attribute data (also referred to as attribute bitstream). The compressed data related to the base mesh is passed to switch 1232. Switch 1232 determines whether to perform intra decoding processing or inter decoding processing based on a parameter in the bitstream.

When the intra decoding processing is selected, the bitstream is passed to static mesh decoder 1233 that generates a quantized base mesh. Static mesh decoder 1233 is, for example, a decoder that uses the Edgebreaker algorithm to decode 3D mesh data. Static mesh decoder 1233 generates a quantized base mesh from the bitstream. The quantized base mesh generated by static mesh decoder 1233 is stored in mesh buffer 1234 for reference when the inter decoding processing is selected.

When the inter decoding processing is selected, switch 1232 passes the compressed data related to the base mesh to motion decoder 1235. Motion decoder 1235 receives a previously decoded, quantized base mesh, and decodes motion data representing a difference in coordinates of vertices between the quantized base mesh stored in mesh buffer 1234 and the current quantized base mesh. The motion data and the quantized base mesh stored in mesh buffer 1234 are used by base mesh reconstructor 1236 to reconstruct the current quantized base mesh. The quantized base mesh obtained from the inter decoding processing or the intra decoding processing is passed to inverse quantizer 1237 to obtain a decoded base mesh.

The video including the displacement data is passed to video decoder 1238 because the bitstream includes displacement data in an image format having two items of chroma information and one item of luma information. Video decoder 1238 decodes the data using a video frame decompression method. In another example, the displacement data is decoded using an arithmetic decoder. This decompressed data is passed to image unpacker 1239, which extracts wavelet coefficients associated with each vertex from the decompressed data in image format. Inverse quantizer 1240 performs inverse quantization on the quantized wavelet coefficients with three components associated with each vertex. Inverse wavelet transformer 1241 performs inverse transformation on the result to obtain finally decoded displacement data. The decoded displacement data and the decoded base mesh are passed to reconstructor 1242. Reconstructor 1242 performs subdivision of edges of the decoded base mesh, displaces vertices using the decoded displacement data, and obtains a decoded mesh.

The video including the attribute data is passed to another video decoder 1243 to obtain a decoded attribute bitstream. The decoded attribute bitstream is further processed by color converter 1244 for color space and color format conversion to obtain a decoded attribute map.

FIG. 36 is a block diagram illustrating a configuration example of the decoding device according to the present embodiment.

FIG. 36 illustrates an example of a reconstructor that obtains decoded 3D mesh 1256 from decoded base mesh 1251 and decoded displacement data 1254.

Decoded base mesh 1251 is passed to subdivider 1252.

Subdivider 1252 subdivides any two connected vertices of the entire 3D mesh by adding a new vertex between them. This process can be repeated several times to include the vertices created in the previous subdivision step in order to generate a predefined number of vertices. Each iteration of subdivision across the entire 3D mesh generates a new level of detail (LoD). Subdivided mesh 1253 and decoded displacement data 1254 are passed to displacer 1255. Displacer 1255 generates decoded 3D mesh 1256 by moving each vertex to a new position according to corresponding displacement data.

Hereinafter, subdivision will be described. Subdivision is executed by a subdivider (specifically, subdivider 1206 or subdivider 2204).

FIG. 37 is an explanatory diagram illustrating an example of subdivision.

Base mesh illustrated in (a) in FIG. 37 includes vertices A, B, and C, and connection information indicating connectivity thereof.

(b) in FIG. 37 illustrates a mesh generated by a first subdivision, in other words, a mesh after a first subdivision. In the first subdivision, the subdivider generates vertices D, E, and F, and connection information indicating connectivity thereof. The mesh generated by the subdivider is also referred to as LoD1 or the first LoD.

Vertex D of the mesh after the first subdivision is a vertex generated by subdivision based on vertices A and B. Similarly, vertex E is a vertex generated by subdivision based on vertices B and C. Vertex F is a vertex generated by subdivision based on vertices A and C.

Note that, as an example, vertex D can be a midpoint of line segment AB (in other words, edge AB) connecting vertices A and B from which vertex D was generated. Similarly, vertex E can be a midpoint of line segment AC. Vertex F can be a midpoint of line segment BC.

(c) in FIG. 37 illustrates a mesh generated by a second subdivision, in other words, a mesh after a second subdivision. In the second subdivision, the subdivider generates vertices G, H, I, J, K, L, M, N, and O, and connection information indicating connectivity thereof. The mesh generated by the subdivider is also referred to as LoD2 or the second LoD.

Vertex G of the mesh after the second subdivision is a vertex generated by subdivision based on vertices A and D. Similarly, vertex H is a vertex generated by subdivision based on vertices A and E. Vertex I is a vertex generated by subdivision based on vertices B and D. Vertex J is a vertex generated by subdivision based on vertices D and F. Vertex K is a vertex generated by subdivision based on vertices E and F. Vertex L is a vertex generated by subdivision based on vertices C and E. Vertex M is a vertex generated by subdivision based on vertices B and F. Vertex N is a vertex generated by subdivision based on vertices C and F. Vertex O is a vertex generated by subdivision based on vertices D and E.

Note that, as an example, vertex G can be a midpoint of line segment AD (in other words, edge AD) connecting vertices A and D from which vertex G was generated. Similarly, vertex H can be a midpoint of line segment AE. Vertex I can be a midpoint of line segment BD. Vertex J can be a midpoint of line segment DF. Vertex K can be a midpoint of line segment EF. Vertex L can be a midpoint of line segment CE. Vertex M can be a midpoint of line segment BF. Vertex N can be a midpoint of line segment CF. Vertex O can be a midpoint of line segment DE.

Hereinafter, the displacement of vertices will be described with reference to FIG. 38 and FIG. 39. The displacement of vertices is executed by reconstructor 2209.

FIG. 38 is an explanatory diagram illustrating an example of displacement of vertices after being displaced after subdivision. FIG. 39 is an explanatory diagram illustrating an example of vertices of an original mesh.

Base mesh illustrated in (a) in FIG. 38 includes vertices A, B, C, and Z, and connection information indicating connectivity thereof.

(b) in FIG. 38 illustrates a mesh generated by a first subdivision, in other words, a mesh after a first subdivision (i.e., a first LoD). In the first subdivision, the subdivider generates vertices S, T, U, X, or Y, and connection information indicating connectivity thereof. Vertices S, T, U, X, or Y are the same as vertices D, E, and F illustrated in (b) in FIG. 37.

(c) in FIG. 38 illustrates a mesh generated by a second subdivision, in other words, a mesh after a second subdivision (i.e., a second LoD). In the second subdivision, the subdivider generates vertices D, E, F, G, and H, and connection information indicating connectivity thereof. Vertices D, E, F, G, and H are the same as vertices G, H, I, J, K, L, M, N, or O illustrated in (c) in FIG. 37.

(d) in FIG. 38 illustrates a mesh including vertices after being displaced after subdivision. Each of vertices A, B, C, D, E, F, G, H, S, T, U, X, Y, and Z illustrated in (d) in FIG. 38 is located at a position displaced using displacement information from the position of the corresponding vertex illustrated in (c) in FIG. 38.

The original mesh illustrated in FIG. 39 is an example of a mesh input into encoding device 100, in other words, a mesh before encoding.

The mesh illustrated in FIG. 38 has a shape close to the original mesh illustrated in FIG. 39. The displacement information is generated by displacement vector calculator 1207 of encoding device 100 as information indicating displacement from vertices of the base mesh to vertices of the original mesh, so by reconstructing the mesh using the displacement information generated in this manner, a mesh having a shape close to the original mesh is generated.

Decoding device 200 can output the mesh illustrated in (d) in FIG. 38.

Next, with reference to FIG. 40 and FIG. 41, division of a mesh into submeshes will be described.

The mesh can be divided into a plurality of parts smaller than the mesh and can be encoded on a division basis. In the division of the mesh, the vertices of the mesh are divided such that the coordinates of vertices included in each division and the connectivity can be independently encoded.

FIG. 40 is an explanatory diagram illustrating an example of a mesh. FIG. 41 is an explanatory diagram illustrating an example of the division of a mesh into submeshes.

The mesh illustrated in FIG. 40 is an original mesh and may be referred to as a full mesh in contrast with the submesh.

FIG. 41 is a diagram illustrating division of the full mesh illustrated in FIG. 40 into two submeshes. For vertices A, B, and C of the full mesh (see FIG. 40), vertex A is duplicated to form vertex A1 and vertex A2, vertex B is duplicated to form vertex B1 and vertex B2, and vertex C is duplicated to form vertex C1 and vertex C2, thereby creating two submeshes (i.e., a first submesh and a second submesh) from the full mesh. The first submesh and the second submesh are meshes that can be independently decoded.

Hereinafter, packing of displacement information into image frames will be described with reference to FIG. 42, FIG. 43, and FIG. 44.

FIG. 42, FIG. 43, and FIG. 44 are explanatory diagrams each illustrating an example of packing of displacement information into an image frame. Note that an image frame can also be rephrased as a video frame.

The displacement data of vertices is encoded as image frame data by being mapped, for example, to each component of an image frame in YUV format (i.e., the Y component (Y Plane), the U component (U Plane), and the V component (V Plane), respectively). This case will be described below as an example. Note that as another example, the displacement data of vertices may be encoded as image frame data by being mapped to each component of an image frame in RGB format (the R component, the G component, and the B component, respectively).

Decoding device 200 can use an image encoding module to extract the displacement data. The displacement data may be in the form of an X component, a Y component, or a Z component in a global coordinate system (e.g., a Cartesian coordinate system), or a normal, a tangent, or a bitangent component in a local coordinate system. Methods for mapping the displacement data to an image frame include the following methods.

For example, in a first method, the displacement data is arranged in scanning order in an image frame. An example of packing of the displacement data in this case is illustrated in FIG. 42. The displacement data is directly mapped to an image frame according to a predefined scanning order.

Note that, because the image frame has a fixed height and width, the displacement data may not fit exactly into the frame. In such cases, the remaining portion of the image frame is padded with padding data (also referred to as padded data) (see FIG. 42).

For example, in a second method, the displacement data is separated into a plurality of LoDs and mapped to the Y component, U component, and V component of an image frame. An example of packing of the displacement data in this case is illustrated in FIG. 43. Here, the displacement data of the image frame of the next one LoD starts immediately after the displacement data of the previous LoD ends. Similar to the first method, when the displacement data does not fit exactly into the image frame, the end portion of the image frame is padded (see FIG. 43).

For example, in a third method, the displacement data corresponding to the LoD is mapped to the Y component, U component, and V component of an image frame in a manner different from that in the second method. An example of packing of the displacement data in this case is illustrated in FIG. 44. In this manner, each LoD can be decoded independently. In the third method, intermediate padding is performed on the displacement data of each LoD, and CTU alignment is performed together with padding at the end of the video frame (see FIG. 44).

FIG. 45 is a block diagram illustrating a detailed configuration example of decoding device 200 according to the present embodiment. Specifically, FIG. 45 illustrates an example of the configuration of a geometry coordinate decoder included in decoding device 200.

In this example, decoding device 200 includes frame header decoder 631, vertex geometry coordinate predictor 632, vertex geometry coordinate difference decoder 633, and reconstructor 634.

Frame header decoder 631 reads a bitstream, decodes a frame header in the bitstream, and determines whether to intra-decode (intra-predict) or inter-decode (inter-predict) frame data.

When the inter-decoding is selected, the frame data included in the bitstream is output to vertex geometry coordinate predictor 632.

Vertex geometry coordinate predictor 632 outputs prediction information to reconstructor 634. One example of the prediction information is motion vectors.

Reconstructor 634 outputs three-dimensional coordinates of a vertex (vertex geometry coordinates) using vertex coordinates from a frame decoded in the past and the prediction information.

On the other hand, when the intra-decoding is selected, the frame data included in the bitstream is output to vertex geometry coordinate difference decoder 633.

In order to produce vertex coordinates, vertex geometry coordinate difference decoder 633 decodes the frame data encoded as a difference between coordinates of vertices included in the frame. Only one of the vertex geometry coordinates from vertex geometry coordinate difference decoder 633 and the vertex geometry coordinates from reconstructor 634 is used for producing the decoded three-dimensional mesh frame.

FIG. 46 is a diagram for describing coordinates of vertices in a three-dimensional mesh according to the present embodiment. Specifically, FIG. 46 illustrates an example in which the whole of a three-dimensional mesh frame is decoded using coordinates (positions) of actual vertices included in the bitstream.

The coordinates of vertex A included in the three-dimensional mesh frame at a time (t) are decoded to be (6, 8, 9) in the Cartesian coordinate system (x, y, z) as illustrated in (a) in FIG. 46. Similarly, the coordinates of vertex B are decoded to be (10, 6, 7), and the coordinates of vertex C are decoded to be (14, 8, 9). Vertices D to G are also decoded in the same manner.

FIG. 47 is a diagram for describing prediction information according to the present embodiment. Specifically, FIG. 47 illustrates another example in which the whole of a three-dimensional mesh frame at a time (t) is decoded using a frame at a time (t-1) (past frame) and prediction information included in the bitstream.

Coordinates (6, 8, 9) of vertex A in the frame to be decoded (present frame) are decoded by summing coordinates (4, 7, 8) of vertex A in the past frame and values (2, 1, 1) relating to vertex A indicated by the prediction information. Similarly, coordinates (10, 6, 7) of vertex B in the present frame are decoded by summing coordinates (8, 6, 7) of vertex B in the past frame and values (2, 0, 0) relating to vertex B indicated by the prediction information.

Hereinafter, a configuration example of the encoding device according to the present embodiment will be described.

FIG. 48 is a block diagram illustrating a configuration example of the encoding device according to the present embodiment.

The encoding device illustrated in FIG. 48 includes decimator 4801, subdivider 4802, displacement vector calculator 4803, wavelet transformer 4804, inter predictor 4805, quantizer 4806, image packer 4807, video encoder 4808, inverse quantizer 4811, reconstructor 4812, and reference buffer 4813.

Decimator 4801 obtains a mesh frame (corresponding to an original 3D mesh frame, also referred to as an original mesh frame or original mesh) input into the encoding device, and generates a base mesh frame (also referred to as a base mesh) by performing decimation processing (in other words, thinning processing) on the obtained mesh frame. Decimation processing is processing that deletes (in other words, thins out) some of the vertices included in the original mesh. Decimation processing may include processing that changes positions of at least some of the vertices included in the original mesh, or may include processing that changes connectivity of at least some of the vertices included in the original mesh. Decimation processing is also simply referred to as decimation.

The base mesh produced by decimation processing is a mesh that has fewer vertices than the original mesh. The vertices of the base mesh may be located at different positions than the vertices of the original mesh. The connectivity of the vertices of the base mesh may be different from the connectivity of the vertices of the original mesh. Decimator 4801 provides the generated base mesh frame to subdivider 4802.

Subdivider 4802 performs subdivision processing on the base mesh frame generated by decimator 4801. Subdivision processing can be processing that subdivides the base mesh frame to further divide it into smaller units. Subdivider 4802 provides the subdivided base mesh frame to displacement vector calculator 4803.

More specifically, subdivider 4802 can subdivide the mesh frame by generating a new vertex between two vertices that are connected to each other and included in the mesh frame. By repeating the generation of the new vertices described above, the number of vertices included in the mesh frame can be set to a predetermined number. By repeating subdivision across the entire mesh frame (stated differently, by performing subdivision multiple times), a plurality of Level of Detail (LoD) hierarchical layers are generated.

Displacement vector calculator 4803 obtains the original mesh frame obtained by the encoding device and obtains the subdivided base mesh frame from subdivider 4802. From vertices of the base mesh frame and vertices generated by subdividing the base mesh frame, displacement vector calculator 4803 calculates, as displacement vectors, vectors toward corresponding vertices of the original mesh frame. Displacement vector calculator 4803 provides the calculated displacement vectors to wavelet transformer 4804.

Wavelet transformer 4804 obtains transform coefficients (also referred to as wavelet coefficients) by performing wavelet transformation processing on the displacement vectors calculated by displacement vector calculator 4803. Wavelet transformer 4804 provides the obtained wavelet coefficients to inter predictor 4805. In wavelet transformation, wavelet transformer 4804 can calculate wavelet coefficients representing various components from low-frequency components to high-frequency components by assigning vertices to a plurality of LoD layers and applying, for example, lifting transformation to the displacement vectors of the vertices.

Inter predictor 4805 calculates a prediction residual of wavelet coefficients of displacement vectors of a frame to be encoded by using inter prediction. More specifically, inter predictor 4805 calculates a prediction residual of wavelet coefficients of displacement vectors of a frame to be encoded by performing inter prediction on the wavelet coefficients of displacement vectors of the frame to be encoded using wavelet coefficients of displacement vectors of an encoded frame (also referred to as a reference frame) stored in reference buffer 4813.

Quantizer 4806 quantizes a prediction residual of wavelet coefficients calculated by inter predictor 4805. Quantizer 4806 can quantize a prediction residual of wavelet coefficients for each LoD layer. Quantizer 4806 provides the quantized prediction residual to image packer 4807 and inverse quantizer 4811.

Image packer 4807 generates an image containing the prediction residual quantized by quantizer 4806. Image packer 4807 can generate the image by mapping the prediction residual quantized by quantizer 4806 to pixels of a two-dimensional image format. Image packer 4807 provides the generated image to video encoder 4808. For the process of mapping the quantized prediction residual to pixels of a two-dimensional image format, mapping information expressing assignment of the quantized prediction residual to pixels of the two-dimensional image format can be used.

Video encoder 4808 encodes the image generated by image packer 4807 into a bitstream (also referred to as a displacement bitstream) (in other words, generates a displacement bitstream). Video encoder 4808 outputs the displacement bitstream. The displacement bitstream can be a bitstream that includes the displacement information in an image format. The image format can be, for example, a format that includes two items of chroma information and one item of luma information. Video encoder 4808 can use a general-purpose module having a function of converting an image into a bitstream. By using a highly reliable general-purpose module as video encoder 4808, the above function can be executed more reliably.

Inverse quantizer 4811 generates a prediction residual of wavelet coefficients by performing inverse quantization on the prediction residual quantized by quantizer 4806. More specifically, inverse quantizer 4811 can perform inverse quantization on the prediction residual quantized by quantizer 4806 for each LoD layer, thereby generating a prediction residual. Inverse quantizer 4811 provides the generated prediction residual of wavelet coefficients to reconstructor 4812.

Reconstructor 4812 restores (also referred to as reconstructs) wavelet coefficients from the prediction residual of wavelet coefficients provided from inverse quantizer 4811 and the reference frame stored in reference buffer 4813. Reconstructor 4812 stores the restored wavelet coefficients in reference buffer 4813.

Reference buffer 4813 is a storage device, and stores, for example, wavelet coefficients of a reference frame. The wavelet coefficients stored in reference buffer 4813 can be used for inter prediction by inter predictor 4805.

FIG. 49 is a flowchart illustrating a specific example of encoding processing according to the present embodiment.

In step S4901, inter predictor 4805 calculates a sum (also referred to as sum_nointer) within a frame of transform coefficients of displacement vectors.

In step S4902, inter predictor 4805 calculates a sum (also referred to as sum_inter) within the frame of prediction residuals when inter prediction is applied to transform coefficients of displacement vectors.

The prediction residual of inter prediction can be calculated by subtracting the transform coefficients of the displacement vector of a three-dimensional point (also referred to as a reference point) in the reference frame that corresponds to the three-dimensional point to be encoded from the transform coefficients of the displacement vector of the three-dimensional point to be encoded in the frame to be encoded.

In step S4903, inter predictor 4805 determines whether sum_inter calculated in step S4902 is smaller than sum_nointer calculated in step S4901. If it is determined that sum_inter is smaller than sum_nointer (Yes in step S4903), the process proceeds to step S4904; otherwise (No in step S4903), the process proceeds to step S4911.

In step S4904, inter predictor 4805 determines to encode transform coefficients of displacement vectors within the frame using inter prediction, and outputs the prediction residual to quantizer 4806.

In step S4905, information indicating that transform coefficients of displacement vectors within the frame were encoded using inter prediction is added to a header (for example, a header of a stream). For example, by setting disp_frame_inter_mode, which is included in the header and indicates that transform coefficients of displacement vectors were encoded using inter prediction, to 1, it can be indicated that transform coefficients of displacement vectors within the frame were encoded using inter prediction.

In step S4911, it is determined to encode transform coefficients of displacement vectors within the frame without using inter prediction, and the transform coefficients are output to quantizer 4806.

In step S4912, information indicating that transform coefficients of displacement vectors within the frame were encoded without using inter prediction is added to a header. For example, by setting disp_frame_inter_mode, which is included in the header and indicates that transform coefficients of displacement vectors were encoded using inter prediction, to 0, it can be indicated that transform coefficients of displacement vectors within the frame were encoded without using inter prediction.

FIG. 50 is a block diagram illustrating a configuration example of the decoding device according to the present embodiment.

The decoding device includes video decoder 5001, image unpacker 5002, inverse quantizer 5003, reconstructor 5004, inverse wavelet transformer 5005, reconstructor 5006, and reference buffer 5011.

Video decoder 5001 obtains the displacement bitstream and decodes the obtained displacement bitstream into an image. The image can be an image in which quantized wavelet coefficients are accommodated by being mapped to pixels of a two-dimensional image format. Video decoder 5001 provides the image to image unpacker 5002. Video decoder 5001 can use a general-purpose module having a function of converting a bitstream into an image. By using a highly reliable general-purpose module as video decoder 5001, the above function can be executed more reliably.

Image unpacker 5002 extracts quantized wavelet coefficients from the image provided from video decoder 5001. For the process of extracting quantized wavelet coefficients from the image, mapping expressing assignment of the quantized wavelet coefficients to pixels of a two-dimensional image format can be used. Image unpacker 5002 provides the quantized wavelet coefficients extracted from the image to inverse quantizer 5003.

Inverse quantizer 5003 generates a prediction residual of wavelet coefficients by performing inverse quantization on the quantized prediction residual of wavelet coefficients provided from image unpacker 5002. More specifically, inverse quantizer 5003 can generate a prediction residual of wavelet coefficients by performing inverse quantization on the quantized prediction residual of wavelet coefficients for each LoD layer.

Reconstructor 5004 restores (also referred to as reconstructs) transform coefficients of the frame to be decoded from the prediction residual of transform coefficients of the frame to be decoded and the transform coefficients of the reference frame. Reconstructor 5004 provides the restored transform coefficients to inverse wavelet transformer 5005 and reference buffer 5011.

Inverse wavelet transformer 5005 generates displacement vectors (corresponding to decoded displacement vectors) by performing inverse wavelet transformation processing on the wavelet coefficients provided from reconstructor 5004. The inverse wavelet transformation processing corresponds to the inverse transformation of the wavelet transformation processing performed by wavelet transformer 4804. More specifically, in inverse wavelet transformation, inverse wavelet transformer 5005 can calculate displacement vectors of vertices by applying inverse lifting transformation to the wavelet coefficients. Inverse wavelet transformer 5005 provides the generated decoded displacement vectors to reconstructor 5006.

Reconstructor 5006 reconstructs a mesh (corresponding to a decoded mesh) using the decoded displacement vectors and the decoded base mesh provided from inverse wavelet transformer 5005. Reconstructor 5006 outputs the reconstructed decoded mesh.

Reference buffer 5011 is a storage device, and stores, for example, wavelet coefficients of a reference frame. The wavelet coefficients stored in reference buffer 5011 can be used for restoring transform coefficients of a frame to be decoded by reconstructor 5004.

FIG. 51 is a flowchart illustrating a specific example of decoding processing according to the present embodiment.

In step S5101, reconstructor 5004 determines whether information indicating that transform coefficients of displacement vectors within a frame were encoded using inter prediction is added to a header. The information is, for example, information indicating that disp_frame_inter_mode is 1. If it is determined that the information is added to the header (Yes in step S5101), the process proceeds to step S5102; otherwise (No in step S5101), the process proceeds to step S5111.

In step S5102, reconstructor 5004 determines that transform coefficients of displacement vectors within the frame were encoded using inter prediction, decodes the transform coefficients by adding transform coefficients of the reference frame to the prediction residual provided from inverse quantizer 5003, and outputs the transform coefficients.

In step S5111, reconstructor 5004 determines that transform coefficients of displacement vectors within the frame were encoded without using inter prediction, and outputs the transform coefficients provided from inverse quantizer 5003.

FIG. 52 is a flowchart illustrating a specific example of encoding processing according to the present embodiment.

The encoding processing illustrated in FIG. 52 illustrates an example in which a unit of inter prediction of displacement vectors is determined for each LoD, and information disp_lod_inter_mode indicating whether inter prediction was applied for each LoD is added to the header. With this, inter prediction can be switched on or off for each LoD, and encoding efficiency can be improved. For example, there are cases where inter prediction is more likely to be accurate for fine movements and less likely to be accurate for coarse movements, and in such cases, encoding efficiency can be improved by turning inter prediction on in lower layers where high-frequency components of the LoD hierarchy are concentrated and turning inter prediction off in upper layers where low-frequency components are concentrated.

In step S5201, inter predictor 4805 performs start processing for loop A that repeatedly executes the processing of steps S5202 to S5206 and steps S5211 to S5212 described below. In loop A, focus is placed on each of the one or more LoDs, processing is performed for the focused LoD, and ultimately control is carried out so that processing is performed for all LoDs. Note that the LoD being focused on is also referred to as the focused LoD. Loop A can also be referred to as an LoD loop.

In step S5202, inter predictor 4805 calculates a sum (also referred to as sum_lod_nointer) within the focused LoD of transform coefficients of displacement vectors.

In step S5203, inter predictor 4805 calculates a sum (also referred to as sum_lod_inter) within the focused LoD of prediction residuals when inter prediction is applied to transform coefficients of displacement vectors.

In step S5204, inter predictor 4805 determines whether sum_lod_inter calculated in step S5203 is smaller than sum_lod_nointer calculated in step S5202. If it is determined that sum_lod_inter is smaller than sum_lod_nointer (Yes in step S5204), the process proceeds to step S5205; otherwise (No in step S5204), the process proceeds to step S5211.

In step S5205, inter predictor 4805 determines to encode transform coefficients of displacement vectors within the focused LoD using inter prediction, and outputs the prediction residual to quantizer 4806.

In step S5206, inter predictor 4805 adds, to a header (for example, a header of a stream), information indicating that transform coefficients of displacement vectors within the focused LoD were encoded using inter prediction. For example, by setting disp_lod_inter_mode(i), which is included in the header and indicates that transform coefficients of displacement vectors were encoded using inter prediction, to 1, it can be indicated that transform coefficients of displacement vectors within the focused LoD were encoded using inter prediction. Note that i is the ordinal number of the focused LoD and indicates which LoD the focused LoD is. The same applies hereinafter.

In step S5211, inter predictor 4805 determines to encode transform coefficients of displacement vectors within the focused LoD without using inter prediction, and outputs the transform coefficients to quantizer 4806.

In step S5212, inter predictor 4805 adds, to a header, information indicating that transform coefficients of displacement vectors within the focused LoD were encoded without using inter prediction. For example, by setting disp_lod_inter_mode(i), which is included in the header and indicates that transform coefficients of displacement vectors were encoded using inter prediction, to 0, it can be indicated that transform coefficients of displacement vectors within the focused LoD were encoded without using inter prediction.

In step S5207, inter predictor 4805 performs end processing for loop A. More specifically, inter predictor 4805 determines whether the processing of steps S5202 to S5206 and steps S5211 to S5212 (where only one of the processing of steps S5205 and S5206 and the processing of steps S5211 and S5212 is performed depending on the determination result of step S5204) has been executed for all LoDs, and if not executed, controls so that processing is executed by focusing on an LoD that has not yet been executed.

FIG. 53 is a flowchart illustrating a specific example of decoding processing according to the present embodiment.

The decoding processing illustrated in FIG. 53 illustrates an example in which a bitstream encoded by determining a unit of inter prediction of displacement vectors for each LoD and adding information disp_lod_inter_mode indicating whether inter prediction was applied for each LoD to the header is decoded. With this, inter prediction can be switched on or off for each LoD, which can contribute to appropriately decoding a bitstream with improved encoding efficiency.

In step S5301, reconstructor 5004 performs start processing for loop A that repeatedly executes the processing of steps S5302 to S5203 and step S5311 described below. In loop A, focus is placed on each of the one or more LoDs, processing is performed for the focused LoD, and ultimately control is carried out so that processing is performed for all LoDs. Note that the LoD being focused on is also referred to as the focused LoD. Loop A can also be referred to as an LoD loop.

In step S5302, reconstructor 5004 determines whether information indicating that transform coefficients of displacement vectors within the focused LoD were encoded using inter prediction is added to a header. The information is, for example, information indicating that disp_lod_inter_mode(i) is 1. If it is determined that the information is added to the header (Yes in step S5302), the process proceeds to step S5303; otherwise (No in step S5302), the process proceeds to step S5311.

In step S5303, reconstructor 5004 determines that transform coefficients of displacement vectors within the focused LoD were encoded using inter prediction, decodes the transform coefficients by adding transform coefficients of the reference frame to the prediction residual provided from inverse quantizer 5003, and outputs the transform coefficients.

In step S5311, reconstructor 5004 determines that transform coefficients of displacement vectors within the focused LoD were encoded without using inter prediction, and outputs the transform coefficients provided from inverse quantizer 5003.

In step S5304, reconstructor 5004 performs end processing for loop A. More specifically, reconstructor 5004 determines whether the processing of steps S5302 to S5203 and step S5311 (where only one of the processing of step S5203 and the processing of step S5311 is performed depending on the determination result of step S5302) has been executed for all LoDs, and if not executed, controls so that processing is executed by focusing on an LoD that has not yet been executed.

FIG. 54 is an explanatory diagram illustrating an example of syntax according to the present embodiment.

The example of syntax illustrated in FIG. 54 illustrates an example of the configuration of information included in a bitstream generated by the encoding device.

The syntax illustrated in FIG. 54 includes displacement vector_header. displacement vector_header includes disp_frame_inter_mode.

disp_frame_inter_mode is information indicating whether displacement vectors within a frame were encoded using inter prediction. For example, a value of 1 may indicate that displacement vectors within the frame were encoded using inter prediction, and a value of 0 may indicate that displacement vectors within the frame were encoded without using inter prediction. With this, the decoding device can determine whether displacement vectors within the frame were encoded using inter prediction, and can appropriately decode the bitstream.

Note that the unit to which disp_frame_inter_mode is added is not limited to frame units. For example, disp_frame_inter_mode may be added in submesh units. With this, encoding efficiency can be improved by switching whether inter prediction is used on a submesh-by-submesh basis. For example, encoding efficiency can be improved by using inter prediction for submeshes with small movements such as background objects, and not using inter prediction for submeshes with large movements such as foreground objects.

Moreover, disp_frame_inter_mode may be added in sequence units. Accordingly, the code amount of the header can be reduced. For example, when encoding a sequence with small movements overall, inter prediction is used for the entire sequence, and when encoding a sequence with large movements overall, inter prediction is not used for the entire sequence. With this, encoding efficiency can be improved while inhibiting the code amount of the header. Note that when inter prediction is used for the entire sequence, disp_frame_inter_mode and disp_lod_inter_mode need not be added to the header. Accordingly, the code amount of the header can be reduced.

FIG. 55 is an explanatory diagram illustrating an example of syntax according to the present embodiment.

The syntax illustrated in FIG. 55 includes displacement vector_header. displacement vector_header includes disp_lod_inter_mode[i].

disp_lod_inter_mode[i] is information indicating whether displacement vectors that belong to the i-th LoD were encoded using inter prediction when generating LoDs and encoding displacement vectors. For example, a value of 1 may indicate that displacement vectors of three-dimensional points that belong to the i-th LoD were encoded using inter prediction, and a value of 0 may indicate that displacement vectors of three-dimensional points that belong to the i-th LoD were encoded without using inter prediction. With this, the decoding device can determine whether displacement vectors of three-dimensional points belonging to the i-th LoD were encoded using inter prediction, and can appropriately decode the bitstream.

FIG. 56 is an explanatory diagram illustrating an example of syntax according to the present embodiment.

The syntax illustrated in FIG. 56 includes displacement vector_header. displacement vector_header includes disp_frame_inter_mode, disp_lod_inter_mode_present, and disp_lod_inter_mode[i].

disp_frame_inter_mode is the same as disp_frame_inter_mode illustrated in FIG. 54.

disp_lod_inter_mode_present indicates whether disp_lod_inter_mode is included in the header. For example, a value of 1 indicates that disp_lod_inter_mode is included in the header, and a value of 0 indicates that disp_lod_inter_mode is not included in the header. Note that when disp_frame_inter_mode=1, since inter prediction is performed in units of frames, the value of disp_lod_inter_mode_present is inferred to be 0, and disp_lod_inter_mode need not be added to the header. Accordingly, the code amount of the header can be reduced.

disp_lod_inter_mode[i] is the same as disp_lod_inter_mode[i] illustrated in FIG. 55.

Note that when disp_frame_inter_mode=0, the value of disp_lod_inter_mode_present may be omitted, and disp_lod_inter_mode[i] may be included in the header regardless of the value of disp_lod_inter_mode_present.

Note that disp_frame_inter_mode, disp_lod_inter_mode, or disp_lod_inter_mode_present may be entropy encoded and added to the header. For example, each value may be binarized and arithmetic encoding may be performed. It may encode with a fixed length to reduce the processing amount.

FIG. 57 is a block diagram illustrating a configuration example of the encoding device according to the present embodiment.

The encoding device illustrated in FIG. 57 includes decimator 5701, subdivider 5702, displacement vector calculator 5703, wavelet transformer 5704, LoD-based inter predictor 5705, quantizer 5706, switch 5707, image packer 5708, video encoder 5709, arithmetic encoder 5710, inverse quantizer 5711, reconstructor 5712, and reference buffer 5713.

Decimator 5701, subdivider 5702, and displacement vector calculator 5703 are the same as decimator 4801, subdivider 4802, and displacement vector calculator 4803 illustrated in FIG. 48, respectively.

Wavelet transformer 5704 obtains transform coefficients (also referred to as wavelet coefficients) by performing wavelet transformation processing on the displacement vectors calculated by displacement vector calculator 5703. Wavelet transformer 5704 provides the obtained wavelet coefficients to LoD-based inter predictor 5705. In wavelet transformation, wavelet transformer 5704 can calculate wavelet coefficients representing various components from low-frequency components to high-frequency components by assigning vertices to a plurality of LoD layers and applying, for example, lifting transformation to the displacement vectors of the vertices.

LoD-based inter predictor 5705 outputs, for each LoD, a prediction residual of wavelet coefficients of displacement vectors of a frame to be encoded by using inter prediction. More specifically, LoD-based inter predictor 5705 outputs, for each LoD, a prediction residual of wavelet coefficients of displacement vectors of a frame to be encoded by performing inter prediction on the wavelet coefficients of displacement vectors of the frame to be encoded using wavelet coefficients of displacement vectors of an encoded frame (also referred to as a reference frame) stored in reference buffer 5713. LoD-based inter predictor 5705 can determine, for each LoD, whether or not to encode transform coefficients of displacement vectors using inter prediction, and switch accordingly.

Quantizer 5706 quantizes a prediction residual of wavelet coefficients calculated by LoD-based inter predictor 5705. Quantizer 5706 quantizes a prediction residual of wavelet coefficients for each LoD layer. Quantizer 5706 provides the quantized prediction residual to image packer 5708 or arithmetic encoder 5710 via switch 5707, and also provides the quantized prediction residual to inverse quantizer 5711.

Switch 5707 is a switch that switches whether to provide the prediction residual quantized by quantizer 5706 to image packer 5708 or to arithmetic encoder 5710.

Image packer 5708 and video encoder 5709 are the same as image packer 4807 and video encoder 4808 illustrated in FIG. 48, respectively.

Arithmetic encoder 5710 encodes the prediction residual quantized by quantizer 5706 into a bitstream (also referred to as a displacement bitstream) by arithmetic encoding (in other words, generates a displacement bitstream). Arithmetic encoder 5710 outputs the displacement bitstream.

Inverse quantizer 5711 generates a prediction residual of wavelet coefficients by performing inverse quantization on the prediction residual quantized by quantizer 5706. More specifically, inverse quantizer 5711 generates a prediction residual by performing, per LoD layer, inverse quantization on the prediction residual quantized for each LoD layer by quantizer 5706. Inverse quantizer 5711 provides the generated prediction residual of wavelet coefficients to reconstructor 5712.

Reconstructor 5712 restores (also referred to as reconstructs) wavelet coefficients from the prediction residual of wavelet coefficients provided from inverse quantizer 5711 and the reference frame stored in reference buffer 5713. Reconstructor 5712 stores the restored wavelet coefficients in reference buffer 5713.

Reference buffer 5713 is a storage device, and stores, for example, wavelet coefficients of a reference frame. The wavelet coefficients stored in reference buffer 5713 can be used for inter prediction by LoD-based inter predictor 5705.

The encoding device illustrated in FIG. 57 can switch between encoding transform coefficients of displacement vectors using video encoder 5709 or encoding by arithmetic encoding using arithmetic encoder 5710. With this, the encoding device can efficiently encode displacement vectors using arithmetic encoding even when video encoder 5709 cannot be used.

Note that even when arithmetic encoding is used, the transform coefficients of the displacement vectors may be encoded by switching whether to use inter prediction for each LoD. In general, arithmetic encoding can compress more efficiently as the change in input values decreases, so by inhibiting the change in values of the prediction residuals of the transform coefficients of the displacement vectors through inter prediction for each LoD, the encoding efficiency can be improved.

Information indicating whether the transform coefficients of the displacement vectors were encoded using video encoder 5709 or encoded by arithmetic encoding using arithmetic encoder 5710 may be added to the header. With this, the decoding device can appropriately switch the decoding method by referencing the header information.

Note that in FIG. 57, the case of switching between encoding transform coefficients of displacement vectors using video encoder 5709 or encoding by arithmetic encoding using arithmetic encoder 5710 was described as an example, but a configuration that always uses arithmetic encoding may be used. According to this configuration, encoding efficiency may be able to be improved compared to using inter prediction in all LoD levels when performing arithmetic encoding on the transform coefficients of the displacement vectors.

The decoding device illustrated in FIG. 58 includes video decoder 5801, image unpacker 5802, arithmetic decoder 5803, switch 5804, inverse quantizer 5805, reconstructor 5806, inverse wavelet transformer 5807, reconstructor 5808, and reference buffer 5811.

Video decoder 5801 and image unpacker 5802 are the same as video decoder 5001 and image unpacker 5002 illustrated in FIG. 50, respectively.

Arithmetic decoder 5803 obtains the displacement bitstream and performs arithmetic decoding on the prediction residual included in the acquired displacement bitstream. Note that arithmetic decoder 5803 may decode various header information.

Switch 5804 is a switch that switches whether to provide the prediction residual provided by image unpacker 5802 to inverse quantizer 5805 or to provide the prediction residual provided by arithmetic decoder 5803 to inverse quantizer 5805.

Inverse quantizer 5805 generates a prediction residual of wavelet coefficients by performing inverse quantization on the quantized prediction residual of wavelet coefficients provided from image unpacker 5802 or arithmetic decoder 5803 via switch 5804. More specifically, inverse quantizer 5805 generates a prediction residual of wavelet coefficients by performing inverse quantization on the quantized prediction residual of wavelet coefficients for each LoD layer.

Reconstructor 5806 restores (also referred to as reconstructs) transform coefficients of the frame to be decoded from the prediction residual of transform coefficients of the frame to be decoded and the transform coefficients of the reference frame. Reconstructor 5806 provides the restored transform coefficients to inverse wavelet transformer 5807 and reference buffer 5811. Reconstructor 5806 may determine whether inter prediction was applied for each LoD from header information, and switch the restoration method.

Inverse wavelet transformer 5807 generates displacement vectors (corresponding to decoded displacement vectors) by performing inverse wavelet transformation processing on the wavelet coefficients provided from reconstructor 5806. The inverse wavelet transformation processing corresponds to the inverse transformation of the wavelet transformation processing performed by wavelet transformer 5704. More specifically, in inverse wavelet transformation, inverse wavelet transformer 5807 can calculate displacement vectors of vertices by applying inverse lifting transformation to the wavelet coefficients.

Inverse wavelet transformer 5807 provides the generated decoded displacement vectors to reconstructor 5808.

Reconstructor 5808 reconstructs a mesh (corresponding to a decoded mesh) using the decoded displacement vectors and the decoded base mesh provided from inverse wavelet transformer 5807. Reconstructor 5808 outputs the reconstructed decoded mesh.

Reference buffer 5811 is a storage device, and stores, for example, wavelet coefficients of a reference frame. The wavelet coefficients stored in reference buffer 5811 can be used for restoring transform coefficients of a frame to be decoded by reconstructor 5806.

The decoding device illustrated in FIG. 58 may decode header information, determine whether the encoding device encoded transform coefficients of displacement vectors using video encoder (e.g., video encoder 5709) or encoded by arithmetic encoding using arithmetic encoder (e.g., arithmetic encoder 5710), and switch the decoding method. With this, the decoding device can appropriately decode a bitstream in which displacement vectors are efficiently encoded using arithmetic encoding even when video encoder (e.g., video encoder 5709) cannot be used.

FIG. 59 is a diagram for describing a positional relationship between three-dimensional points according to the present embodiment.

As an encoding method for a displacement vector of a three-dimensional point, it can be contemplated to calculate a prediction value of a displacement vector of a three-dimensional point and encode the difference (prediction residual) between the original value of the displacement vector and the prediction value. For example, when the value of a displacement vector of three-dimensional point p is Ap, and the prediction value is Pp, encoding device 100 encodes absolute difference value Diffp = |Ap-Pp| that indicates the absolute value of the difference therebetween, and information indicating whether (Ap - Pp) is positive or negative. In this case, if prediction value Pp can be produced with high precision, the value of absolute difference value Diffp decreases. Therefore, for example, if encoding device 100 performs entropy encoding using an encoding table (or context) in which the number of bits produced decreases as the value becomes smaller, the code amount can be reduced.

As a method in which encoding device 100 produces a prediction value of a displacement vector, it can be contemplated to use a displacement vector of another three-dimensional point around the three-dimensional point to be encoded. Here, the "three-dimensional point around the three-dimensional point" refers to another three-dimensional point within a predetermined distance (within a predetermined range) from the three-dimensional point. For example, provided that there are three-dimensional point p = (x1, y1, z1), which is a three-dimensional point to be encoded, and three-dimensional point q = (x2, y2, z2), when Euclidean distance d(p, q) = √((x1 - y1)² + (x2 - y2)² + (x3 - y3)²) between three-dimensional point p and three-dimensional point q is smaller than threshold THd, encoding device 100 determines that the position of three-dimensional point q is close to the position of three-dimensional point p and determines to use the value of the displacement vector of three-dimensional point q for production of the prediction value of the displacement vector of three-dimensional point p.

Note that the distance calculation method may be another method, and the Mahalanobis distance or the like may be used.

Furthermore, for example, encoding device 100 may determine not to use a three-dimensional point at a distance greater than the predetermined distance from the three-dimensional point to be encoded (outside of the predetermined range) for prediction. When there is three-dimensional point r, and distance d(p, r) between three-dimensional point p and three-dimensional point r is equal to or greater than threshold THd, for example, encoding device 100 may determine not to use three-dimensional point r for prediction. Furthermore, the predetermined distance can be arbitrarily determined and is not particularly limited.

Note that encoding device 100 may add the value of threshold THd to the header of the bitstream.

When encoding the displacement vector of the three-dimensional point to be encoded using a prediction value, if a displacement vector of a three-dimensional point around the three-dimensional point used for production of the prediction value is used, for example, encoding device 100 uses an already encoded displacement vector or an already decoded displacement vector.

Furthermore, when decoding the displacement vector of the three-dimensional point to be decoded using a prediction value, if a displacement vector of a three-dimensional point around the three-dimensional point used for production of the prediction value is used, decoding device 200 uses an already decoded displacement vector.

In this way, the same prediction value is produced in encoding and decoding. Therefore, decoding device 200 can correctly decode the bitstream of three-dimensional points produced by encoding device 100.

Note that although the "point around the three-dimensional point" has been described as referring to another three-dimensional point in a predetermined range from the three-dimensional point, this is not intended to be limiting. For example, in the case of three-dimensional point D (that is, vertex D) illustrated in FIG. 47, there are three-dimensional points A, three-dimensional point B, three-dimensional point C, three-dimensional point E, three-dimensional point F, and three-dimensional point G as three-dimensional points around the three-dimensional point, and a three-dimensional point around the three-dimensional point (in other words, an adjacent point) may be selected under one or more of the conditions A and B described below. That is, the adjacent point is a point selected under a condition and is referenced for predicting information of the three-dimensional point to be encoded. The adjacent point may be referred to also as a reference three-dimensional point, a reference point, or a reference vertex, for example.

Condition A: a three-dimensional point having connectivity with the current three-dimensional point.

Condition B: a three-dimensional point encoded or decoded before the current three-dimensional point.

For example, in the case of selecting a three-dimensional point that meets the conditions A and B described above as an adjacent point, when three-dimensional point D and its adjacent points are encoded or decoded in the order of three-dimensional points A, C, E, F, D, B, and G, three-dimensional points A, C, E, and F may be selected as adjacent points of three-dimensional point D. Since three-dimensional points A, C, E, and F have connectivity with three-dimensional point D, the values of the displacement vectors thereof are likely to be close to each other. Furthermore, since three-dimensional points A, C, E, and F are encoded or decoded before three-dimensional point D, the displacement vectors of three-dimensional points A, C, E, and F can be used for calculation of the prediction value of the displacement vector of three-dimensional point D. In this way, the precision of the prediction value of the displacement vector of three-dimensional point D can be improved, and the encoding efficiency can be improved.

Note that as a condition for selecting adjacent points of a three-dimensional point, the number of adjacent points may be limited to be equal to or smaller than a predetermined value (NumNeiCnt), in addition to the conditions A and B described above. For example, by setting NumNeiCnt = 3, the number of adjacent points of a three-dimensional point may be limited to 3 or less. In this way, the memory space for storing the information of the adjacent points of the three-dimensional point can be reduced, and the processing amount for calculating the predicted displacement vector can be reduced. Note that the predetermined value can be arbitrarily determined and is not particularly limited.

Furthermore, for example, encoding device 100 may add the predetermined value described above, or in other words, NumNeiCnt indicating the maximum value of the number of adjacent points, to the bitstream by adding the predetermined value to the header of the data unit before encoding, for example.

In this way, decoding device 200 can properly decode the bitstream with the maximum number of adjacent points limited to NumNeiCnt or less by decoding the header of the bitstream.

Note that when there are a larger number of three-dimensional points that meet the conditions A and B described above than NumNeiCnt as adjacent points, adjacent points may be selected in ascending order of the distance from the three-dimensional point to be encoded or decoded. For example, in the case where NumNeiCnt = 3, as adjacent points of three-dimensional point D, if there are four three-dimensional points A, C, E, and F that meet the conditions A and B described above, and the ascending order of the distance from three-dimensional point D is A > C > E > F, three-dimensional points A, C, and E may be selected as adjacent points of three-dimensional point D. Three-dimensional points A, C, and E have connectivity with three-dimensional point D and are close to three-dimensional point D, so that the values of the displacement vectors thereof are likely to be close to the value of the displacement vector of three-dimensional point D. In addition, three-dimensional points A, C, and E are encoded or decoded before three-dimensional point D. Therefore, the displacement vectors of three-dimensional points A, C, and E can be used for calculation of the prediction value of the displacement vector of three-dimensional point D.

In this way, the precision of the prediction value of the displacement vector of three-dimensional point D can be improved. In addition, since the number of adjacent points is limited, the memory space for storing information on the adjacent points of the three-dimensional point can be reduced, and the processing amount for calculating the predicted displacement vector can be reduced.

Note that the method for selecting adjacent points of a three-dimensional point is not limited to the above, and for example, if the three-dimensional point to be encoded is a three-dimensional point Z generated by subdivision from three-dimensional points X and Y that constitute the base mesh, three-dimensional points X and Y of the base mesh may be used as adjacent points of three-dimensional point Z. Basically, when three-dimensional point Z is generated by subdivision from three-dimensional points X and Y, three-dimensional point Z exists on a straight line connecting three-dimensional point X and three-dimensional point Y, and therefore three-dimensional points X and Y are adjacent points of three-dimensional point Z. The displacement vector of three-dimensional point Z is likely to be close in value to the displacement vectors of three-dimensional points X and Y, and encoding efficiency can be improved by calculating the prediction value of the displacement vector of three-dimensional point Z using the displacement vectors of three-dimensional points X and Y as adjacent points.

Hereinafter, the method for generating LoD will be described.

FIG. 60 and FIG. 61 are explanatory diagrams each illustrating a method of generating LoD according to the present embodiment.

When encoding displacement vectors of three-dimensional points, the encoding device may classify each three-dimensional point into one or more hierarchical layers using position information of the three-dimensional points before encoding. Here, each hierarchical layer used for classification is called Level of Detail (LoD). LoD is assigned an identifier (for example, a number) that uniquely indicates the LoD. For example, the 0th LoD is also called LoD0, the 1st LoD is also called LoD1, the n-th LoD is also called LoDn, and the (n-1)th LoD is also called LoD(n-1).

The method for generating LoD will be described using FIG. 60 and FIG. 61. Note that when the encoding device or decoding device cannot calculate position information or distance information of three-dimensional points in a frame to be encoded or to be decoded, position information or distance information of three-dimensional points corresponding to the above three-dimensional points in a frame that has already been encoded or decoded may be used. In this way, three-dimensional points to be encoded or to be decoded may be able to be classified into one or more hierarchical layers and efficiently encoded.

FIG. 60 illustrates three-dimensional points to be encoded, namely point a0, point a1, point a2, point b0, point b1, point b2, point c0, point c1, and point c2. Note that d(x, y) indicates the distance between point x and point y.

By setting the threshold values for each layer of LoD to be larger for higher layers (layers closer to LoD0), the higher layers become point clouds with greater distances between three-dimensional points (also called sparse point clouds), and the lower layers become point clouds with shorter distances between three-dimensional points (also called dense point clouds). Here, LoD0 is the highest layer (see FIG. 61).

Point y belongs to the same LoD as point x when the distance d(x, y) from point x is greater than the threshold of the LoD to which point x belongs and is less than or equal to the threshold of the LoD above that LoD. Note that when point x belongs to LoD0, which is the highest layer, point y belongs to the same LoD as point x when the distance d(x, y) from point x is greater than the threshold of the LoD to which point x belongs.

First, the encoding device selects point a0 as an initial point and assigns it to LoD0. Next, the encoding device extracts point a1 whose distance from point a0 is greater than the threshold Thres_Lod[0] of LoD0 and assigns it to LoD0. Next, the encoding device extracts point a2 whose distance from point a1 is greater than the threshold Thres_Lod[0] of LoD0 and assigns it to LoD0. In this way, the encoding device configures LoD0 such that the distance between each point within LoD0 is greater than the threshold Thres_Lod[0].

Next, the encoding device selects point b0 to which a LoD has not yet been assigned and assigns it to LoD1. Next, the encoding device selects point b1 whose distance from point b0 is greater than the threshold Thres_Lod[1] of LoD1 and to which no LoD has been assigned yet, and assigns it to LoD1. Next, the encoding device selects point b2 whose distance from point b1 is greater than the threshold Thres_Lod[1] of LoD1 and to which no LoD has been assigned yet, and assigns it to LoD1. In this way, the encoding device configures LoD1 such that the distance between each point within LoD1 is greater than the threshold Thres_Lod[1].

Next, the encoding device selects point c0 to which a LoD has not yet been assigned and assigns it to LoD2. Next, the encoding device selects point c1 whose distance from point c0 is greater than the threshold Thres_Lod[2] of LoD2 and to which no LoD has been assigned yet, and assigns it to LoD2. Next, the encoding device selects point c2 whose distance from point c1 is greater than the threshold Thres_Lod[2] of LoD2 and to which no LoD has been assigned yet, and assigns it to LoD2. In this way, LoD2 is configured such that the distance between each point within LoD2 is greater than the threshold Thres_Lod[2].

The threshold of each LoD may be added to the header of the bitstream. For example, in the case of FIG. 60, the thresholds Thres_Lod[0], Thres_Lod[1], and Thres_Lod[2] may be added to the header of the bitstream.

All three-dimensional points to which no LoD has been assigned yet may be assigned to the lowest layer of LoD. In such cases, this has the advantageous effect that the code amount of the header can be reduced by not adding the threshold of the lowest layer of LoD to the header. For example, in the case of FIG. 60, the encoding device may add the thresholds Thres_Lod[0] and Thres_Lod[1] to the header while not adding Thres_Lod[2] to the header, and the decoding device may estimate Thres_Lod[2] as the value 0.

The number of LoD layers may be added to the header. Accordingly, whether the LoD is the lowest layer can be determined by the decoding device.

Note that when the LoD hierarchy has one layer, that is, when encoding displacement vectors of three-dimensional points without generating LoD, the encoding device may omit the LoD generation processing described in the above example. Alternatively, the encoding device may apply the LoD generation method described in the above example with the LoD hierarchy set to 1. In such cases, the encoding device may execute the LoD generation processing assuming that all three-dimensional points belong to the same LoD. Accordingly, the encoding device can reduce the processing time for generating the LoD.

Note that the displacement vector encoding or decoding described in the present embodiment may also be applied to methods other than the LoD generation method described above. For example, even when the LoD hierarchy to which three-dimensional points belong is predetermined, encoding efficiency may be improved by applying the displacement vector encoding method or decoding method described in the present embodiment.

Note that the method for generating LoD is not limited to the above method; for example, as illustrated in FIG. 35 and FIG. 36, the LoD to which a point belongs may be determined according to the number of times it has been subdivided from the base mesh. For example, when the number of subdivisions from the base mesh is two, first, the three-dimensional points included in the base mesh may be assigned to LoD0, points generated by one subdivision from the three-dimensional points of the base mesh may be assigned to LoD1, and points generated by two subdivisions may be assigned to LoD2. Accordingly, the processing time for generating the LoD can be reduced.

The selection method for initial three-dimensional points when configuring each LoD may depend on the encoding order during displacement vector encoding. For example, the encoding device selects, as initial point a0 of LoD0, the three-dimensional point that was first encoded during displacement vector encoding, and selects points a1 and a2 based on point a0 to configure LoD0. The encoding device may then select, as initial point b0 of LoD1, the three-dimensional point whose displacement vector was encoded earliest among the three-dimensional points that do not currently belong to LoD0. Stated differently, the encoding device may select, as initial point n0 of LoDn, the three-dimensional point whose displacement vector was encoded earliest among the three-dimensional points that do not belong to LoDs at layers LoD(n-1) and below. Accordingly, during decoding as well, by using a similar initial point selection method (specifically, a method of selecting, as initial point n0 of LoDn, the three-dimensional point whose displacement vector was decoded earliest among the three-dimensional points that do not belong to LoDs at layers LoD(n-1) and below), the same LoD as during encoding can be configured, and the bitstream can be appropriately decoded.

FIG. 62 is an explanatory diagram illustrating a method for generating a prediction value of a displacement vector according to the present embodiment.

The encoding device can generate a prediction value of a displacement vector of a three-dimensional point using LoD information.

The encoding device may, for example, when encoding in order starting from the three-dimensional points included in LoD0, generate LoD1 using the encoded and decoded displacement vectors included in LoD0 and LoD1. In this way, the encoding device can generate a prediction value of a displacement vector of a three-dimensional point included in LoDn using the encoded and decoded displacement vectors included in LoDn' (where n'≤n).

The prediction value of a displacement vector of a three-dimensional point can be generated by calculating an average of displacement vectors of a certain number or fewer of three-dimensional points among the three-dimensional points that are encoded and decoded adjacent points of the three-dimensional point to be encoded. The certain number is, for example, the number of adjacent points of the three-dimensional point to be encoded (for example, N points). In such cases, the value N is added to the header or the like of the bitstream.

Note that the value N indicating the number of adjacent points (i.e., N points) used for calculating the prediction value may be added for each three-dimensional point that generates a prediction value. With this, the encoding device can select appropriate N adjacent points for each three-dimensional point that is a target for generating a prediction value, so the accuracy of the prediction value can be improved and the prediction residual can be reduced. The encoding device may also add the value N to the header of the bitstream and fix it within the bitstream (in other words, the value N may be commonly used as a fixed value in encoding of three-dimensional points included in the bitstream). With this, the encoding device no longer needs to encode or decode the value N for each three-dimensional point, so the processing amount can be reduced. The encoding device may also encode the value N separately for each LoD. With this, the encoding device may be able to improve encoding efficiency by selecting an appropriate value N for each LoD.

The prediction value of a displacement vector of a three-dimensional point may be calculated from a weighted average value of N encoded and decoded adjacent points. The encoding device may, for example, perform weighted averaging using distance information between the three-dimensional point to be encoded and each of the N adjacent points. This will be described with reference to FIG. 62.

When the encoding device performs encoding using separate values N for each LoD, the encoding device may, for example, set the value of N to be larger for higher layers of LoD and set the value of N to be smaller for lower layers. In higher layers of LoD, since the distances between three-dimensional points belonging to the LoD are relatively large, by setting the value of N to be large, it may be possible to improve prediction accuracy by selecting and averaging a relatively large number of surrounding three-dimensional points. In lower layers of LoD, since the distances between three-dimensional points belonging to the LoD are relatively small, by setting the value of N to be small, it may be possible to perform efficient prediction while inhibiting the processing amount of averaging.

The prediction value of point P belonging to LoDN is generated from reconstructed point P' belonging to LoDN' (where N'≤N). Here, suppose that adjacent points are selected with point P' based on connectivity and distance.

Note that the prediction value of a displacement vector may be calculated from an unweighted average value. Accordingly, the processing amount can be reduced.

As illustrated in FIG. 62, point a2 is predicted from point a0 and point a1. Point b2 is predicted from point a0, point a1, point a2, point b0, and point b1. Note that the points selected as adjacent points to be used for prediction may change depending on the number N of adjacent points used for prediction. For example, when N=5, point a0, point a1, point a2, point b0, and point b1 are selected as adjacent points of point b2, and when N=4, point a0, point a1, point a2, and point b1 may be selected based on distance information.

Note that as one example, the three-dimensional points included in the base mesh are included in LoD0, the three-dimensional points generated by one subdivision from the three-dimensional points of the base mesh are included in LoD1, and the three-dimensional points generated by two subdivisions from the three-dimensional points of the base mesh are included in LoD2.

For example, when a weighted average value of adjacent points is used for prediction, prediction value a2p of point a2 is calculated from a weighted average of point a0 and point a1 (see Expression 1 and Expression 2). Here, Aᵢ is the value of the displacement vector of point ai.
[Math. 1] $a 2 p = {\sum }_{i = 0}^{1} {w}_{i} \times {A}_{i}$ (Expression 1)
where
[Math. 2] ${w}_{i} = \frac{1 / d \left(a2,ai\right)}{{\sum }_{j = 0}^{1} 1 / d \left(a2,aj\right)}$ (Expression 2)

Prediction value b2p of point b2 is calculated from a weighted average of point a0, point a1, point a2, point b0, and point b1 (see Expression 3, Expression 4, and Expression 5). Here, Bᵢ is the value of the displacement vector of point bi.
[Math. 3] $b 2 p = {\sum }_{i = 0}^{2} {wa}_{i} \times {A}_{i} + {\sum }_{i = 0}^{1} {wb}_{i} \times {B}_{i}$ (Expression 3)
where
[Math. 4] ${wa}_{i} = \frac{1 / d \left(b2,ai\right)}{{\sum }_{j = 0}^{2} 1 / d \left(b2,aj\right) + {\sum }_{j = 0}^{1} 1 / d \left(b2,bj\right)}$ (Expression 4)
[Math. 5] ${wb}_{i} = \frac{1 / d \left(b2,bi\right)}{{\sum }_{j = 0}^{2} 1 / d \left(b2,aj\right) + {\sum }_{j = 0}^{1} 1 / d \left(b2,bj\right)}$ (Expression 5)

Note that when generating the prediction value of a displacement vector, reference to the same hierarchical layer may not be made. Accordingly, the processing amount can be reduced. When generating a three-dimensional point by subdivision at an intermediate position between two three-dimensional points, weight wᵢ may be fixed to 0.5. Accordingly, the processing amount can be reduced.

When encoding values of displacement vectors of three-dimensional points, the encoding device may calculate a difference value (also referred to as a transform coefficient, see Expression 6 and Expression 7 below) between a prediction value generated from adjacent points of the three-dimensional point and the three-dimensional point, and encode using quantization of the calculated transform coefficient. Here, transform coefficient a2c is the transform coefficient of point a2, and transform coefficient b2c is the transform coefficient of point b2.
[Math. 6] $a 2 c = {A}_{2} - a 2 p$ (Expression 6)
[Math. 7] $b 2 c = {B}_{2} - b 2 p$ (Expression 7)

For example, the encoding device can perform quantization by dividing the transform coefficient by a quantization scale. In such cases, the smaller the quantization scale, the smaller the error (quantization error) that can occur due to quantization, and conversely, the larger the quantization scale, the larger the quantization error.

The value obtained by quantizing transform coefficient a2c is defined as quantization value a2q, and the value obtained by quantizing transform coefficient b2r is defined as quantization value b2q (see Expression 8 and Expression 9 below). QS_LoD0 is the quantization scale of LoD0, and QS_LoD1 is the quantization scale of LoD1.
[Math. 8] $a 2 q = \frac{a 2 c + \frac{QS _ LoD 0}{2}}{QS _ LoD 0}$ (Expression 8)
[Math. 9] $b 2 q = \frac{b 2 c + \frac{QS _ LoD 1}{2}}{QS _ LoD 1}$ (Expression 9)

Note that the encoding device may change the value of the quantization scale for each LoD. For example, the quantization scale can be made smaller for higher-layer LoDs and larger for lower-layer LoDs. Since there is a possibility the displacement vector values of three-dimensional points belonging to higher layers may be used as prediction values for displacement vectors of three-dimensional points belonging to lower layers, encoding efficiency can be improved by reducing the quantization scale of higher layers to inhibit quantization errors that can occur in higher layers and thereby improve the accuracy of prediction values. Note that the encoding device may add the quantization scale to a header or the like for each LoD. Accordingly, the encoding device can contribute to the decoding device correctly decoding the quantization scale and appropriately decoding the bitstream.

Note that the encoding device may convert the transform coefficients after quantization from a signed integer value to an unsigned integer value. For example, the encoding device may convert quantization value a2q, which is a signed integer value, to quantization value a2u, which is an unsigned integer value, as follows.

When quantization value a2q is less than 0; a2u = -1 - (2 × a2q)
In other ca $a 2 u = 2 \times a 2 q$ (Expression 10)

For example, the encoding device may convert quantization value b2q, which is a signed integer value, to quantization value b2u, which is an unsigned integer value, as follows.

When quantization value b2q is less than 0; b2u = -1 - (2 × b2q)
In other cas $b 2 u = 2 \times b 2 q$ (Expression 11)

With this, the encoding device has the advantage that it does not need to consider the occurrence of negative integers when entropy encoding the transform coefficients.

Note that the encoding device does not necessarily need to convert from a signed integer value to an unsigned integer value, and may, for example, separately entropy encode the sign bit.

Note that the encoding method for the transform coefficient is not limited to this, and for example, the encoding device may arithmetically encode a sign bit representing the positive or negative of the transform coefficient and binarized data of the absolute value of the transform coefficient on a bit-by-bit basis using context. With this, the encoding device may be able to improve encoding efficiency of the transform coefficients of the displacement vector.

Note that when quantization of the transform coefficients of the displacement vector is not necessary, this processing may be skipped and the transform coefficients may be arithmetically encoded as-is. Accordingly, the processing time can be reduced.

FIG. 63 is an explanatory diagram illustrating an example of calculation of a prediction value according to the present embodiment.

An example of generating LoDs and calculating prediction values of displacement vectors of each three-dimensional point will be described with reference to FIG. 63.

In FIG. 63, points a0, a1, and a2 are three-dimensional points included in the base mesh and belong to LoD0. Points b0 and b1 are three-dimensional points generated by one subdivision from the three-dimensional points included in the base mesh and belong to LoD1. Points c0, c1, c2, and c3 are three-dimensional points generated by two subdivisions from the three-dimensional points included in the base mesh and belong to LoD2.

When point b0 is a three-dimensional point generated by subdivision from point a0 and point a1, the prediction value of the displacement vector of point b0 can be calculated using point a0 and point a1.

When point c2 is a three-dimensional point generated by subdivision from point a1 and point b1, the prediction value of the displacement vector of point c2 can be calculated using point a1 and point b1.

FIG. 64 is an explanatory diagram illustrating an example of calculation of transform coefficients according to the present embodiment.

An example of calculating transform coefficients by subtracting respective prediction values from displacement vectors of each three-dimensional point will be described with reference to FIG. 64.

In FIG. 64, transform coefficients a0c, a1c, and a2c are transform coefficients included in the base mesh and belong to LoD0. Transform coefficients b0c and b1c are three-dimensional points generated by one subdivision from the three-dimensional points included in the base mesh and belong to LoD1. Transform coefficients c0c, c1c, c2c, and c3c are three-dimensional points generated by two subdivisions from the three-dimensional points included in the base mesh and belong to LoD2.

Transform coefficient b0c of point b0 is obtained by subtracting prediction value b0p of point b0 from the value of point b0.$b 0 c = b 0 - b 0 p$

Prediction value b0p may be an average value of the value of point a0 and the value of point a1.$b 0 p = \left(a0+a1\right) / 2$

Transform coefficient c2c of point c2 is obtained by subtracting prediction value c2p of point c2 from the value of point c2.$c 2 c = c 2 - c 2 p$

Prediction value c2p may be an average value of the value of point a1 and the value of point b1.$c 2 p = \left(a1+b1\right) / 2$

Note that an encoding system (lifting transform) may be applied that calculates transform coefficients of displacement vectors of three-dimensional points included in a lower layer of LoD, and feeds back the transform coefficients to an upper layer for encoding. By applying lifting transformation, transform coefficients of low-frequency components of displacement vectors can be concentrated in upper layers, and transform coefficients of high-frequency components of displacement vectors can be concentrated in lower layers. With this, for example, encoding efficiency can be improved by reducing the amount of information of transform coefficients of high-frequency components of lower layers through quantization.

FIG. 65 is an explanatory diagram illustrating an example of inter prediction of transform coefficients according to the present embodiment.

Transform coefficients of displacement vectors of three-dimensional points may be inter-predicted using transform coefficients of displacement vectors of a frame that is temporally different from the frame to be encoded. This will be described with reference to FIG. 65.

Transform coefficients of displacement vectors of three-dimensional points can conceivably be inter-predicted using, for example, transform coefficients of displacement vectors of a frame that was encoded or decoded immediately before.

For example, when Frame (t), which is a frame at time t, is the frame to be encoded, inter prediction may be performed using transform coefficients of displacement vectors of Frame (t-1), which is the frame that was encoded or decoded immediately before, that is, the frame at time t-1.

More specifically, one approach would be to encode a0c, which is a transform coefficient of a displacement vector of three-dimensional point a0 in Frame (t), using inter prediction with a0c', which is a transform coefficient of a displacement vector of a0' corresponding to three-dimensional point a0 in Frame (t-1). More specifically, one approach would be to encode a value obtained by subtracting a0c' from a0c. When three-dimensional point a0 of Frame (t) and three-dimensional point a0' of Frame (t-1) correspond between frames, the displacement vector values are likely to be close, so by subtracting a0c' from a0c, the transform coefficients can be further reduced, and encoding efficiency by entropy encoding can be improved.

Inter prediction is not limited to referencing the frame that was encoded immediately before, and may reference any frame. In such cases, information on the referenced frame may be added to the header. With this, the decoding device can reference the same frame that the encoding device referenced and appropriately decode the bitstream. Multiple frames may be referenced for inter prediction. For example, encoding efficiency can be improved by using bi-prediction using two reference frames. When bi-prediction is used, an average value of the transform coefficients of the displacement vectors of the two reference frames may be used as the inter prediction value. With this, prediction values can be generated with high precision, and encoding efficiency can be improved.

Information disp_inter_mode indicating whether to apply inter prediction to the transform coefficients of the displacement vectors may be added to the header. With this, for example, when the change in motion between frames is large and three-dimensional points between frames do not correspond, inter prediction of the transform coefficients of the displacement vectors is turned off (for example, disp_inter_mode=0), and when the change in motion between frames is small and three-dimensional points between frames correspond, inter prediction is turned on (for example, disp_inter_mode=1), and by adaptively controlling turning on or off of inter prediction in this manner, encoding efficiency can be improved.

When the adaptive switching of inter prediction is in units of frames, disp_frame_inter_mode may be added to the header that stores frame information, and when in units of sequences, disp_seq_inter_mode may be added to the header that stores sequence information. With this, inter prediction of the transform coefficients of the displacement vectors can be controlled to be turned on or off in units of frames or units of sequences, and encoding efficiency can be improved.

Information disp_lod_inter_mode indicating whether to apply inter prediction to the transform coefficients of the displacement vectors may be prepared for each LoD, and whether to apply inter prediction may be switched for each LoD. For example, the encoding device may compare, for each LoD, the generated code amount when inter prediction is applied to the transform coefficients of the displacement vectors and when inter prediction is not applied, select the one with the smaller generated code amount, and add that information to the header. The decoding device decodes the transform coefficients of the displacement vectors according to the information added to the header. With this, encoding efficiency can be improved by switching whether to apply inter prediction for each LoD.

The encoding device can decode the transform coefficients after quantization by inverse quantization and reconstruction, and use it for prediction of three-dimensional points to be encoded subsequent to the encoding target three-dimensional point. More specifically, the encoding device can calculate an inverse quantization value by multiplying the transform coefficient after quantization by a quantization scale, and obtain a decoded value by adding the inverse quantization value and the prediction value. For example, the encoding device can calculate inverse quantization value a2iq from quantization value a2q as follows, and can also calculate inverse quantization value b2iq from quantization value b2q as follows.$\begin{matrix}a 2 iq = a 2 q \times QS_LoD 0 \\ b 2 iq = b 2 q \times QS_LoD 1\end{matrix}$ (Expression 12)

The encoding device can calculate reconstructed value a2rec from inverse quantization value a2iq as follows, and can also calculate reconstructed value b2rec from inverse quantization value b2iq as follows.$\begin{matrix}a 2 rec = a 2 iq + a 2 p \\ b 2 rec = b 2 iq + b 2 p\end{matrix}$ (Expression 13)

Note that the present embodiment shows a method in which the encoding device configures one or more LoDs to generate prediction values of displacement vectors of three-dimensional points, but the method is not necessarily limited thereto. For example, the method may be applied when configuring a single-layer LoD to generate prediction values of displacement vectors of three-dimensional points, or when generating prediction values of displacement vectors of three-dimensional points without generating LoDs.

In such cases, since all three-dimensional points belong to the same LoD (for example, LoD0), when the encoding device encodes or decodes in order starting from the three-dimensional points included in LoD0, the encoding device may generate prediction values of three-dimensional points belonging to LoD0 using the encoded and decoded displacement vectors included in LoD0. In this way, the encoding device may be able to reduce processing time by encoding without generating a plurality of layers of LoDs.

Note that when quantization of the transform coefficients of the displacement vector is not necessary, the encoding device may skip the quantization and inverse quantization processing and add the arithmetically decoded transform coefficients directly to the prediction value to obtain a decoded value. Accordingly, the processing time can be reduced.

FIG. 66 is an explanatory diagram illustrating an example of syntax according to the present embodiment.

The example of syntax illustrated in FIG. 66 illustrates an example of the configuration of information included in a bitstream generated by the encoding device.

The syntax illustrated in FIG. 66 includes displacement vector_header. displacement vector_header includes NumLoD, NumOfPoint[i], Thres_Lod[i], NumNeiCnt[i], THd[i], and QS[i].

NumLoD indicates the number of LoD layers.

NumOfPoint[i] indicates the number of three-dimensional points belonging to layer i. Note that when the encoding device adds the total number of three-dimensional points AllNumOfPoint to a separate header, NumOfPoint[NumLoD-1] (that is, the number of three-dimensional points belonging to the lowest layer) may not be added to the header. In such cases, NumOfPoint[NumLoD-1] can be calculated according to Expression 14 shown below.
[Math. 10] $NumOfPoint \left[NumLoD-1\right] = AllNumOfPoint - {\sum }_{j = 0}^{NumLoD - 2} NumOfPoint \left[j\right]$ (Expression 14)

Thres_Lod[i] indicates the LoD threshold for layer i. The encoding device configures LoDi such that the distance between each point within LoDi is greater than the threshold Thres_Lod[i]. Note that the value of Thres_Lod[NumLoD-1] (that is, the LoD threshold for the lowest layer) may not be added to the header. In such cases, Thres_Lod[NumLoD-1] can be estimated as 0. Accordingly, the code amount of the header can be reduced.

NumNeiCnt[i] indicates the upper limit value of the number of adjacent points used for generating prediction values of three-dimensional points belonging to layer i. When the number of adjacent points M is less than NumNeiCnt[i] (that is, when M<NumNeiCnt[i]), the encoding device may calculate the prediction value using M adjacent points. When there is no need to vary the value of NumNeiCnt[i] for each LoD, the encoding device may add one NumNeiCnt to the header.

THd[i] indicates the upper limit value of the distance of three-dimensional points used for prediction of three-dimensional points that are targets for encoding or decoding in layer i. The encoding device may not use three-dimensional points whose distance from the three-dimensional point that is the target for encoding or decoding is greater than THd[i] for prediction. Note that when there is no need to vary the value of THd[i] for each LoD, one THd may be added to the header.

QS[i] indicates the quantization scale for layer i.

Note that the encoding device may entropy encode NumLoD, Thres_Lod[i], NumNeiCnt[i], THd[i], or QS[i] and add them to the header. For example, the encoding device may binarize each value and perform arithmetic encoding. The encoding device may encode with a fixed length to reduce the processing amount.

Note that the encoding device does not necessarily need to add NumLoD, Thres_Lod[i], NumNeiCnt[i], THd[i], or QS[i] to the header, and they may be defined by, for example, a profile or level in a standard or the like. Accordingly, the bit amount of the header can be reduced.

FIG. 67 is an explanatory diagram illustrating an example of syntax according to the present embodiment.

The example of syntax illustrated in FIG. 67 illustrates an example of the configuration of information included in a bitstream generated by the encoding device.

The syntax illustrated in FIG. 67 includes displacement vector_data. displacement vector_data may include dispd_is_zero[k], dispd_is_one[k], dispd_minus2[k], and dispd_sign[k] for each of the 0th to NumLoD-th layers of LoD (also referred to as the j-th layer).

dispd_is_zero[k] is information indicating whether the absolute value of the transform coefficient of the k-th component of the displacement vector of the i-th three-dimensional point (i.e., vertex[i]) included in the j-th layer of LoD is 0. A value of 1 indicates that the absolute value of the transform coefficient of the k-th component is 0, and a value of 0 may indicate that the absolute value of the transform coefficient of the k-th component is greater than or equal to 1.

dispd_is_one[k] is information indicating whether the absolute value of the transform coefficient of the k-th component of the displacement vector of the i-th three-dimensional point (i.e., vertex[i]) included in the j-th layer of LoD is 1. A value of 1 indicates that the absolute value of the prediction residual of the k-th component is 1, and a value of 0 may indicate that the absolute value of the prediction residual of the k-th component is greater than or equal to 2.

Note that when dispd_is_one[k] is not included in the bitstream, the decoding device may estimate its value as 0. This prevents an indefinite value from being set for dispd_is_one[k] during decoding, and enables appropriate decoding processing to be performed.

dispd_minus2[k] is information indicating a value obtained by subtracting the value 2 from the absolute value of the transform coefficient of the k-th component of the displacement vector of the i-th three-dimensional point (vertex[i]) included in the j-th layer of LoD.

Note that when dispd_minus2[k] is not included in the bitstream, the decoding device may estimate its value as 0. This prevents an indefinite value from being set for dispd_minus2[k] during decoding, and enables appropriate decoding processing to be performed.

dispd_sign[k] indicates the sign bit of the displacement vector of the k-th component of the i-th three-dimensional point (vertex[i]) included in the j-th layer of LoD. A value of 1 indicates that the transform coefficient of the k-th component is negative, and a value of 0 may indicate that the transform coefficient of the k-th component is positive.

Note that for the k-th component, when the displacement vector is represented in a Cartesian coordinate system, the first component may indicate the x component, the second component may indicate the y component, and the third component may indicate the z component. When the displacement vector is represented in a local coordinate system, the first component may indicate a normal component, the second component may indicate a tangential component, and the third component may indicate a binormal component. This enables a common syntax structure to be used whether the displacement vector is represented in a Cartesian coordinate system or in a local coordinate system.

Note that the transform coefficient dispd[k] of the k-th component of the displacement vector of the i-th three-dimensional point (i.e., vertex[i]) may be calculated through the arithmetic processing illustrated in FIG. 68 using the above information.

By introducing the syntax configuration illustrated in FIG. 67, the encoding device can reduce the frequency of encoding dispd_is_one[k], dispd_minus2[k], and dispd_sign[k] and adding them to the bitstream when encoding transform coefficients that tend to result in dispd[k]=0, for example, and may thereby be able to improve encoding efficiency. When encoding prediction residuals that tend to result in dispd[k]=1 or 0, for example, the encoding device can reduce the frequency of encoding dispd_minus2[k] and adding it to the bitstream, and may thereby be able to improve encoding efficiency.

Note that the present embodiment shows an example assuming cases where transform coefficients tend to result in dispd[k]=0 or 1, but the embodiment is not necessarily limited thereto, and similar processing may be applied to any dispd[k]. For example, when encoding transform coefficients that tend to result in dispd[k]=2, dispd_is_two[k] and dispd_minus3[k] may be newly introduced. With this, when encoding transform coefficients that tend to result in dispd[k]=2, the frequency of encoding dispd_minus3[k] and adding it to the bitstream can be reduced, and as a result, encoding efficiency may be able to be improved. Note that, in this case, dispd[k] may be calculated through the arithmetic processing illustrated in FIG. 69.

Note that the encoding device may binarize at least one of dispd_is_zero[k], dispd_is_one[k], dispd_minus2[k], and dispd_sign[k] and apply arithmetic encoding using context. For example, since dispd_is_zero[k], dispd_is_one[k], and dispd_sign[k] are each 1 bit, the encoding device may assign one context to each of the above and encode while updating the occurrence probability based on the occurrence frequency of 0 and 1. In this way, the encoding efficiency may be able to be improved. The encoding device may binarize dispd_minus2[k] using Exponential Golomb, assign contexts to each bit, and encode while updating the occurrence probability based on the occurrence frequency of 0 and 1. In this way, the encoding efficiency may be able to be improved.

Note that the encoding device may assign separate contexts for each component of dispd as the context to assign to dispd_is_zero[k], dispd_is_one[k], dispd_minus2[k], and dispd_sign[k]. In this way, the encoding efficiency may be able to be improved when the value of dispd differs for each component. Note that the encoding device may assign the same context for each component of dispd as the context to assign to dispd_is_zero[k], dispd_is_one[k], dispd_minus2[k], and dispd_sign[k]. In this way, the encoding efficiency may be able to be improved when the values of each component of dispd are close.

The decoding device may convert the decoded transform coefficient after quantization from an unsigned integer value to a signed integer value by a method reverse to that of the encoding device. Accordingly, when entropy encoding the transform coefficients, a bitstream generated without considering the occurrence of negative integers can be appropriately decoded.

Note that it is not necessarily required to convert from an unsigned integer value to a signed integer value. For example, when decoding a bitstream generated by separately entropy encoding the sign bit, the decoding device may decode the sign bit. Note that the decoding method for the transform coefficient by the decoding device is not limited to this, and for example, a sign bit representing the positive or negative of the transform coefficient and binarized data of the absolute value of the transform coefficient may be arithmetically decoded on a bit-by-bit basis using context. With this, the decoding device can appropriately decode a bitstream with improved encoding efficiency of the transform coefficients of the displacement vector.

The decoding device decodes, by inverse quantization and reconstruction, the transform coefficient after quantization converted to a signed integer value, and uses it for prediction of three-dimensional points to be decoded subsequent to the decoding target three-dimensional point. More specifically, the decoding device calculates an inverse quantization value by multiplying the transform coefficient after quantization by a decoded quantization scale, and obtains a decoded value by adding the inverse quantization value and the prediction value.

For example, decoded unsigned quantization value a2u is converted to signed value a2q as follows. Note that ">>" indicates a bit shift operation.

When LSB (least significant bit) of a2u is 1; a2q = -((a2u + 1) >> 1)
In other cas $a 2 q = \left(a2u≫1\right)$ (Expression 15)

For example, decoded unsigned quantization value b2u is converted to signed value b2q as follows.

When LSB of b2u is 1; b2q = -((b2u + 1) >> 1)
In other cas $b 2 q = \left(b2u≫1\right)$ (Expression 16)

The decoding device calculates reconstructed values after inverse quantization. Reconstructed values can be used for prediction of three-dimensional points to be decoded subsequent to the decoding target three-dimensional point.

For example, the decoding device can calculate inverse quantization value a2iq from quantization value a2q as follows, and can also calculate inverse quantization value b2iq from quantization value b2q as follows.$\begin{matrix}a 2 iq = a 2 q \times QS_LoD 0 \\ b 2 iq = b 2 q \times QS_LoD 1\end{matrix}$ (Expression 17)

The decoding device can calculate reconstructed value a2rec from inverse quantization value a2iq as follows, and can also calculate reconstructed value b2rec from inverse quantization value b2iq as follows.$\begin{matrix}a 2 rec = a 2 iq + a 2 p \\ b 2 rec = b 2 iq + b 2 p\end{matrix}$ (Expression 18)

In the above description, an example has been shown in which the encoding device calculates and generates an average of displacement vectors of a certain number or fewer of three-dimensional points among the encoded and decoded adjacent points of the three-dimensional point to be encoded as the prediction value of the displacement vector of the three-dimensional point, but the method is not necessarily limited thereto, and prediction values can be generated using other methods.

For example, the encoding device may use the displacement vector of the three-dimensional point with the shortest distance among the three-dimensional points that are encoded and decoded adjacent points of the three-dimensional point to be encoded directly as the prediction value. The encoding device may also add a prediction mode value (PredMode) for each three-dimensional point to enable selection of prediction values. For example, the encoding device can provide total number M of prediction modes, assign an average value to prediction mode 0, assign a displacement vector of three-dimensional point A to prediction mode 1, ..., assign a displacement vector of three-dimensional point Z to prediction mode M-1, and add the prediction mode used for prediction to the bitstream for each three-dimensional point. The three-dimensional points A to Z to which displacement vectors are assigned from prediction mode 1 to prediction mode M-1 may be used in order from those closest to the three-dimensional point to be encoded among the three-dimensional points that are encoded and decoded adjacent points of the three-dimensional point to be encoded.

FIG. 70 is an explanatory diagram illustrating an example of prediction value information of displacement vectors according to the present embodiment. FIG. 71 is an explanatory diagram illustrating a method for generating a prediction value of a displacement vector according to the present embodiment.

FIG. 70 illustrates an example of prediction value information used for prediction of point b2 when the number N of adjacent three-dimensional points used for prediction is 4 and the number M of prediction modes is 5. The prediction value information includes, for each of one or more prediction modes, information indicating a prediction value used in the prediction mode. The prediction value information example illustrated in FIG. 70 is a table that indicates, for each of one or more prediction modes, a prediction value used in the prediction mode.

In the example illustrated in FIG. 70, the prediction values used for prediction of point b2 are, for example, point a0, point a1, point a2, and point b1, which are adjacent three-dimensional points (see FIG. 71). Corresponding to this, "average value of point a0, point a1, point a2, and point b1" is assigned as the prediction value for prediction mode 0.

In FIG. 70, "point b1" is assigned as the prediction value for prediction mode 1. "Point b2" is assigned as the prediction value for prediction mode 2. "Point a1" is assigned as the prediction value for prediction mode 3. "Point a0" is assigned as the prediction value for prediction mode 4.

Note that the numerical value that uniquely indicates the prediction mode is also referred to as the prediction mode value. Here, the explanation will be made assuming that the prediction mode value of prediction mode m is m. As an example, prediction mode values are used in order from small integer values.

The assignment of prediction mode values may be determined in order of distance from the three-dimensional point to be encoded. For example, the encoding device can assign relatively smaller prediction mode values to three-dimensional points that have smaller distances from the three-dimensional point to be encoded. In the above example, the three-dimensional point with the smallest distance from three-dimensional point b2 to be encoded (that is, the three-dimensional point closest to three-dimensional point b2) can be point b1, the three-dimensional point with the next smallest distance from three-dimensional point b2 can be point a2, the three-dimensional point with the next smallest distance from three-dimensional point b2 can be point a1, and the three-dimensional point with the next smallest distance from three-dimensional point b2 can be point a0.

With this, since the distance is small, the difference between the displacement vector and the prediction value is relatively small, so smaller prediction mode values can be assigned to points that have a relatively high possibility of being easily selected as prediction values, and thus the number of bits for encoding the prediction mode values can be reduced. Smaller prediction mode values may be preferentially assigned to three-dimensional points that belong to the same LoD as the three-dimensional point to be encoded.

FIG. 72 illustrates an example of prediction value information used for prediction of point a2 when the number N of adjacent three-dimensional points used for prediction is 2 and the number M of prediction modes is 5.

In the prediction value information example illustrated in FIG. 72, the prediction values used for prediction of point a2 are, for example, point a0 and point a1, which are adjacent three-dimensional points. Corresponding to this, in FIG. 72, "average value of point a0 and point a1" is assigned as the prediction value for prediction mode 0.

"Point a1" is assigned as the prediction value for prediction mode 1. "Point a0" is assigned as the prediction value for prediction mode 2.

Note that when the number of adjacent points is less than 4, information indicating that the prediction mode is not used (described as "not available" in the figure) may be set for prediction modes to which prediction values are unassigned.

Note that an example of prediction value information when the displacement vector is represented in a Cartesian coordinate system (XYZ coordinate system) is illustrated in FIG. 73.

In the example illustrated in FIG. 73, the values used for prediction of point b2 are, for example, point a0, point a1, point a2, and point b1, which are adjacent three-dimensional points (see FIG. 71). Corresponding to this, in FIG. 73, (Xave, Yave, Zave), which are the coordinates of "average value of point a0, point a1, point a2, and point b1", is assigned as the prediction value for prediction mode 0. Here, Xave can be calculated as an average or weighted average of Xb1, Xa2, Xa1, and Xa0. Yave can be calculated as an average or weighted average of Yb1, Yb2, Ya1, and Ya0. Zave can be calculated as an average or weighted average of Zb1, Zb2, Za1, and Za0.

(Xb1, Yb1, Zb1), which are the coordinates of "point b1", is assigned as the prediction value for prediction mode 1. (Xa2, Ya2, Za2), which are the coordinates of "point b2", is assigned as the prediction value for prediction mode 2. (Xa1, Ya1, Za1), which are the coordinates of "point a1", is assigned as the prediction value for prediction mode 3. (Xa0, Ya0, Za0), which are the coordinates of "point a0", is assigned as the prediction value for prediction mode 4.

For example, the encoding device may select prediction mode 2 (that is, prediction mode value 2) and encode the XYZ components of the displacement vector of the three-dimensional point to be encoded using prediction values Xa2, Ya2, and Za2, respectively. In such cases, the encoding device adds prediction mode value 2 to the bitstream.

Note that although the above example describes the case where the displacement vector is in a Cartesian coordinate system, the embodiment is not necessarily limited thereto, and may be applied to displacement vectors expressed in, for example, a local coordinate system.

Note that the number of prediction modes M may be added to the bitstream. The number of prediction modes M may be defined by a value in a profile or level in a standard or the like, without being added to the bitstream. The number of prediction modes M may also be a value calculated from the number of three-dimensional points N used for prediction (for example, M = N + 1).

When the encoding device adds a prediction mode value (PredMode) for each three-dimensional point to generate prediction values of displacement vectors of three-dimensional points, as an example of a method for assigning prediction values to each prediction mode, an example of assigning displacement vectors of adjacent points as prediction values to each prediction mode using distance information from the three-dimensional point to be encoded has been given, but the method is not necessarily limited thereto; the method for assigning prediction values to prediction modes may be changed by some method.

For example, the encoding device may calculate a median value from the prediction values assigned to each prediction mode, and assign the calculated median value to prediction mode 0. In this way, the encoding device may assign a median value as a prediction value to a prediction mode having a small prediction mode value. With this, the encoding device can generate prediction value candidates that prioritize the median value of displacement vectors of adjacent points, so encoding efficiency can be improved.

The change in assignment of prediction values using the median value will be described with reference to FIG. 74 to FIG. 76.

FIG. 74 is an explanatory diagram illustrating an example of prediction value information of displacement vectors according to the embodiment. FIG. 75 is an explanatory diagram illustrating a method for generating a prediction value of a displacement vector according to the present embodiment. FIG. 76 is an explanatory diagram illustrating an example of prediction value information of displacement vectors according to the present embodiment.

In the example illustrated in FIG. 75, the number N of three-dimensional points used for prediction is N = 4, and the number M of prediction modes is M = 4. Point a2 is predicted from point a0 and point a1. Point b2 is predicted from point a0, point a1, point a2, point b0, and point b1.

Here, an example is illustrated where point b1, point a2, point a1, and point a0 are in order of proximity to the three-dimensional point to be encoded, and displacement vectors of three-dimensional points with closer distances are assigned to prediction modes with smaller prediction mode values. The magnitude of each prediction value is assumed to be b1>a1>a0>a2.

The encoding device calculates the median value of the prediction values of the prediction modes. For example, the encoding device can sort n prediction values assigned to prediction modes in ascending or descending order, and use the (n/2)th value as the median value. Note that the median value calculation method may be switched between cases where the value of n is odd and cases where it is even.

For example, when n is odd, the encoding device can use, as the median value, the (n/2)th prediction value (with decimal places rounded down) among the 0th to (n-1)th prediction values after sorting. When n is even, the encoding device can use the (n/2-1)th prediction value and the n/2th prediction value among the 0th to (n-1)th prediction values after sorting as median value candidates A and B, and adopt either A or B as the median value by some method. For example, of A and B, the one that has a closer distance to the three-dimensional point to be encoded can be used as the median value.

In the case of the example illustrated in FIG. 75, since n=4, the median value can be calculated using the median value calculation method for cases where n is even. For example, when b1, a1, a0, and a2 are sorted in ascending order, the result is a2, a0, a1, b1. In such cases, the (n/2-1)th prediction value is a0, the n/2th is a1, and these are used as median value candidates A and B. Since a1 is closer to the three-dimensional point to be encoded than a0, a1 is selected as the median value.

In such cases, as illustrated in FIG. 76, the encoding device assigns the prediction value a1 selected as the median value to prediction mode 0, and assigns the prediction value b1 that was originally assigned to prediction mode 0 to prediction mode 2 to which prediction value a1 had been assigned. Stated differently, the encoding device swaps the prediction values of prediction mode 0 and prediction mode 2. With this, the encoding device can generate prediction value candidates that prioritize the median value of displacement vectors of adjacent points, and encoding efficiency can be improved.

Note that although the above example shows using the median value as the method for assigning prediction values to prediction modes, the embodiment is not necessarily limited to this. For example, the encoding device may calculate an average value from the prediction values assigned to each prediction mode, and assign a prediction value close to the average value to prediction mode 0. With this, prediction value candidates that prioritize displacement vectors close to the average of displacement vectors of adjacent points can be generated, so encoding efficiency can be improved.

Note that the encoding device may first calculate a median value from displacement vectors of adjacent points and assign it to prediction mode 0, and assign displacement vectors of surrounding three-dimensional points other than the median value to prediction mode 1 and subsequent prediction modes using distance information of those three-dimensional points.

The encoding device may add information indicating whether to prioritize the median value (also referred to as median value priority information) to a header or the like. When the median value priority information indicates prioritizing the median value, the encoding device may assign the median value to prediction mode 0 using the above method, and otherwise may assign prediction values to prediction modes regardless of the median value. With this, the encoding device may be able to improve encoding efficiency by adaptively switching between cases where it wants to prioritize the median value and cases where it does not while performing encoding. The decoding device can appropriately decode the bitstream based on the median value priority information added to a header or the like.

Note that as an example of change in prediction value assignment that prioritizes the median value, an example was shown of assigning the median value to prediction mode 0 and swapping the prediction value that was originally assigned to prediction mode 0 with the prediction mode to which the median value had been assigned, but the embodiment is not necessarily limited to this.

FIG. 77 is an explanatory diagram illustrating an example of prediction value information of displacement vectors according to the present embodiment.

For example, as illustrated in FIG. 77, the encoding device may assign the median value to prediction mode 0, assign the prediction value that was originally assigned to prediction mode 0 to prediction mode 1, assign the prediction value that was originally assigned to prediction mode 1 to prediction mode 2, and so on, shifting the prediction values assigned to each prediction mode until a value is reassigned to the prediction mode to which the median value was originally assigned. With this, prediction value information that prioritizes prediction value candidates with close distances while prioritizing the median value of displacement vectors of adjacent points can be generated, and encoding efficiency can be improved.

An example of prediction value assignment that prioritizes the median value or average value was shown, but the embodiment is not necessarily limited to this.

FIG. 78 and FIG. 79 are explanatory diagrams each illustrating an example of prediction value information of displacement vectors according to the present embodiment.

For example, as illustrated in FIG. 78, the encoding device calculates statistical information of the prediction values of the prediction modes. The statistical information can be, for example, a median value, average value, variance, or standard deviation of adjacent points. The encoding device can change the assignment of prediction values based on the calculated statistical information (see FIG. 79).

A variation of the setting of prediction values for the three-dimensional point a to be encoded in the frame to be encoded will be described with reference to FIG. 80 through FIG. 83.

FIG. 80 is an explanatory diagram illustrating an example of points to be encoded according to the present embodiment. FIG. 81 is an explanatory diagram illustrating an example of prediction value information of displacement vectors according to the present embodiment. FIG. 82 is an explanatory diagram illustrating an example of temporal dv according to the present embodiment. FIG. 83 is an explanatory diagram illustrating an example of prediction value information of displacement vectors according to the present embodiment.

The encoding device may set the prediction value for the three-dimensional point a to be encoded (see FIG. 80) in the frame to be encoded like the prediction value information illustrated in FIG. 81. More specifically, the encoding device may set 0 (no prediction) as the prediction value for prediction mode 0, and may set the average value of the displacement vectors of adjacent points a, b, and c (dv0, dv1, and dv2, respectively) as the prediction value for prediction mode 1. The encoding device may set the displacement vectors of adjacent points a, b, and c (dv0, dv1, and dv2, respectively) as the prediction values for prediction modes 2, 3, and 4, respectively.

Note that the prediction values assigned to each prediction mode are not limited to these, and other prediction values may be assigned.

The encoding device may, for example, assign displacement vectors within a reference frame (see FIG. 82) that is different from the frame to be encoded to prediction values. More specifically, the encoding device can use the displacement vector of corresponding point a' of the three-dimensional point a to be encoded in a reference frame that has already been encoded or decoded (hereinafter referred to as temporal dv) as the prediction value for the three-dimensional point a to be encoded. When the target object is moving with constant motion, the displacement vector value of the three-dimensional point to be encoded tends to be relatively close to the displacement vector value of the corresponding point of the three-dimensional point to be encoded in the reference frame, so adding temporal dv as a prediction value to prediction candidates may be able to improve encoding efficiency.

An example of prediction value information when the prediction value of prediction mode 5 is added as temporal dv is illustrated in FIG. 83. Note that temporal dv may be added as the prediction value for other prediction modes (i.e., any of prediction modes 0 to 4). Moreover, the prediction value of any of the prediction modes in the prediction value information illustrated in FIG. 81 may be changed to temporal dv.

Note that the encoding device may calculate temporal dv for each displacement vector prediction unit (Displacement Vector Group, DVG) in the reference frame and store it in memory, and use the temporal dv of the DVG to which corresponding point a' belongs as the temporal dv of corresponding point a'. Accordingly, the memory amount can be reduced.

Note that the encoding device may calculate the temporal dv of the DVG from the displacement vectors of the three-dimensional points that belong to the DVG. For example, the average value of the displacement vectors of the three-dimensional points that belong to the DVG may be used as the temporal dv of the DVG. With this, while reducing the memory amount for storing temporal dv, encoding efficiency may be able to be improved by adding temporal dv to prediction candidates.

For example, the encoding device may calculate a global displacement vector (hereinafter, global dv) of the frame to be encoded, and add the global dv to prediction candidates as a prediction value. The encoding device can calculate the global dv from, for example, the average value of the displacement vectors in the frame to be encoded or the reference frame. The encoding device may add the calculated global dv to the bitstream. Accordingly, the decoding device can decode the global dv that the encoding device added as a prediction candidate from the bitstream, and can add the same global dv as the encoding device to prediction candidates.

The encoding device may, for example, select at least two or more displacement vectors from the displacement vectors added to prediction candidates, and add the average value of the selected two or more displacement vectors to prediction candidates as a new prediction value. In this way, the encoding efficiency may be able to be improved.

The encoding device may, for example, store one or more displacement vectors used in the past in memory as a new prediction value, and add at least one displacement vector among them to prediction candidates as a new prediction value. In this way, the encoding efficiency may be able to be improved. Note that the encoding device may periodically or irregularly store displacement vectors used for encoding or decoding in memory (that is, the memory that stores the one or more displacement vectors used in the past described above), and may delete old displacement vectors from the memory after a certain amount of time or more has elapsed since they were stored. In this way, the encoding device can assign new displacement vectors to prediction candidates by updating the displacement vectors stored in memory, and may be able to improve encoding efficiency.

When the encoding device encodes displacement vectors of three-dimensional points, DVGs, which are prediction units, may be provided according to the encoding or decoding order, and encoding or decoding may be performed for each DVG. For example, the number of three-dimensional points included in a DVG (DVGSize) can be defined, and the three-dimensional points can be divided into a plurality of DVGs according to the encoding or decoding order to perform encoding or decoding. Note that the encoding or decoding order of the displacement vectors of three-dimensional points can be any order. For example, LoD may be generated and encoding or decoding may be performed sequentially for each LoD level. Alternatively, the displacement vectors may be encoded or decoded in the encoding or decoding order of the position information (vertices) of the three-dimensional points without generating LoD. Alternatively, a Morton code may be generated using the position information of the three-dimensional points, and encoding or decoding may be performed in the order of the Morton code.

A definition example of DVG will be described hereinafter.

FIG. 84 is an explanatory diagram illustrating an example of reference destinations of DVG according to the present embodiment.

In the example of reference destinations of DVGs illustrated in FIG. 84 (also referred to as the first example), three-dimensional points within the same DVG are defined as non-referenceable. For example, three-dimensional points within the same DVG may be defined as non-addable to adjacent points.

Furthermore, it is defined that encoded or decoded three-dimensional points in a different DVG are referenceable. For example, encoded or decoded three-dimensional points in a different DVG may be defined as non-addable to adjacent points.

The size of the DVG may be described in the header or the like (see FIG. 85). For example, when the size (DVGSize) of the DVG is 16, information "DVGSize = 16" may be added to the header. The value of n may be added to the header, where DVGSize is 2^n.

Moreover, three-dimensional points within the same DVG can be encoded or decoded in parallel.

FIG. 85 is an explanatory diagram illustrating an example of syntax according to the present embodiment.

The example of syntax illustrated in FIG. 85 illustrates an example of the configuration of information included in a bitstream generated by the encoding device.

The syntax illustrated in FIG. 85 includes displacement vector_header. displacement vector_header includes DVGSize.

DVGSize indicates the number of three-dimensional points included in the DVG.

FIG. 86 is an explanatory diagram illustrating an example of reference destinations of DVG according to the present embodiment.

In the example of reference destinations of DVGs illustrated in FIG. 86 (also referred to as the second example), encoded or decoded three-dimensional points within the same DVG are defined as referenceable. Three-dimensional points that have not been encoded or decoded are defined as non-referenceable. For example, encoded or decoded three-dimensional points within the same DVG may be defined as addable to adjacent points, and three-dimensional points that have not been encoded or decoded may be defined as non-addable.

It is defined that encoded or decoded three-dimensional points in a different DVG are referenceable. For example, encoded or decoded three-dimensional points in a different DVG may be defined as addable to adjacent points.

The size of the DVG may be described in the header or the like (see FIG. 85). For example, when the size (DVGSize) of the DVG is 16, information "DVGSize = 16" may be added to the header. The value of n may be added to the header, where DVGSize is 2^n.

In this way, by making encoded or decoded three-dimensional points referenceable even for three-dimensional points within the same DVG, the prediction precision can be improved, and the encoding efficiency can be improved.

FIG. 87 is an explanatory diagram illustrating an example of reference destinations of DVG according to the present embodiment.

In the example of reference destinations of DVGs illustrated in FIG. 87 (also referred to as the third example), encoded or decoded three-dimensional points within the same DVG are defined as referenceable. Three-dimensional points that have not been encoded or decoded are defined as non-referenceable. For example, encoded or decoded three-dimensional points within the same DVG may be defined as addable to adjacent points, and three-dimensional points that have not been encoded or decoded may be defined as non-addable to adjacent points.

It is defined that three-dimensional points in a different DVG are non-referenceable. For example, three-dimensional points in different DVGs may be defined as non-addable to adjacent points.

The size of the DVG may be described in the header or the like (see FIG. 85). For example, when the size (DVGSize) of the DVG is 16, information "DVGSize = 16" may be added to the header. The value of n may be added to the header, where DVGSize is 2^n.

In this manner, by prohibiting referencing between DVGs, dependencies between DVGs are eliminated, and a plurality of DVGs can be encoded or decoded in parallel.

Furthermore, by making encoded or decoded three-dimensional points within the same DVG referenceable, it may be possible to improve prediction accuracy and improve encoding efficiency.

In the description with reference to FIG. 84, an example was given in which when encoding displacement vectors of three-dimensional points, DVGs are provided according to the encoding or decoding order, and encoding or decoding is performed for each DVG. For example, an example was given in which the number of three-dimensional points included in a DVG (DVGSize) is defined, and the three-dimensional points are divided into a plurality of DVGs according to the encoding or decoding order to perform encoding or decoding. Prediction mode PredMode for encoding displacement vectors, or information disp_dvg_inter_mode indicating whether to apply inter prediction, may be settable for each DVG. In such cases, the three-dimensional points included in the same DVG share PredMode or disp_dvg_inter_mode, and the same value may be set. With this, encoding efficiency can be improved by reducing the code amount of PredMode or disp_dvg_inter_mode. Note that PredMode or disp_dvg_inter_mode are not necessarily limited to being settable for each DVG, and may be settable for each set of other three-dimensional points.

FIG. 88 is an explanatory diagram illustrating an example of reference destinations of DVG according to the present embodiment.

In the example of reference destinations of DVGs illustrated in FIG. 88 (also referred to as the fourth example), encoded or decoded three-dimensional points within the same DVG are defined as referenceable. Three-dimensional points that have not been encoded or decoded are defined as non-referenceable. For example, encoded or decoded three-dimensional points within the same DVG may be defined as addable to adjacent points, and three-dimensional points that have not been encoded or decoded may be defined as non-addable.

It is defined that encoded or decoded three-dimensional points in a different DVG are referenceable. For example, encoded or decoded three-dimensional points in a different DVG may be defined as addable to adjacent points.

The encoding device may add PredMode or disp_dvg_inter_mode for each DVG, and may predictively encode three-dimensional points within the DVG using the same PredMode or disp_dvg_inter_mode.

The encoding device may determine whether to add PredMode or disp_dvg_inter_mode for each DVG. For example, the encoding device may calculate PredMode or disp_dvg_inter_mode of the DVG to which the three-dimensional point to be encoded belongs using the variance of displacement vectors of decoded three-dimensional points within different DVGs. When the calculated variance is greater than or equal to the threshold, PredMode or disp_dvg_inter_mode may be added to the DVG, and otherwise, PredMode or disp_dvg_inter_mode may not be added. When PredMode or disp_dvg_inter_mode is not added, PredMode=0 or disp_dvg_inter_mode=0 may be inferred.

The size of the DVG may be described in the header or the like (see FIG. 85). For example, when the size (DVGSize) of the DVG is 16, information "DVGSize = 16" may be added to the header. The value of n may be added to the header, where DVGSize is 2^n.

In this way, even for three-dimensional points within the same DVG, by defining encoded or decoded three-dimensional points as referenceable, it may be possible to improve prediction accuracy and improve encoding efficiency.

By adding PredMode or disp_dvg_inter_mode for each DVG, overhead can be reduced compared to adding PredMode or disp_dvg_inter_mode for each three-dimensional point, and encoding efficiency may be able to be improved.

FIG. 89 is an explanatory diagram illustrating an example of syntax according to the present embodiment.

The example of syntax illustrated in FIG. 89 illustrates an example of the configuration of information included in a bitstream generated by the encoding device.

The syntax illustrated in FIG. 89 includes displacement vector_header. displacement vector_header includes DVGSize.

DVGSize indicates a unit for predicting displacement vectors of three-dimensional points. PredMode or disp_dvg_inter_mode is added for every DVGSize three-dimensional points, and three-dimensional points within the same DVG are encoded and decoded using the same PredMode or disp_dvg_inter_mode.

When encoding displacement vectors by dividing them into LoD layers, a different DVGSize may be settable for each LoD layer. In such cases, DVGSize for each LoD layer may be added to the header. With this, the decoding device can correctly decode the bitstream generated by setting DVGSize for each LoD layer.

For example, when encoding displacement vectors using LoD layers, high-frequency components are collected in lower LoD layers by lifting transform, and the values of the transform coefficients tend to become small. Therefore, the lower the LoD layer, the more easily the accuracy of inter prediction tends to increase. Accordingly, in lower LoD layers, by increasing the value of DVGSize and sharing disp_dvg_inter_mode among a plurality of three-dimensional points, the code amount for encoding disp_dvg_inter_mode can be reduced, and encoding efficiency may be able to be improved. However, in these LoD layers, low-frequency components are collected by lifting transform, and the values of the transform coefficients tend to become large. Therefore, the lower the LoD layer, the more easily the accuracy of inter prediction tends to decrease. Accordingly, in lower LoD layers, by decreasing the value of DVGSize and enabling fine-grained configuration of whether to perform inter prediction, encoding efficiency may be able to be improved.

FIG. 90 is an explanatory diagram illustrating an example of syntax according to the present embodiment.

The example of syntax illustrated in FIG. 90 illustrates an example of the configuration of information included in a bitstream generated by the encoding device.

The syntax illustrated in FIG. 90 includes displacement_vector_data. displacement_vector_data may include PredMode, disp_dvg_inter_mode, dispd_is_zero[k], dispd_is_one[k], dispd_minus2[k], and dispd_sign[k] for each of the 0th to NumLoD-th layers of LoD (also referred to as the j-th layer).

PredMode is information indicating a prediction mode for encoding or decoding a displacement vector of an i-th three-dimensional point in a j-th layer. PredMode takes a value from 0 to M-1 (where M is the total number of prediction modes). When PredMode is not included in the bitstream (when the if statement condition "maxdiff >= Thfix[i] && NumPredMode[i] > 1" is not satisfied), PredMode may be estimated as the value 0. Note that the estimated value is not limited to 0, and may be any value from 0 to M-1. An estimated value for when PredMode is not included in the bitstream may be separately added to a header or the like. PredMode may be binarized with a truncated unary code using the number of prediction modes to which prediction values are assigned and arithmetically encoded.

disp_dvg_inter_mode is information indicating whether to encode or decode the i-th displacement vector in the j-th LoD layer using inter prediction. A value of 1 indicates to apply inter prediction, and a value of 0 indicates to not apply inter prediction.

dispd_is_zero[k], dispd_is_one[k], dispd_minus2[k], and dispd_sign[k] are the same as the respective items of information in FIG. 67.

Hereinafter, an example of encoding processing in the present embodiment will be described.

FIG. 91 is a flowchart illustrating an example of encoding processing according to the present embodiment.

The encoding processing illustrated in FIG. 91 is an encoding method for displacement data of three-dimensional points that the encoding device executes.

In step S9101, the encoding device generates a prediction value of first displacement data by performing inter prediction using second displacement data, the first displacement data being the displacement data to be encoded, the second displacement data being at a different time than the first displacement data.

In step S9102, the encoding device generates a prediction residual using the first displacement data and the generated prediction value.

In step S9103, the encoding device encodes the generated prediction residual.

With this, the encoding device can appropriately encode displacement data of three-dimensional points by encoding the prediction residual generated by inter prediction. By using inter prediction, the code amount may be able to be reduced when the difference between the first displacement data to be encoded and the second displacement data at a different time is relatively small, and with this, the encoding processing may be able to be improved. As seen from the above, the encoding method can contribute toward improving encoding processing related to displacement vectors and the like.

For example, the generating of the prediction value of the first displacement data may include: determining whether to perform the inter prediction when generating the prediction value of the first displacement data; when it is determined to perform the inter prediction, generating the prediction value of the first displacement data by performing the inter prediction; and when it is determined not to perform the inter prediction, generating the prediction value of the first displacement data without performing the inter prediction.

With this, when encoding the first displacement data to be encoded, the encoding device can determine in advance whether or not to use inter prediction for generating the prediction value of the displacement data, and can selectively enable or disable inter prediction for generating the prediction value of the displacement data according to the determination result. With this, for example, when inter prediction can improve the encoding processing, inter prediction is used for the encoding processing, and when inter prediction cannot improve the encoding processing (or degrades the encoding processing), inter prediction can be omitted for the encoding processing. In this way, the code amount may be able to be further reduced. As seen from the above, the encoding method can contribute toward further improving encoding processing related to displacement vectors and the like.

For example, the determining of whether to perform the inter prediction may include: calculating a first sum that is a sum of transform coefficients for the first displacement data, and a second sum that is a sum of prediction residuals when the inter prediction is applied to the transform coefficients; when it is determined that the second sum is smaller than the first sum, determining to perform the inter prediction; and when it is determined that the second sum is not smaller than the first sum, determining not to perform the inter prediction.

With this, the encoding device can selectively enable or disable inter prediction for generating the prediction value of the displacement data by using a comparison between the sum of transform coefficients when inter prediction is applied to the transform coefficients of the first displacement data to be encoded, and the above transform coefficients (in other words, the sum of transform coefficients when inter prediction is not used). More specifically, when it is determined that the sum of transform coefficients when inter prediction is applied is small, it can be determined to use inter prediction. In this way, the code amount may be able to be reduced with simpler determination. As seen from the above, the encoding method can contribute toward improving encoding processing related to displacement vectors and the like.

For example, information indicating whether the inter prediction was used in the generating of the prediction residual of the first displacement data may be transmitted.

According to the above aspect, by transmitting information indicating whether inter prediction was used during encoding, the encoding device can inform the decoding device that receives and decodes the encoded displacement data whether inter prediction was used during encoding. With this, the encoded data can be appropriately decoded. More specifically, this can contribute toward ensuring that data encoded using inter prediction is decoded using inter prediction, and data encoded without using inter prediction is decoded without using inter prediction. As seen from the above, the encoding method can contribute toward improving encoding processing related to displacement vectors and the like.

For example, the three-dimensional point includes a plurality of three-dimensional points, each of the plurality of three-dimensional points belongs to one layer among a plurality of layers, and the generating of the prediction value of the first displacement data may include: for each layer among one or more layers to which the plurality of three-dimensional points belong, determining whether to perform the inter prediction when generating the prediction value of the first displacement data for three-dimensional points, among the plurality of three-dimensional points, that belong to the layer; for a layer, among the one or more layers, for which it is determined to perform the inter prediction, generating the prediction value of the first displacement data by performing the inter prediction; and for a layer, among the one or more layers, for which it is determined not to perform the inter prediction, generating the prediction value of the first displacement data without performing the inter prediction.

With this, when encoding the first displacement data to be encoded, the encoding device can determine in advance whether or not to use inter prediction for generating the prediction value of the displacement data for each layer to which the three-dimensional points belong, and can selectively enable or disable inter prediction for generating the prediction value of the displacement data for each layer to which the three-dimensional points belong according to the determination result. With this, for example, inter prediction is used for the encoding processing of a layer in which inter prediction can improve the encoding processing, and inter prediction can be omitted for the encoding processing of a layer in which inter prediction cannot improve the encoding processing (or degrades the encoding processing). In this way, the code amount may be able to be further reduced. As seen from the above, the encoding method can contribute toward further improving encoding processing related to displacement vectors and the like.

For example, information indicating a layer for which the inter prediction was used in the generating of the prediction residual of the first displacement data may be transmitted.

According to the above aspect, by transmitting information indicating whether inter prediction was used for each layer to which the three-dimensional points belong during encoding, the encoding device can inform the decoding device that receives and decodes the encoded displacement data whether inter prediction was used for each layer to which the three-dimensional points belong during encoding. With this, the encoded data can be appropriately decoded. More specifically, this can contribute toward ensuring that data of a layer encoded using inter prediction is decoded using inter prediction, and data of a layer encoded without using inter prediction is decoded without using inter prediction. As seen from the above, the encoding method can contribute toward improving encoding processing related to displacement vectors and the like.

Hereinafter, an example of decoding processing in the present embodiment will be described.

FIG. 92 is a flowchart illustrating an example of decoding processing according to the present embodiment.

The decoding processing illustrated in FIG. 92 is a decoding method for displacement data of three-dimensional points that the decoding device executes.

In step S9201, the decoding device obtains a prediction residual by decoding the encoded data.

In step S9202, the decoding device generates a prediction value of first displacement data by performing inter prediction using second displacement data, the first displacement data being the displacement data to be decoded, the second displacement data being at a different time than the first displacement data.

In step S9203, the decoding device generates the first displacement data using the prediction residual and the generated prediction value.

With this, the decoding device can appropriately decode displacement data of three-dimensional points by decoding the prediction residual generated by inter prediction. By using inter prediction, the code amount may be able to be reduced when the difference between the first displacement data to be decoded and the second displacement data at a different time is relatively small, and with this, the decoding processing may be able to be improved. As seen from the above, the decoding method can contribute toward improving decoding processing related to displacement vectors and the like.

For example, the generating of the prediction value of the first displacement data may include: determining whether to perform the inter prediction when generating the prediction value of the first displacement data; when it is determined to perform the inter prediction, generating the prediction value of the first displacement data by performing the inter prediction; and when it is determined not to perform the inter prediction, generating the prediction value of the first displacement data without performing the inter prediction.

With this, when decoding the first displacement data to be decoded, the decoding device can determine in advance whether or not to use inter prediction for generating the prediction value of the displacement data, and can selectively enable or disable inter prediction for generating the prediction value of the displacement data according to the determination result. In this way, the code amount may be able to be further reduced. As seen from the above, the decoding method can contribute toward further improving decoding processing related to displacement vectors and the like.

For example, information indicating whether the inter prediction was used in the generating of the prediction residual of the first displacement data may be received.

With this, by receiving information indicating whether inter prediction was used during encoding, the decoding device can know whether the encoding device used inter prediction during encoding. The decoding device can decode the displacement vector using inter prediction when the encoding device used inter prediction during encoding, and can decode the displacement vector without using inter prediction when the encoding device did not use inter prediction during encoding. With this, the decoding device can appropriately decode the data encoded by the encoding device.

For example, the three-dimensional point includes a plurality of three-dimensional points, each of the plurality of three-dimensional points belongs to one layer among a plurality of layers, and the generating of the prediction value of the first displacement data may include: for each layer among one or more layers to which the plurality of three-dimensional points belong, determining whether to perform the inter prediction when generating the prediction value of the first displacement data for three-dimensional points, among the plurality of three-dimensional points, that belong to the layer; for a layer, among the one or more layers, for which it is determined to perform the inter prediction, generating the prediction value of the first displacement data by performing the inter prediction; and for a layer, among the one or more layers, for which it is determined not to perform the inter prediction, generating the prediction value of the first displacement data without performing the inter prediction.

With this, when decoding the first displacement data to be decoded, the decoding device can determine in advance whether or not to use inter prediction for generating the prediction value of the displacement data for each layer to which the three-dimensional points belong, and can selectively enable or disable inter prediction for generating the prediction value of the displacement data for each layer to which the three-dimensional points belong according to the determination result. In this way, the code amount may be able to be further reduced. As seen from the above, the decoding method can contribute toward further improving encoding processing related to displacement vectors and the like.

For example, information indicating a layer for which the inter prediction was used in the generating of the prediction residual of the first displacement data may be received.

With this, by receiving information indicating whether inter prediction was used for each layer to which the three-dimensional points belong during encoding, the decoding device can know whether the encoding device used inter prediction for each layer to which the three-dimensional points belong during encoding. The decoding device can decode the displacement vector using inter prediction for data of layers for which the encoding device used inter prediction during encoding, and can decode the displacement vector without using inter prediction for data of layers for which the encoding device did not use inter prediction during encoding. With this, the decoding device can appropriately decode the data encoded by the encoding device.

Hereinafter, an example of encoding processing in the present embodiment will be described.

FIG. 93 is an explanatory diagram illustrating an example of a structure of a frame according to the present embodiment.

An example of operation when the structure of a frame differs between a reference frame and a frame to be encoded or decoded in a case where a displacement vector is inter-predicted and encoded or decoded is described.

Here, differing in structure includes, for example, the hierarchical structure of LoD differing between a reference frame and a frame to be encoded or decoded. Here, differing in the hierarchical structure of LoD includes, for example, the number of hierarchical layers of LoD (in other words, the number of layers of LoD) differing, or the number of three-dimensional points belonging to a layer of LoD differing in any one or more LoD layers.

When the structure of a frame differs between a reference frame and a frame to be encoded or decoded in this way, inter prediction of the frame to be encoded or decoded may be prohibited. More specifically, when the structure of a frame differs between a reference frame and a frame to be encoded or decoded, inter prediction may be prohibited by restricting the value of disp_frame_inter_mode or disp_lod_inter_mode to 0 in a standard or the like. With this, when the structure of a frame differs between a reference frame and a frame to be encoded or decoded, inter prediction can be prevented from being applied in a case where a reference three-dimensional point within the reference frame for a three-dimensional point to be encoded or decoded does not exist, thereby stabilizing encoding efficiency.

Note that when the structure of a frame differs between a reference frame and a frame to be encoded or decoded, if the decoding device receives a bitstream in which the value of disp_frame_inter_mode or disp_lod_inter_mode is set to 1, an error may be output as non-conformance to the standard.

Note that when the structure of a frame differs between a reference frame and a frame to be encoded or decoded, if the decoding device receives a bitstream in which the value of disp_frame_inter_mode or disp_lod_inter_mode is set to 1, the decoding device may perform inter prediction with the prediction value set to 0. Alternatively, the decoding device may not perform inter prediction regardless of the value of disp_frame_inter_mode or disp_lod_inter_mode.

FIG. 93 illustrates a reference frame and a target frame. The target frame is a frame to be encoded or decoded, and is encoded or decoded with reference to the reference frame.

The reference frame includes LoD0 and LoD1. The number of LoD layers NumLoD_Ref of the reference frame is two.

The target frame includes LoD0, LoD1, and LoD2. The number of LoD layers NumLoD_Cur of the target frame is three. The target frame includes displacement vector_header. displacement vector_header includes disp_frame_inter_mode.

LoD0 and LoD1 included in the target frame can be inter-predicted because LoDs of the same layers (that is, LoD0 and LoD1) exist in the reference frame. LoD2 included in the target frame cannot be inter-predicted because an LoD of the same layer (that is, LoD2) does not exist in the reference frame.

The number of LoDs NumLoD may be calculated by adding one to the number of subdivisions (number of subdivision iterations) from the base mesh.

For example, when the number of subdivisions is one, LoD0 and LoD1 are generated, and NumLoD is calculated as two.

For example, when the number of subdivisions is two, LoD0, LoD1, and LoD2 are generated, and NumLoD is calculated as three.

Note that instead of NumLoD, the encoding device may add the number of subdivisions to the header, and the decoding device may calculate NumLoD using the number of subdivisions decoded from the header. In this way, the bit amount may be able to be reduced by encoding a value that is one less than NumLoD.

In a frame to be encoded or decoded, when NumLoD_Cur, which is the number of LoD hierarchies of the target frame, is greater than NumLoD_Ref, which is the number of LoD hierarchies of the reference frame, inter prediction may be prohibited by restricting the value of disp_frame_inter_mode to 0 in a standard or the like. With this, when the structure of a frame differs between a reference frame and a frame to be encoded or decoded, inter prediction can be prevented from being applied in a case where a reference three-dimensional point within the reference frame corresponding to a three-dimensional point to be encoded or decoded does not exist, thereby stabilizing encoding efficiency.

Note that when NumLoD_Cur, which is the number of LoD hierarchies of the target frame, is greater than NumLoD_Ref, which is the number of LoD hierarchies of the reference frame, if the decoding device receives a bitstream in which disp_frame_inter_mode = 1 is set, an error may be output as non-conformance to the standard.

Note that when NumLoD_Cur, which is the number of LoD hierarchies of the target frame, is greater than NumLoD_Ref, which is the number of LoD hierarchies of the reference frame, if the decoding device receives a bitstream in which disp_frame_inter_mode is set to 1, the decoding device may set the prediction value to 0 and not perform inter prediction. Alternatively, the decoding device may not perform inter prediction regardless of the value of disp_frame_inter_mode.

Note that when NumLoD_Cur, which is the number of LoD hierarchies of the target frame, is greater than NumLoD_Ref, which is the number of LoD hierarchies of the reference frame, inter prediction may be applied to LoDs for which a reference three-dimensional point exists in the reference frame, and inter prediction may not be applied to LoDs for which a reference three-dimensional point does not exist in the reference frame. With this, inter prediction can be applied to at least LoDs for which a reference three-dimensional point exists, and encoding efficiency can be improved. Note that in this case, the value of disp_frame_inter_mode may be set to 1. With this, the bitstream can be correctly decoded by applying the same processing on the decoder side as well.

FIG. 94 is an explanatory diagram illustrating an example of a structure of a frame according to the present embodiment. FIG. 95 is an explanatory diagram illustrating an example of processing for determining whether to apply inter prediction according to the present embodiment.

With reference to FIG. 94 and FIG. 95, prohibition of inter prediction will be described.

In the i-th LoD of a frame to be encoded or decoded, when i≥NumLoD_Ref, inter prediction may be prohibited by restricting the value of disp_lod_inter_mode[i] to 0 in a standard or the like.

For example, when NumLoD_Ref, which is the number of LoD hierarchies of the reference frame illustrated in FIG. 94, is 2, disp_lod_inter_mode[0] and disp_lod_inter_mode[1] may be set to 1, and disp_lod_inter_mode[2] may be set to 0.

For the i-th LoD (where i is an integer that varies from 0 to a number that is 1 smaller than the number of LoDs of the target frame) of the frame to be encoded or decoded, when it is determined that disp_lod_inter_mode[i] is 1 and i is smaller than the number of LoDs of the reference frame, inter prediction may be applied, and otherwise, inter prediction may not be applied, or in other words, application of inter prediction may be prohibited (see FIG. 95).

With this, when the structure of a frame differs between a reference frame and a frame to be encoded or decoded, inter prediction can be prevented from being applied in a case where a reference three-dimensional point within the reference frame corresponding to a three-dimensional point to be encoded or decoded does not exist, thereby stabilizing encoding efficiency.

Note that when i≥NumLoD_Ref in the i-th LoD of the target frame to be encoded or decoded, if the decoding device receives a bitstream in which disp_lod_inter_mode[i] is set to 1, an error may be output as non-conformance to the standard.

Note that when i≥NumLoD_Ref in the i-th LoD of the target frame to be encoded or decoded, if the decoding device receives a bitstream in which disp_lod_inter_mode[i] is set to 1, the decoding device may perform inter prediction by setting the prediction value of the i-th LoD to 0. Alternatively, the decoding device may not perform inter prediction on the i-th LoD that satisfies i≥NumLoD_ Ref regardless of the value of disp_lod_inter_mode[i].

In such cases, disp_lod_inter_mode[i] may be used for the purpose of notifying different information.

Note that when i≥NumLoD_ Ref in the i-th LoD of the encoding or decoding target frame, inter prediction may be applied to LoDs for which a reference three-dimensional point exists in the reference frame, and inter prediction may not be applied to LoDs for which a reference three-dimensional point does not exist in the reference frame.

With this, inter prediction can be applied to at least LoDs for which a reference three-dimensional point exists, and encoding efficiency can be improved. Note that in this case, the value of disp_lod_inter_mode[i] corresponding to the LoD to which inter prediction is applied may be set to 1. With this, the bitstream can be correctly decoded by applying the same processing in the decoding device as well.

FIG. 96 is a flowchart illustrating a specific example of encoding processing according to the present embodiment.

The encoding processing illustrated in FIG. 96 enables encoding by inter prediction when the number of points in LoD(i), which is the i-th LoD hierarchy, of a frame to be encoded or decoded (also referred to as a processing frame) and the reference frame are equal (in other words, when the number of points in LoDs of the same hierarchy of the processing frame and the reference frame are equal), determines inter prediction of displacement vectors to be performed on a per LoD basis, and adds, to a header, information disp_lod_inter_mode[i] indicating whether inter prediction was applied for each LoD. Here, i is an integer that varies from 0 to a number that is one less than the number of LoDs, and LoD(i) when i is 0 (in other words, LoD(0)) corresponds to the base LoD hierarchy.

When the number of points in LoD(i) of the processing frame and the reference frame are not equal, inter prediction is disabled, and the output processing of information disp_lod_inter_mode[i] indicating whether inter prediction was applied can be skipped (in other words, disp_lod_inter_mode[i] need not be added to the bitstream). Accordingly, the code amount can be reduced. Note that the present disclosure is not limited to this, and as information indicating whether inter prediction was applied, for example, disp_lod_inter_mode[i] may be set to 0 and added to the bitstream. With this, the decoding device can determine whether inter prediction was applied by decoding disp_lod_inter_mode[i], and can appropriately decode the bitstream.

In step S9601, inter predictor 4805 performs start processing for loop A that repeatedly executes the processing of steps S9602 to S9607, step S9611, and steps S9615 to S9616 described below (where some processing is excluded depending on the determination results of steps S9602 and S9605). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S9602, inter predictor 4805 determines whether the number of three-dimensional points within the focused LoD(i) of the processing frame and the reference frame is the same. If it is determined that the number of three-dimensional points is the same (Yes in step S9602), the process proceeds to step S9603; otherwise (No in step S9602), the process proceeds to step S9611.

In step S9611, inter predictor 4805 determines to encode transform coefficients of displacement vectors within the focused LoD(i) without using inter prediction, and outputs the transform coefficients to quantizer 4806. Note that inter predictor 4805 may add, to a header, information indicating that transform coefficients of displacement vectors within the focused LoD(i) were encoded without using inter prediction. For example, by setting disp_lod_inter_mode(i), which is included in the header and indicates that transform coefficients of displacement vectors were encoded using inter prediction, to 0, it can be indicated that transform coefficients of displacement vectors within the focused LoD(i) were encoded without using inter prediction.

In step S9603, inter predictor 4805 calculates a sum (also referred to as sum_lod_nointer) within the focused LoD(i) of transform coefficients of displacement vectors.

In step S9604, inter predictor 4805 calculates a sum (also referred to as sum_lod_inter) within the focused LoD(i) of prediction residuals when inter prediction is applied to transform coefficients of displacement vectors.

In step S9605, inter predictor 4805 determines whether sum_lod_inter calculated in step S9604 is smaller than sum_lod_nointer calculated in step S9603. If it is determined that sum_lod_inter is smaller than sum_lod_nointer (Yes in step S9605), the process proceeds to step S9606; otherwise (No in step S9605), the process proceeds to step S9615.

In step S9606, inter predictor 4805 determines to encode transform coefficients of displacement vectors within the focused LoD(i) using inter prediction, and outputs the prediction residual to quantizer 4806.

In step S9607, inter predictor 4805 adds, to a header (for example, a header of a stream), information indicating that transform coefficients of displacement vectors within the focused LoD(i) were encoded using inter prediction. For example, by setting disp_lod_inter_mode(i), which is included in the header and indicates that transform coefficients of displacement vectors were encoded using inter prediction, to 1, it can be indicated that transform coefficients of displacement vectors within the focused LoD(i) were encoded using inter prediction.

In step S9615, inter predictor 4805 determines to encode transform coefficients of displacement vectors within the focused LoD(i) without using inter prediction, and outputs the transform coefficients to quantizer 4806.

In step S9616, inter predictor 4805 adds, to a header, information indicating that transform coefficients of displacement vectors within the focused LoD(i) were encoded without using inter prediction. For example, by setting disp_lod_inter_mode(i), which is included in the header and indicates that transform coefficients of displacement vectors were encoded using inter prediction, to 0, it can be indicated that transform coefficients of displacement vectors within the focused LoD(i) were encoded without using inter prediction.

In step S9608, inter predictor 4805 performs end processing for loop A. More specifically, inter predictor 4805 determines whether the processing of steps S9602 to S9607, step S9611, and steps S9615 to S9616 (where some processing is excluded depending on the determination results of steps S9602 and S9605) has been executed for all LoDs, and if not executed, controls so that processing is executed by focusing on an LoD that has not yet been executed.

Note that the above encoding processing is merely one example. In the above example, when the number of three-dimensional points in the reference frame is the same and inter prediction is possible, the encoding device compares the sum of prediction residuals when each of a plurality of methods is used in all LoD hierarchies among the plurality of methods to determine the method to be used for encoding. However, the encoding device may be configured to always perform inter prediction and skip the processing of adding, to the header, information indicating that transform coefficients of displacement vectors within the focused LoD(i) were encoded using inter prediction (specifically, the processing of adding disp_lod_inter_mode(i) as 1 to the header, step S9607 described above). The encoding device may output disp_lod_inter_mode(i) as 0 when inter prediction is not possible.

Through the processing illustrated in FIG. 96, the encoding device can be configured to perform inter prediction only when the number of points within LoD(i) of the processing frame and the reference frame is equal. The encoding device can turn off inter prediction when the reference frame cannot be referenced, such as when the subdivision method changes between the processing frame and the reference frame. With this, the encoding device can avoid degradation of encoding efficiency.

FIG. 97 is a flowchart illustrating a specific example of encoding processing according to the present embodiment.

In the encoding processing illustrated in FIG. 97, among the processing for each LoD, for LoD(0), which is the LoD where i=0 (i.e., the LoD hierarchy corresponding to the base mesh), inter prediction is performed when the number of three-dimensional points within the LoD(0) of the processing frame and the reference frame is equal. For LoD(i) where i>0, inter prediction is not performed when the subdivision method differs between the processing frame and the reference frame, or when the number of three-dimensional points within LoD(i) differs. Under other conditions, inter prediction is performed.

In step S9701, inter predictor 4805 performs start processing for loop A that repeatedly executes the processing of steps S9702 to S9705, step S9711, and step S9715 described below (where some processing is excluded depending on the determination results of steps S9702 and S9711). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S9702, inter predictor 4805 determines whether i > 0. Since i > 0 corresponds to the focused LoD(i) being an LoD different from the layer corresponding to the base mesh, it can also be said that inter predictor 4805 determines whether the focused LoD(i) is an LoD different from the layer corresponding to the base mesh. If it is determined that i > 0 (Yes in step S9702), the process proceeds to step S9703; otherwise (No in step S9702), the process proceeds to step S9711.

In step S9711, inter predictor 4805 determines whether the number of three-dimensional points within the focused LoD(0) of the processing frame and the reference frame is the same. If it is determined that the number of three-dimensional points in the focused LoD(0) of the processing frame and the reference frame is the same (Yes in step S9711), the process proceeds to step S9705; otherwise (No in step S9711), the process proceeds to step S9715.

In step S9703, inter predictor 4805 determines whether the subdivision method of the processing frame and the reference frame is the same. If it is determined that the subdivision method for the processing frame and the reference frame is the same (Yes in step S9703), the process proceeds to step S9704; otherwise (No in step S9703), the process proceeds to step S9715.

In step S9704, inter predictor 4805 determines whether the number of three-dimensional points within the focused LoD(i) of the processing frame and the reference frame is the same. If it is determined that the number of three-dimensional points in the focused LoD(i) of the processing frame and the reference frame is the same (Yes in step S9704), the process proceeds to step S9705; otherwise (No in step S9704), the process proceeds to step S9715.

In step S9705, inter predictor 4805 determines to encode transform coefficients of displacement vectors within the focused LoD(i) using inter prediction, and outputs the prediction residual to quantizer 4806. Note that inter predictor 4805 may add, to a header (for example, a header of a stream), information indicating that transform coefficients of displacement vectors within the focused LoD(i) were encoded using inter prediction. For example, by setting disp_lod_inter_mode(i), which is included in the header and indicates that transform coefficients of displacement vectors were encoded using inter prediction, to 1, it can be indicated that transform coefficients of displacement vectors within the focused LoD(i) were encoded using inter prediction.

In step S9715, inter predictor 4805 determines to encode transform coefficients of displacement vectors within the focused LoD(i) without using inter prediction, and outputs the transform coefficients to quantizer 4806. Note that inter predictor 4805 may add, to a header, information indicating that transform coefficients of displacement vectors within the focused LoD(i) were encoded without using inter prediction. For example, by setting disp_lod_inter_mode(i), which is included in the header and indicates that transform coefficients of displacement vectors were encoded using inter prediction, to 0, it can be indicated that transform coefficients of displacement vectors within the focused LoD(i) were encoded without using inter prediction.

In step S9706, inter predictor 4805 performs end processing for loop A. More specifically, inter predictor 4805 determines whether the processing of steps S9702 to S9705, step S9711, and step S9715 (where some processing is excluded depending on the determination results of steps S9702 and S9711) has been executed for all LoDs, and if not executed, controls so that processing is executed by focusing on an LoD that has not yet been executed.

Through the processing illustrated in FIG. 96, the encoding device can be expected to avoid degradation of encoding efficiency by not performing inter prediction when the number of three-dimensional points of the base mesh differs, when the subdivision method differs between the processing frame and the reference frame in the LoD(i) layer (where i>0), or when the number of three-dimensional points within LoD(i) differs. This is because in the above cases, there is a high possibility that coordinates are misaligned between frames.

Note that the subdivision method may be determined based on related parameters, differences in encoded coordinates, or the number of three-dimensional points of the base mesh.

Note that when inter prediction is not performed, information disp_lod_inter_mode[i] indicating whether inter prediction was applied need not be added to the bitstream. Accordingly, the code amount can be reduced. Note that the present disclosure is not limited to this, and for example, the value of disp_lod_inter_mode[i] may be set to 0 and added to the bitstream. With this, the decoding device can determine whether inter prediction was applied by decoding disp_lod_inter_mode[i], and can appropriately decode the bitstream.

Note that the above encoding processing is merely one example. In the above example, when the number of three-dimensional points in the reference frame is the same and inter prediction is possible, the encoding device compares the sum of prediction residuals when each of a plurality of methods is used in all LoD hierarchies among the plurality of methods to determine the method to be used for encoding. However, the encoding device may be configured to always perform inter prediction and skip the processing of adding, to the header, information indicating that transform coefficients of displacement vectors within the focused LoD(i) were encoded using inter prediction (specifically, the processing of adding disp_lod_inter_mode(i) as 1 to the header, step S9705 described above). The encoding device may output disp_lod_inter_mode(i) as 0 when inter prediction is not possible.

FIG. 98 is a flowchart illustrating a specific example of encoding processing according to the present embodiment.

In the encoding processing illustrated in FIG. 98, when the structure of the base mesh of the processing frame and the reference frame is the same, inter prediction processing is performed similarly to the series of processing illustrated in FIG. 97, and when the structure of the base mesh of the processing frame and the reference frame differs, inter prediction processing is not performed. Note that the structure of the base mesh can be determined based on parameters related to the structure of the base mesh, or the number of three-dimensional points included in the base mesh.

In step S9801, inter predictor 4805 determines whether the structure of LoD(0) of the processing frame and the reference frame is the same. If it is determined that the structure of LoD(0) of the processing frame and the reference frame is the same (Yes in step S9801), the process proceeds to step S9802; otherwise (No in step S9801), the process proceeds to step S9811.

In step S9811, inter predictor 4805 performs start processing for loop B that repeatedly executes the processing of step S9812 described below. In loop B, focus is placed on each of the one or more LoDs, processing is performed for the focused LoD, and ultimately control is carried out so that processing is performed for all LoDs. In loop B, an integer i that varies from 0 to a number that is one less than the number of LoDs is used as an index. Note that the LoD being focused on (i.e., LoD(i)) is also referred to as the focused LoD or focused LoD(i). Loop B can also be referred to as an LoD loop.

In step S9812, inter predictor 4805 determines to encode transform coefficients of displacement vectors within the focused LoD(i) without using inter prediction, and outputs the transform coefficients to quantizer 4806. Note that inter predictor 4805 may add, to a header, information indicating that transform coefficients of displacement vectors within the focused LoD(i) were encoded without using inter prediction. For example, by setting disp_lod_inter_mode(i), which is included in the header and indicates that transform coefficients of displacement vectors were encoded using inter prediction, to 0, it can be indicated that transform coefficients of displacement vectors within the focused LoD(i) were encoded without using inter prediction.

In step S9813, inter predictor 4805 performs end processing for loop B. More specifically, inter predictor 4805 determines whether the processing of step S9812 has been executed for all LoDs, and if not executed, controls so that processing is executed by focusing on an LoD that has not yet been executed.

The processing in steps S9802 to S9807, step S9821, and step S9825 is the same as the processing in steps S9701 to S9706, step S9711, and step S9715 illustrated in FIG. 97, respectively.

Through the processing illustrated in FIG. 98, the encoding device may be able to avoid degradation of encoding efficiency by not performing inter prediction. When the structure of the base mesh differs between the processing frame and the reference frame, there is a high possibility that the correlation between frames is relatively small, making effective inter prediction unlikely. Thus, the encoding device can avoid degradation of encoding efficiency by not performing inter prediction.

Note that when inter prediction is not performed, information disp_lod_inter_mode[i] indicating whether inter prediction was applied need not be added to the bitstream. Accordingly, the code amount can be reduced. Note that the present disclosure is not limited to this, and for example, the value of disp_lod_inter_mode[i] may be set to 0 and added to the bitstream. With this, the decoding device can determine whether inter prediction was applied by decoding disp_lod_inter_mode[i], and can appropriately decode the bitstream.

Note that the above encoding processing is merely one example. In the above example, the encoding device performs inter prediction when conditions allow inter prediction, and does not perform inter prediction when conditions do not allow inter prediction. However, the encoding device may, as in the encoding processing illustrated in FIG. 49, FIG. 52, or FIG. 96, when conditions allow inter prediction, determine whether to perform inter prediction, determine which processing to perform based on the determination result, and output disp_lod_inter_mode.

FIG. 99 is a flowchart illustrating a specific example of encoding processing according to the present embodiment.

In the encoding processing illustrated in FIG. 99, for each three-dimensional point P(i, j) in LoD(i) in the processing frame, a transform coefficient when performing processing to encode using inter prediction and a prediction residual when performing processing to encode without using inter prediction are compared, the processing used to derive the smaller one of the transform coefficient and the prediction residual is selected, and selection information disp_point_inter_mode of the processing at three-dimensional point P(i, j) is added to the header. Note that three-dimensional point P(i, j) represents the j-th three-dimensional point in LoD(i).

The encoding device can select whether to perform inter prediction on a three-dimensional point basis, so encoding efficiency can be expected to improve even when, for example, inter-frame correlation changes within an LoD.

In step S9901, inter predictor 4805 performs start processing for loop A that repeatedly executes the processing of steps S9902 to S9908 and steps S9911 to S9912 described below (where some processing is excluded depending on the determination result of step S9905). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S9902, inter predictor 4805 performs start processing for loop B that repeatedly executes the processing of steps S9903 to S9907 and steps S9911 to S9912 described below (where some processing is excluded depending on the determination result of step S9905). In loop B, focus is placed on each of the one or more three-dimensional points included in the focused LoD, processing is performed for the focused three-dimensional point, and ultimately control is carried out so that processing is performed for all three-dimensional points included in the focused LoD. In loop B, an integer j that varies from 0 to a number that is one less than the number of three-dimensional points included in the focused LoD (i.e., LoD(i)) is used as an index. Note that the three-dimensional point being focused on is also referred to as the focused three-dimensional point or three-dimensional point P(i, j). Loop B can also be referred to as a Point loop.

In step S9903, inter predictor 4805 calculates transform coefficients (also referred to as point_lod_nointer) of a displacement vector of three-dimensional point P(i, j).

In step S9904, inter predictor 4805 calculates a prediction residual (also referred to as point_lod_inter) when inter prediction is applied to transform coefficients of displacement vectors of three-dimensional point P(i, j).

In step S9905, inter predictor 4805 determines whether point_lod_inter calculated in step S9904 is smaller than point_lod_nointer calculated in step S9903. If it is determined that point_lod_inter is smaller than point_lod_nointer (Yes in step S9905), the process proceeds to step S9906; otherwise (No in step S9905), the process proceeds to step S9911.

In step S9906, inter predictor 4805 determines to encode transform coefficients of displacement vectors of three-dimensional point P(i, j) using inter prediction, and outputs the prediction residual to quantizer 4806.

In step S9907, inter predictor 4805 adds, to a header (for example, a header of a stream), information indicating that transform coefficients of a displacement vector of three-dimensional point P (i, j) were encoded using inter prediction. For example, by setting disp_point_inter_mode(i, j), which is included in the header and indicates that transform coefficients of the displacement vector of three-dimensional point P(i, j) were encoded using inter prediction, to 1, it can be indicated that transform coefficients of the displacement vector of three-dimensional point P(i, j) were encoded using inter prediction.

In step S9911, inter predictor 4805 determines to encode transform coefficients of the displacement vector of three-dimensional point P(i, j) without using inter prediction, and outputs the transform coefficients to quantizer 4806.

In step S9912, inter predictor 4805 adds, to a header, information indicating that transform coefficients of a displacement vector of three-dimensional point P(i, j) were encoded without using inter prediction. For example, by setting disp_point_inter_mode(i, j), which is included in the header and indicates that transform coefficients of the displacement vector of three-dimensional point P(i, j) were encoded using inter prediction, to 0, it can be indicated that transform coefficients of the displacement vector of three-dimensional point P(i, j) were encoded without using inter prediction.

In step S9908, inter predictor 4805 performs end processing for loop B. More specifically, inter predictor 4805 determines whether the processing of steps S9903 to S9907 and steps S9911 to S9912 (where some processing is excluded depending on the determination result of step S9905) has been executed for all three-dimensional points, and if not executed, controls so that processing is executed by focusing on a three-dimensional point that has not yet been executed.

In step S9909, inter predictor 4805 performs end processing for loop A. More specifically, inter predictor 4805 determines whether the processing of steps S9902 to S9908 and steps S9911 to S9912 (where some processing is excluded depending on the determination result of step S9905) has been executed for all LoDs, and if not executed, controls so that processing is executed by focusing on an LoD that has not yet been executed.

Note that the above encoding processing is merely one example. In the above example, the encoding device performs processing at all points of the displacement vector, but may, for example, determine whether to perform inter prediction in units of LoD, and perform the above processing for each three-dimensional point only for LoDs for which inter prediction is performed. The encoding processing may be combined with the encoding processing illustrated in FIG. 96, FIG. 97, or FIG. 98. Prediction unit DVG illustrated in FIG. 84, FIG. 86, FIG. 87, or FIG. 88 may be used instead of LoD.

FIG. 100 is a flowchart illustrating a specific example of encoding processing according to the present embodiment.

In the encoding processing illustrated in FIG. 100, only when three-dimensional point P(i, j) in LoD(i) in the reference frame exists, a transform coefficient when performing processing to encode using inter prediction and a prediction residual when performing processing to encode without using inter prediction are compared, the processing used to derive the smaller one of the transform coefficient and the prediction residual is selected, and selection information disp_point_inter_mode of the processing at three-dimensional point P(i, j) is added to the header.

The encoding device does not perform inter prediction when three-dimensional point P(i, j) in LoD(i) in the reference frame does not exist.

The encoding device can perform inter prediction even when the number of three-dimensional points within LoD differs between the processing frame and the reference frame, and can avoid degradation of encoding efficiency by not performing inter prediction when the reference frame cannot be referenced.

The encoding device may set selection information disp_point_inter_mode to 0 and add it to the header when three-dimensional point P'(i, j) in LoD(i) in the reference frame does not exist.

The processing in steps S10001 and S10002 is the same as the processing in steps S9901 and S9902 illustrated in FIG. 99.

In step S10003, inter predictor 4805 determines whether three-dimensional point P(i, j) of the reference frame exists. If it is determined that three-dimensional point P(i, j) of the reference frame exists (Yes in step S10003), the process proceeds to step S10004; otherwise (No in step S10003), the process proceeds to step S10021.

In step S10021, inter predictor 4805 determines to encode transform coefficients of the displacement vector of three-dimensional point P(i, j) without using inter prediction, and outputs the transform coefficients to quantizer 4806. Note that inter predictor 4805 may add, to a header, information indicating that transform coefficients of the displacement vector of three-dimensional point P(i, j) were encoded without using inter prediction. For example, by setting disp_point_inter_mode(i, j), which is included in the header and indicates that transform coefficients of the displacement vector of three-dimensional point P(i, j) were encoded using inter prediction, to 0, it can be indicated that transform coefficients of the displacement vector of three-dimensional point P(i, j) were encoded without using inter prediction.

The processing in steps S10004 to S10010 and steps S10025 to S10026 is the same as the processing in steps S9903 to S9909 and steps S9911 to S9912 illustrated in FIG. 99.

Note that the above encoding processing is merely one example. In the above example, the encoding device performs processing at all points of the displacement vector, but may, for example, determine whether to perform inter prediction in units of LoD, and perform the above processing for each three-dimensional point only for LoDs for which inter prediction is performed. The encoding processing may be combined with the encoding processing illustrated in FIG. 96, FIG. 97, or FIG. 98. Prediction unit DVG illustrated in FIG. 84, FIG. 86, FIG. 87, or FIG. 88 may be used instead of LoD.

FIG. 101 is a flowchart illustrating a specific example of encoding processing according to the present embodiment.

In the encoding processing illustrated in FIG. 101, reference point P'(i, j) corresponding to three-dimensional point P(i, j) in LoD(i) in the processing frame is determined for each three-dimensional point. For example, as illustrated in FIG. 59, the three-dimensional point having the smallest distance from three-dimensional point P(i, j) (in other words, the three-dimensional point closest to three-dimensional point P(i, j)) may be used as three-dimensional point P'(i, j). Note that three-dimensional point P'(i, j) represents the j-th three-dimensional point in LoD(i).

In the encoding processing, only when three-dimensional point P'(i, j) can be determined as described above, a transform coefficient when performing processing to encode using inter prediction and a prediction residual when performing processing to encode without using inter prediction are compared, the processing used to derive the smaller one of the transform coefficient and the prediction residual is selected, and selection information disp_point_inter_mode of the processing at three-dimensional point P(i, j) is added to the header.

In the encoding processing, inter prediction is not performed when three-dimensional point P'(i, j) does not exist in the reference frame.

In the encoding processing, inter prediction can be performed even when the number of three-dimensional points within LoD differs between the processing frame and the reference frame, when the subdivision method differs, or when the structure of the base mesh differs, and degradation of encoding efficiency can be avoided by not performing inter prediction when the reference frame cannot be referenced.

In the encoding processing, selection information disp_point_inter_mode may be set to 0 and added to the header when three-dimensional point P'(i, j) in LoD(i) in the reference frame does not exist.

In step S10101, inter predictor 4805 performs start processing for loop A that repeatedly executes the processing of steps S10102 to S10110, S10121, and steps S10125 to S10126 described below (where some processing is excluded depending on the determination results of steps S10104 and S10107). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S10102, inter predictor 4805 performs start processing for loop B that repeatedly executes the processing of steps S10103 to S10109, step S10121, and steps S10125 to S10126 described below (where some processing is excluded depending on the determination results of steps S10104 and S10107). In loop B, focus is placed on each of the one or more three-dimensional points included in the focused LoD, processing is performed for the focused three-dimensional point, and ultimately control is carried out so that processing is performed for all three-dimensional points included in the focused LoD. In loop B, an integer j that varies from 0 to a number that is one less than the number of three-dimensional points included in the focused LoD (i.e., LoD(i)) is used as an index. Note that the three-dimensional point being focused on is also referred to as the focused three-dimensional point or three-dimensional point P(i, j). Loop B can also be referred to as a Point loop.

In step S10103, inter predictor 4805 determines three-dimensional point P'(i, j) of the reference frame. For example, inter predictor 4805 determines, as three-dimensional point P'(i, j), the three-dimensional point having the smallest distance from three-dimensional point P(i, j) in the processing frame, among the three-dimensional points included in focused LoD(i) of the reference frame. Inter predictor 4805 may determine, as three-dimensional point P'(i, j), the three-dimensional point having the smallest distance from three-dimensional point P(i, j), among the three-dimensional points that are included in focused LoD(i) of the reference frame and have a distance from three-dimensional point P(i, j) in the processing frame that is smaller than a predetermined value.

In step S10104, inter predictor 4805 determines whether three-dimensional point P'(i, j) of the reference frame exists. If it is determined that three-dimensional point P'(i, j) of the reference frame exists (Yes in step S10104), the process proceeds to step S10105; otherwise (No in step S10104), the process proceeds to step S10121.

In step S10121, inter predictor 4805 determines to encode transform coefficients of the displacement vector of three-dimensional point P(i, j) without using inter prediction, and outputs the transform coefficients to quantizer 4806. Note that inter predictor 4805 may add, to a header, information indicating that transform coefficients of the displacement vector of three-dimensional point P(i, j) were encoded without using inter prediction. For example, by setting disp_point_inter_mode(i, j), which is included in the header and indicates that transform coefficients of the displacement vector of three-dimensional point P(i, j) were encoded using inter prediction, to 0, it can be indicated that transform coefficients of the displacement vector of three-dimensional point P(i, j) were encoded without using inter prediction.

In step S10105, inter predictor 4805 calculates transform coefficients (also referred to as point_lod_nointer) of the displacement vector of three-dimensional point P(i, j).

In step S10106, inter predictor 4805 calculates a prediction residual (also referred to as point_lod_inter) when inter prediction is applied to transform coefficients of the displacement vector of three-dimensional point P(i, j). Here, inter predictor 4805 can calculate the prediction residual (point_lod_inter) described above by performing inter prediction using three-dimensional point P'(i, j) as a reference three-dimensional point.

In step S10107, inter predictor 4805 determines whether point_lod_inter calculated in step S10106 is smaller than point_lod_nointer calculated in step S10105. If it is determined that point_lod_inter is smaller than point_lod_nointer (Yes in step S10107), the process proceeds to step S10108; otherwise (No in step S10107), the process proceeds to step S10125.

In step S10108, inter predictor 4805 determines to encode transform coefficients of the displacement vector of three-dimensional point P(i, j) using inter prediction, and outputs the prediction residual to quantizer 4806. Here, inter predictor 4805 can calculate the prediction residual described above by performing inter prediction using three-dimensional point P'(i, j) as a reference three-dimensional point.

In step S10109, inter predictor 4805 adds, to a header (for example, a header of a stream), information indicating that transform coefficients of displacement vectors of three-dimensional point P(i, j) were encoded using inter prediction. For example, by setting disp_point_inter_mode(i, j), which is included in the header and indicates that transform coefficients of the displacement vector of three-dimensional point P(i, j) were encoded using inter prediction, to 1, it can be indicated that transform coefficients of the displacement vector of three-dimensional point P(i, j) were encoded using inter prediction.

In step S10125, inter predictor 4805 determines to encode transform coefficients of the displacement vector of three-dimensional point P(i, j) without using inter prediction, and outputs the transform coefficients to quantizer 4806.

In step S10126, inter predictor 4805 adds, to a header, information indicating that transform coefficients of the displacement vector of three-dimensional point P(i, j) were encoded without using inter prediction. For example, by setting disp_point_inter_mode(i, j), which is included in the header and indicates that transform coefficients of the displacement vector of three-dimensional point P(i, j) were encoded using inter prediction, to 0, it can be indicated that transform coefficients of the displacement vector of three-dimensional point P(i, j) were encoded without using inter prediction.

In step S10110, inter predictor 4805 performs end processing for loop B. More specifically, inter predictor 4805 determines whether the processing of steps S10103 to S10109, step S10121, and steps S10125 to S10126 (where some processing is excluded depending on the determination results of steps S10104 and S10107) has been executed for all LoDs, and if not executed, controls so that processing is executed by focusing on a three-dimensional point that has not yet been executed.

In step S10111, inter predictor 4805 performs end processing for loop A. More specifically, inter predictor 4805 determines whether the processing of steps S10102 to S10110, step S10121, and steps S10125 to S10126 (where some processing is excluded depending on the determination results of steps S10104 and S10107) has been executed for all LoDs, and if not executed, controls so that processing is executed by focusing on an LoD that has not yet been executed.

Note that the above encoding processing is merely one example. In the above example, processing is performed at all points of the displacement vector, but it may be determined whether to perform inter prediction in units of LoD, for example, and the above processing may be performed for each three-dimensional point only for LoDs for which inter prediction is performed. The encoding processing may be combined with the encoding processing illustrated in FIG. 96, FIG. 97, or FIG. 98. Prediction unit DVG illustrated in FIG. 84, FIG. 86, FIG. 87, or FIG. 88 may be used instead of LoD.

FIG. 102 is a flowchart illustrating a specific example of decoding processing according to the present embodiment.

The decoding processing illustrated in FIG. 102 decodes a bitstream encoded by enabling decoding by inter prediction when the number of points in LoD(i) of the processing frame and the reference frame are equal, determining a unit of inter prediction of displacement vectors for each LoD, and adding information disp_lod_inter_mode indicating whether inter prediction was applied for each LoD to the header.

When the number of points in LoD(i) of the processing frame and the reference frame are not equal, inter prediction is disabled, and inter prediction is not performed.

By performing inter prediction only when the number of points in LoD(i) of the processing frame and the reference frame are equal, inter prediction is turned off when the reference frame cannot be referenced, such as when the subdivision method changes between frames, thereby avoiding degradation of encoding efficiency.

In step S10201, reconstructor 5004 performs start processing for loop A that repeatedly executes the processing of steps S10202 to S10204 and step S10211 described below (where some processing is excluded depending on the determination results of steps S10202 and S10203). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S10202, reconstructor 5004 determines whether the number of three-dimensional points within the focused LoD(i) of the processing frame and the reference frame is the same. If it is determined that the number of three-dimensional points is the same (Yes in step S10202), the process proceeds to step S10203; otherwise (No in step S10202), the process proceeds to step S10211.

In step S10203, reconstructor 5004 determines whether information indicating that transform coefficients of displacement vectors within focused LoD(i) were encoded using inter prediction is added to a header. The information is, for example, information indicating that disp_lod_inter_mode(i) is 1. If it is determined that the information is added to the header (Yes in step S10203), the process proceeds to step S10204; otherwise (No in step S10203), the process proceeds to step S10211.

In step S10204, reconstructor 5004 determines that transform coefficients of displacement vectors within focused LoD(i) were encoded using inter prediction, decodes the transform coefficients by adding transform coefficients of the reference frame to the prediction residual provided from inverse quantizer 5003, and outputs the transform coefficients.

In step S10211, reconstructor 5004 determines that transform coefficients of displacement vectors within focused LoD(i) were encoded without using inter prediction, and outputs the transform coefficients provided from inverse quantizer 5003.

In step S10205, reconstructor 5004 performs end processing for loop A. More specifically, reconstructor 5004 determines whether the processing of steps S10202 to S10204 and step S10211 (where some processing is excluded depending on the determination results of steps S10202 and S10203) has been executed for all LoDs, and if not executed, controls so that processing is executed by focusing on an LoD that has not yet been executed.

Note that when inter prediction is not used, disp_lod_inter_mode may be received, and in that case, it may be treated as indicating that disp_lod_inter_mode is 0, that is, inter prediction is not performed.

FIG. 103 is a flowchart illustrating a specific example of decoding processing according to the present embodiment.

In the decoding processing illustrated in FIG. 103, among the processing for each LoD, for LoD(0), which is the LoD where i=0 (i.e., the LoD hierarchy corresponding to the base mesh), inter prediction is performed when the number of three-dimensional points within the LoD(0) of the processing frame and the reference frame is equal. For LoD(i) where i>0, inter prediction is not performed when the subdivision method differs between the processing frame and the reference frame, or when the number of three-dimensional points within LoD(i) differs. Under other conditions, inter prediction is performed.

In step S10301, reconstructor 5004 performs start processing for loop A that repeatedly executes the processing of steps S10302 to S102054, step S10311, and step S10315 described below (where some processing is excluded depending on the determination results of steps S10302, S10303, and S10304). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S10302, reconstructor 5004 determines whether i > 0. Since i > 0 corresponds to the focused LoD(i) being an LoD different from the layer corresponding to the base mesh, it can also be said that inter predictor 4805 determines whether the focused LoD(i) is an LoD different from the layer corresponding to the base mesh. If it is determined that i > 0 (Yes in step S10302), the process proceeds to step S10303; otherwise (No in step S10302), the process proceeds to step S10311.

In step S10311, reconstructor 5004 determines whether the number of three-dimensional points within the focused LoD(0) of the processing frame and the reference frame is the same. If it is determined that the number of three-dimensional points in the focused LoD(0) of the processing frame and the reference frame is the same (Yes in step S10311), the process proceeds to step S10305; otherwise (No in step S10311), the process proceeds to step S10315.

In step S10303, reconstructor 5004 determines whether the subdivision method of the processing frame and the reference frame is the same. If it is determined that the subdivision method for the processing frame and the reference frame is the same (Yes in step S10303), the process proceeds to step S10304; otherwise (No in step S10303), the process proceeds to step S10315.

In step S10304, reconstructor 5004 determines whether the number of three-dimensional points within the focused LoD(i) of the processing frame and the reference frame is the same. If it is determined that the number of three-dimensional points in the focused LoD(i) of the processing frame and the reference frame is the same (Yes in step S10304), the process proceeds to step S10305; otherwise (No in step S10304), the process proceeds to step S10315.

In step S10305, reconstructor 5004 determines that transform coefficients of displacement vectors within the focused LoD(i) were encoded using inter prediction, decodes the transform coefficients by adding transform coefficients of the reference frame to the prediction residual provided from inverse quantizer 5003, and outputs the transform coefficients.

In step S10315, reconstructor 5004 determines that transform coefficients of displacement vectors within the focused LoD(i) were encoded without using inter prediction, and outputs the transform coefficients provided from inverse quantizer 5003.

In step S10306, reconstructor 5004 performs end processing for loop A. More specifically, reconstructor 5004 determines whether the processing of steps S10302 to S10305, step S10311, and step S10315 (where some processing is excluded depending on the determination results of steps S10302, S10303, and S10304) has been executed for all LoDs, and if not executed, controls so that processing is executed by focusing on an LoD that has not yet been executed.

Through the processing illustrated in FIG. 103, the decoding device can be expected to avoid degradation of encoding efficiency by not performing inter prediction when the number of three-dimensional points of the base mesh differs between the processing frame and the reference frame, when the subdivision method differs between the processing frame and the reference frame in the LoD(i) layer (where i>0), or when the number of three-dimensional points within LoD(i) differs. This is because in the above cases, there is a high possibility that coordinates are misaligned between frames.

Note that the subdivision method may be determined based on related parameters, differences in encoded coordinates, or the number of three-dimensional points of the base mesh.

Note that when inter prediction is not used, disp_lod_inter_mode may be received, and in that case, it may be treated as indicating that disp_lod_inter_mode is 0, that is, inter prediction is not performed.

FIG. 104 is a flowchart illustrating a specific example of decoding processing according to the present embodiment.

In the decoding processing illustrated in FIG. 104, when the structure of the base mesh of the processing frame and the reference frame is the same, inter prediction processing is performed similarly to the series of processing illustrated in FIG. 103, and when the structure of the base mesh of the processing frame and the reference frame differs, inter prediction processing is not performed. Note that the structure of the base mesh can be determined based on parameters related to the structure of the base mesh, or the number of three-dimensional points included in the base mesh.

In step S10401, reconstructor 5004 determines whether the structure of LoD(0) of the processing frame and the reference frame is the same. If it is determined that the structure of LoD(0) of the processing frame and the reference frame is the same (Yes in step S10401), the process proceeds to step S10402; otherwise (No in step S10401), the process proceeds to step S10411.

In step S10411, reconstructor 5004 performs start processing for loop B that repeatedly executes the processing of step S10412 described below. In loop B, focus is placed on each of the one or more LoDs, processing is performed for the focused LoD, and ultimately control is carried out so that processing is performed for all LoDs. In loop B, an integer i that varies from 0 to a number that is one less than the number of LoDs is used as an index. Note that the LoD being focused on (i.e., LoD(i)) is also referred to as the focused LoD or focused LoD(i). Loop B can also be referred to as an LoD loop.

In step S10412, reconstructor 5004 determines that transform coefficients of displacement vectors within the focused LoD(i) were encoded without using inter prediction, and outputs the transform coefficients provided from inverse quantizer 5003.

In step S10413, reconstructor 5004 performs end processing for loop B. More specifically, reconstructor 5004 determines whether the processing of step S10412 has been executed for all LoDs, and if not executed, controls so that processing is executed by focusing on an LoD that has not yet been executed.

The processing in steps S10402 to S10407, step S10421, and step S10425 is the same as the processing in steps S10301 to S10306, step S10311, and step S10315 illustrated in FIG. 103, respectively.

Through the processing illustrated in FIG. 104, the decoding device may be able to avoid degradation of encoding efficiency by not performing inter prediction. When the structure of the base mesh differs between the processing frame and the reference frame, there is a high possibility that the correlation between frames is relatively small, making effective inter prediction unlikely. Thus, the encoding device can avoid degradation of encoding efficiency by not performing inter prediction.

Note that when inter prediction is not used, disp_lod_inter_mode may be received, and in that case, it may be treated as indicating that disp_lod_inter_mode is 0, that is, inter prediction is not performed.

FIG. 105 is a flowchart illustrating a specific example of decoding processing according to the present embodiment.

The decoding processing illustrated in FIG. 105 illustrates an example in which a bitstream encoded by determining a unit of inter prediction of displacement vectors for each three-dimensional point P(i, j) in LoD(i) and adding information disp_point_inter_mode indicating whether inter prediction was applied for each three-dimensional point to the header is decoded. With this, inter prediction can be switched on or off for each three-dimensional point, and a bitstream with improved encoding efficiency can be appropriately decoded.

Since inter prediction can be selected on a three-dimensional point basis, encoding efficiency can be expected to improve even when, for example, inter-frame correlation changes within an LoD.

In step S10501, reconstructor 5004 performs start processing for loop A that repeatedly executes the processing of steps S10502 to S10505 and step S10511 described below (where some processing is excluded depending on the determination result of step S10503). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S10502, reconstructor 5004 performs start processing for loop B that repeatedly executes the processing of steps S10503 to S10504 and step S10511 described below (where some processing is excluded depending on the determination result of step S10503). In loop B, focus is placed on each of the one or more three-dimensional points included in the focused LoD, processing is performed for the focused three-dimensional point, and ultimately control is carried out so that processing is performed for all three-dimensional points included in the focused LoD. In loop B, an integer j that varies from 0 to a number that is one less than the number of three-dimensional points included in the focused LoD (i.e., LoD(i)) is used as an index. Note that the three-dimensional point being focused on is also referred to as the focused three-dimensional point or three-dimensional point P(i, j). Loop B can also be referred to as a Point loop.

In step S10503, reconstructor 5004 determines whether information indicating that transform coefficients of the displacement vector of three-dimensional point P(i, j) were encoded using inter prediction is added to a header. The information is, for example, information indicating that disp_lod_inter_mode(i, j) is 1. If it is determined that the information is added to the header (Yes in step S10503), the process proceeds to step S10504; otherwise (No in step S10503), the process proceeds to step S10511.

In step S10504, reconstructor 5004 determines that transform coefficients of the displacement vector of three-dimensional point P(i, j) were encoded using inter prediction, decodes the transform coefficients by adding transform coefficients of the reference frame to the prediction residual provided from inverse quantizer 5003, and outputs the transform coefficients.

In step S10511, reconstructor 5004 determines that transform coefficients of the displacement vector of three-dimensional point P(i, j) were encoded without using inter prediction, and outputs the transform coefficients provided from inverse quantizer 5003.

In step S10505, reconstructor 5004 performs end processing for loop B. More specifically, reconstructor 5004 determines whether the processing of steps S10503 to S10504 and step S10511 (where some processing is excluded depending on the determination result of step S10503) has been executed for all three-dimensional points, and if not executed, controls so that processing is executed by focusing on a three-dimensional point that has not yet been executed.

In step S10506, reconstructor 5004 performs end processing for loop A. More specifically, reconstructor 5004 determines whether the processing of steps S10502 to S10505 and step S10511 (where some processing is excluded depending on the determination result of step S10503) has been executed for all LoDs, and if not executed, controls so that processing is executed by focusing on an LoD that has not yet been executed.

Note that when inter prediction is not used, disp_lod_inter_mode may be received, and in that case, it may be treated as indicating that disp_lod_inter_mode is 0, that is, inter prediction is not performed.

FIG. 106 is a flowchart illustrating a specific example of decoding processing according to the present embodiment.

The decoding processing illustrated in FIG. 106 illustrates an example in which a bitstream encoded by determining a unit of inter prediction of displacement vectors for each three-dimensional point P(i, j) in LoD(i) only when three-dimensional point P(i, j) in LoD(i) in the reference frame exists and adding information disp_point_inter_mode indicating whether inter prediction was applied for each three-dimensional point to the header is decoded. With this, inter prediction can be switched on or off for each three-dimensional point, and a bitstream with improved encoding efficiency can be appropriately decoded.

When three-dimensional point P(i, j) in LoD(i) in the reference frame does not exist, inter prediction is not performed.

Inter prediction can be performed even when the number of three-dimensional points in LoD differs between the processing frame and the reference frame, and degradation of encoding efficiency can be avoided by not performing inter prediction when the reference frame cannot be referenced.

The processing in steps S10601 and S10602 is the same as the processing in steps S10501 and S10502 illustrated in FIG. 105.

In step S10603, reconstructor 5004 determines whether three-dimensional point P(i, j) of the reference frame exists. If it is determined that three-dimensional point P(i, j) of the reference frame exists (Yes in step S10603), the process proceeds to step S10604; otherwise (No in step S10603), the process proceeds to step S10611.

In step S10611, reconstructor 5004 determines that transform coefficients of the displacement vector of three-dimensional point P(i, j) were encoded without using inter prediction, and outputs the transform coefficients provided from inverse quantizer 5003.

In step S10604, reconstructor 5004 determines whether information indicating that transform coefficients of the displacement vector of three-dimensional point P(i, j) were encoded using inter prediction is added to a header. The information is, for example, information indicating that disp_lod_inter_mode(i, j) is 1. If it is determined that the information is added to the header (Yes in step S10604), the process proceeds to step S10605; otherwise (No in step S10604), the process proceeds to step S10611.

In step S10605, reconstructor 5004 determines that transform coefficients of the displacement vector of three-dimensional point P(i, j) were encoded using inter prediction, decodes the transform coefficients by adding transform coefficients of the reference frame to the prediction residual provided from inverse quantizer 5003, and outputs the transform coefficients.

The processing in steps S10606 and S10607 is the same as the processing in steps S10505 and S10506 illustrated in FIG. 105.

Note that when inter prediction is not used, disp_lod_inter_mode may be received, and in that case, it may be treated as indicating that disp_lod_inter_mode is 0, that is, inter prediction is not performed.

FIG. 107 is a flowchart illustrating a specific example of decoding processing according to the present embodiment.

In the decoding processing illustrated in FIG. 107, reference point P'(i, j) corresponding to three-dimensional point P(i, j) in LoD(i) in the processing frame is determined for each three-dimensional point. For example, as illustrated in FIG. 59, the three-dimensional point having the smallest distance from three-dimensional point P(i, j) (in other words, the three-dimensional point closest to three-dimensional point P(i, j)) may be used as three-dimensional point P'(i, j).

The decoding processing illustrates an example in which a bitstream encoded by determining a unit of inter prediction of displacement vectors for each three-dimensional point P(i, j) in LoD(i) only when three-dimensional point P'(i, j) can be determined and adding information disp_point_inter_mode indicating whether inter prediction was applied for each three-dimensional point to the header is decoded. With this, inter prediction can be switched on or off for each three-dimensional point, and a bitstream with improved encoding efficiency can be appropriately decoded.

In the decoding processing, inter prediction is not performed when three-dimensional point P'(i, j) does not exist in the reference frame.

In the decoding processing, inter prediction can be performed even when the number of three-dimensional points of LoD differs between the processing frame and the reference frame, when the subdivision method differs, or when the structure of the base mesh differs, and degradation of encoding efficiency can be avoided by not performing inter prediction when the reference frame cannot be referenced.

In step S10701, reconstructor 5004 performs start processing for loop A that repeatedly executes the processing of steps S10702 to S10707 and step S10711 described below (where some processing is excluded depending on the determination results of steps S10704 and S10705). In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S10702, reconstructor 5004 performs start processing for loop B that repeatedly executes the processing of steps S10703 to S10706 and step S10711 described below (where some processing is excluded depending on the determination results of steps S10704 and S10705). In loop B, focus is placed on each of the one or more three-dimensional points included in the focused LoD, processing is performed for the focused three-dimensional point, and ultimately control is carried out so that processing is performed for all three-dimensional points included in the focused LoD. In loop B, an integer j that varies from 0 to a number that is one less than the number of three-dimensional points included in the focused LoD (i.e., LoD(i)) is used as an index. Note that the three-dimensional point being focused on is also referred to as the focused three-dimensional point or three-dimensional point P(i, j). Loop B can also be referred to as a Point loop.

In step S10703, reconstructor 5004 determines three-dimensional point P'(i, j) of the reference frame. For example, reconstructor 5004 determines, as three-dimensional point P'(i, j), the three-dimensional point having the smallest distance from three-dimensional point P(i, j) in the processing frame, among the three-dimensional points included in focused LoD(i) of the reference frame. Reconstructor 5004 may determine, as three-dimensional point P'(i, j), the three-dimensional point having the smallest distance from three-dimensional point P(i, j), among the three-dimensional points that are included in focused LoD(i) of the reference frame and have a distance from three-dimensional point P(i, j) in the processing frame that is smaller than a predetermined value.

In step S10704, reconstructor 5004 determines whether three-dimensional point P'(i, j) of the reference frame exists. If it is determined that three-dimensional point P'(i, j) of the reference frame exists (Yes in step S10704), the process proceeds to step S10705; otherwise (No in step S10704), the process proceeds to step S10711.

In step S10705, reconstructor 5004 determines whether information indicating that transform coefficients of the displacement vector of three-dimensional point P(i, j) were encoded using inter prediction is added to a header. The information is, for example, information indicating that disp_lod_inter_mode(i, j) is 1. If it is determined that the information is added to the header (Yes in step S10705), the process proceeds to step S10706; otherwise (No in step S10705), the process proceeds to step S10711.

In step S10706, reconstructor 5004 determines that transform coefficients of the displacement vector of three-dimensional point P(i, j) were encoded using inter prediction, decodes the transform coefficients by adding transform coefficients of the reference frame to the prediction residual provided from inverse quantizer 5003, and outputs the transform coefficients.

In step S10711, reconstructor 5004 determines that transform coefficients of the displacement vector of three-dimensional point P(i, j) were encoded without using inter prediction, and outputs the transform coefficients provided from inverse quantizer 5003.

In step S10707, reconstructor 5004 performs end processing for loop B. More specifically, reconstructor 5004 determines whether the processing of steps S10703 to S10706 and step S10711 (where some processing is excluded depending on the determination results of steps S10704 and S10705) has been executed for all three-dimensional points, and if not executed, controls so that processing is executed by focusing on a three-dimensional point that has not yet been executed.

In step S10708, reconstructor 5004 performs end processing for loop A. More specifically, reconstructor 5004 determines whether the processing of steps S10702 to S10707 and step S10711 (where some processing is excluded depending on the determination results of steps S10704 and S10705) has been executed for all LoDs, and if not executed, controls so that processing is executed by focusing on an LoD that has not yet been executed.

Note that when inter prediction is not used, disp_lod_inter_mode may be received, and in that case, it may be treated as indicating that disp_lod_inter_mode is 0, that is, inter prediction is not performed.

FIG. 108 is an explanatory diagram illustrating an example of syntax according to the present embodiment.

The example of syntax illustrated in FIG. 108 illustrates an example of the configuration of information included in a bitstream generated by the encoding device.

The syntax illustrated in FIG. 108 includes displacement vector_header. displacement vector_header includes disp_lod_inter_mode[i] and disp_point_inter_mode[i][j].

disp_lod_inter_mode[i] is the same as disp_lod_inter_mode[i] illustrated in FIG. 55.

disp_point_inter_mode[i][j] is information indicating whether the displacement vector of the j-th three-dimensional point among the three-dimensional points that belong to the i-th LoD was encoded using inter prediction when generating LoDs and encoding displacement vectors.

Note that when the displacement vector was encoded using inter prediction, this may mean that the displacement vector was encoded using inter prediction. When the displacement vector was not encoded using inter prediction, this may mean that the displacement vector was encoded without using inter prediction.

Stated differently, the "information indicating whether the displacement vector of the j-th three-dimensional point was encoded using inter prediction" can also be said to be information indicating whether the displacement vector was encoded using inter prediction or the displacement vector was encoded without using inter prediction.

For example, a value of 1 may indicate that the displacement vector of the j-th three-dimensional point among the three-dimensional points that belong to the i-th LoD was encoded using inter prediction, and a value of 0 may indicate that inter prediction was not applied to the displacement vector of the j-th three-dimensional point among the three-dimensional points that belong to the i-th LoD. With this, the decoding device can determine whether the displacement vector of the j-th three-dimensional point among the three-dimensional points belonging to the i-th LoD was encoded using inter prediction, and can appropriately decode the bitstream.

FIG. 109 is an explanatory diagram illustrating an example of syntax according to the present embodiment.

The example of syntax illustrated in FIG. 109 illustrates an example of the configuration of information included in a bitstream generated by the encoding device.

The syntax illustrated in FIG. 109 includes displacement vector_header. displacement vector_header includes disp_frame_inter_mode, disp_lod_inter_mode_present, disp_point_inter_mode_present, disp_lod_inter_mode[i], and disp_point_inter_mode[i][j].

disp_frame_inter_mode is the same as disp_frame_inter_mode illustrated in FIG. 54.

disp_lod_inter_mode_present is the same as disp_lod_inter_mode_present illustrated in FIG. 56.

disp_point_inter_mode_present indicates whether disp_point_inter_mode is included in the header. For example, a value of 1 indicates that disp_point_inter_mode is included in the header, and a value of 0 indicates that disp_point_inter_mode is not included in the header. Note that when disp_frame_inter_mode=1, since inter prediction is performed in units of frames, the value of disp_point_inter_mode_present is inferred to be 0, and dips_point_inter_mode need not be added to the header. Accordingly, the code amount of the header can be reduced.

disp_lod_inter_mode[i] is the same as disp_lod_inter_mode[i] illustrated in FIG. 55.

disp_point_inter_mode[i][j] is the same as disp_point_inter_mode[i][j] illustrated in FIG. 109.

Note that the encoding device may entropy encode disp_point_inter_mode or disp_point_inter_mode_present and add them to the header. For example, one approach would be to binarize each of the above values and perform arithmetic encoding. They may be encoded with a fixed length to reduce the processing amount.

Note that when binarizing and performing arithmetic encoding on disp_point_inter_mode, encoding or decoding may be performed while switching contexts. For example, when encoding or decoding disp_point_inter_mode with one bit, the context may be switched according to the value of disp_point_inter_mode that was encoded or decoded immediately before. With this, encoding efficiency can be improved when the same value continues as the value of disp_point_inter_mode.

Moreover, a configuration may be used in which disp_lod_inter_mode or disp_lod_inter_mode_present are not used.

FIG. 110 is a block diagram illustrating a configuration example of the encoding device according to the present embodiment.

The encoding device illustrated in FIG. 110 includes decimator 11001, subdivider 11002, displacement vector calculator 11003, wavelet transformer 11004, LoD-based inter predictor 11005, quantizer 11006, switch 11007, image packer 11008, video encoder 11009, arithmetic encoder 11010, inverse quantizer 11011, reconstructor 11012, reference buffer 11013, video decoder 11021, image unpacker 11022, arithmetic decoder 11023, and switch 11024.

Decimator 11001, subdivider 11002, displacement vector calculator 11003, wavelet transformer 11004, LoD-based inter predictor 11005, quantizer 11006, switch 11007, image packer 11008, video encoder 11009, arithmetic encoder 11010, inverse quantizer 11011, reconstructor 11012, and reference buffer 11013 are the same as the elements with the same names illustrated in FIG. 57 (i.e., decimator 5701, subdivider 5702, displacement vector calculator 5703, wavelet transformer 5704, LoD-based inter predictor 5705, quantizer 5706, switch 5707, image packer 5708, video encoder 5709, arithmetic encoder 5710, inverse quantizer 5711, reconstructor 5712, and reference buffer 5713), respectively.

Video decoder 11021, image unpacker 11022, arithmetic decoder 11023, and switch 11024 are the same as the elements with the same names illustrated in FIG. 58 (i.e., video decoder 5801, image unpacker 5802, arithmetic decoder 5803, and switch 5804), respectively.

In the configuration example of the encoding device illustrated in FIG. 110, the input to inverse quantizer 11011 is the output of image unpacker 11022 or arithmetic decoder 11023, which differs from the configuration example illustrated in FIG. 57. In other respects, the configuration example may be the same as the configuration example illustrated in FIG. 57.

With this configuration, even when the encoding processing executed by video encoder 11009 is lossy encoding processing, for example, the prediction residual of transform coefficients generated by video decoder 11021 and image unpacker 11022 can be inverse quantized by inverse quantizer 11011. Even when the encoding processing executed by arithmetic encoder 11010 is lossy encoding processing, for example, the prediction residual of transform coefficients generated by arithmetic decoder 11023 can be inverse quantized by inverse quantizer 11011. By reconstructor 11012 generating transform coefficients for inter prediction using the prediction residual, transform coefficients for inter prediction that are the same as those of the decoding device can be generated, and encoding efficiency can be improved.

Hereinafter, types of full meshes and submeshes will be described with reference to FIG. 111 and FIG. 112.

FIG. 111 is an explanatory diagram illustrating an example of an I full mesh according to the present embodiment. FIG. 112 is an explanatory diagram illustrating an example of a P full mesh according to the present embodiment.

For submeshes, a plurality of types of submeshes may be defined according to characteristics of the submesh. For example, a submesh in which three-dimensional data (including mesh data) included in the submesh is encoded or decoded using intra prediction may be defined as an I submesh (I-Submesh). A submesh in which three-dimensional data (including mesh data) included in the submesh is encoded or decoded using intra prediction or inter prediction may be defined as a P submesh (P-Submesh).

For full meshes including one or more submeshes, a plurality of types of full meshes may be defined according to characteristics of the full mesh. For example, a full mesh including one or more I submeshes may be defined as an I full mesh (I-Full mesh) (see FIG. 111). A full mesh including one or more I submeshes or P submeshes may be defined as a P full mesh (P-Full mesh) (see FIG. 112).

In this manner, by defining a plurality of types of full meshes or submeshes according to characteristics and selectively using them for each full mesh and submesh, encoding efficiency or functionality can be enhanced. For example, when encoding three-dimensional data with little movement and high inter prediction efficiency, encoding efficiency can be improved by increasing the proportion of P submeshes to which inter prediction can be applied. When creating content that dynamically reproduces three-dimensional objects, a random access function can be realized by applying an I full mesh that does not use inter prediction to random access points.

Hereinafter, header information will be described with reference to FIG. 113 to FIG. 115.

FIG. 113 is an explanatory diagram illustrating an example of header information common to sequences according to the present embodiment. FIG. 114 is an explanatory diagram illustrating an example of an I full mesh according to the present embodiment. FIG. 115 is an explanatory diagram illustrating an example of a P full mesh according to the present embodiment.

When performing inter prediction of displacement vectors as described above, information for inter prediction, for example, information for managing reference frames stored in reference buffer 5713, may be added to a header region included in the bitstream.

For example, a reference frame list may be added to the header so that the encoding device and the decoding device can use the same reference frame list. Here, the reference frame list is, for example, information for managing one or more reference frames that can be referenced in inter prediction when encoding or decoding a frame to be encoded or decoded. The reference frame list is, for example, a list including information of frame order count (FOC) of reference frames corresponding to reference frame indexes, and the reference frame list may include information regarding one or more reference frame indexes. This will be described in greater detail later.

Note that FOC is an order count (i.e., a count value indicating an ordinal number) added to each three-dimensional full mesh frame in a sequence. For example, the encoding device may add FOC in the playback order of the three-dimensional full mesh frames. More specifically, when each three-dimensional full mesh frame is played back in the order of frame 0, frame 1, and frame 2, the encoding device may set the FOC of frame 0 to 0, set the FOC of frame 1 to 1, set the FOC of frame 2 to 2, and add the FOC of each three-dimensional full mesh frame to a frame header or the like corresponding to each three-dimensional full mesh frame. With this, the decoding device can determine the output order of each three-dimensional full mesh frame by decoding the FOC in the frame header or the like, and can output each three-dimensional full mesh frame according to the FOC.

Note that the method of adding FOC is not limited to this. For example, the encoding device may add FOC in the order in which the three-dimensional full mesh frames are input to the encoding device. More specifically, when frames are input to the encoding device in the order of frame 0, frame 1, and frame 2, the FOC of frame 0 may be set to 0, the FOC of frame 1 may be set to 1, and the FOC of frame 2 may be set to 2.

Information for inter prediction, including a reference frame list or the like, may be added to a header that stores information common to the sequence (see FIG. 113). With this, information related to inter prediction that is common to the sequence can be signaled and managed in one header, and the code amount can be reduced.

Information for inter prediction may be added to a frame header corresponding to a three-dimensional full mesh frame. For example, information for inter prediction may be added to a header corresponding to a P full mesh to which inter prediction may be applied, and information for inter prediction may not be added to a header corresponding to an I full mesh to which inter prediction is not applied (see FIG. 114).

Accordingly, the header amount of the I full mesh can be reduced, and inter prediction can be performed using the inter prediction information added to the header in the case of a P full mesh. With this, the decoding device can correctly decode the bitstream encoded with high efficiency by the encoding device using inter prediction by applying the same inter prediction.

The encoding device may also add different information for inter prediction for each P full mesh. With this, the decoding device can correctly decode the bitstream encoded by the encoding device using information for inter prediction appropriate for each frame by using the information for inter prediction for each frame.

Note that the encoding device may add information A for inter prediction to header information common to sequences (see FIG. 113), and may add information B for inter prediction updated for the P full mesh to a frame header corresponding to the P full mesh (see FIG. 115). In such cases, information B for inter prediction may represent the updated portion to information A for inter prediction. Accordingly, the code amount of the frame header can be reduced by adding information representing the updated portion to information A for inter prediction to the frame header corresponding to the P full mesh.

Information for inter prediction may also be included in header information of the P full mesh and may be information common to P submeshes in the P full mesh. Accordingly, the amount of header information in the P submesh can be reduced.

Hereinafter, header information will be described with reference to FIG. 116.

FIG. 116 is an explanatory diagram illustrating an example of a P full mesh according to the present embodiment.

The encoding device may add information for inter prediction to a submesh header corresponding to a submesh. For example, information for inter prediction may be added to a header corresponding to a P submesh to which inter prediction may be applied, and information for inter prediction may not be added to a header corresponding to an I submesh to which inter prediction is not applied. Accordingly, the header amount of the I submesh can be reduced, and inter prediction can be performed using the inter prediction information added to the header in the case of a P submesh. With this, the decoding device can correctly decode the bitstream encoded with high efficiency by the encoding device using inter prediction for the P submesh by applying the same inter prediction.

The encoding device may also add different information for inter prediction for each P submesh. With this, the decoding device can correctly decode the bitstream encoded by the encoding device using information for inter prediction appropriate for each submesh by using the information for inter prediction for each submesh.

Note that the encoding device may add information A for inter prediction to header information common to sequences (see FIG. 113), and may add information B for inter prediction to header information common to P full meshes (see FIG. 116). In such cases, the encoding device may add information C or D for inter prediction updated for the P submesh to a submesh header corresponding to the P submesh (see FIG. 116). Information C or D for inter prediction may represent the updated portion to information A for inter prediction or information B for inter prediction. Accordingly, the code amount of the submesh header can be reduced by adding information representing the updated portion to information A for inter prediction or information B for inter prediction to the submesh header corresponding to the P submesh.

Information for inter prediction may also be included in header information of the P submesh and may be information common to coding units included in the P submesh. Accordingly, the amount of header information corresponding to a coding unit in the P submesh can be reduced.

Information for inter prediction may also include a flag indicating whether to apply inter prediction included in the syntax illustrated in FIG. 54, for example, in either the P full mesh or the P submesh. Whether to include information for inter prediction may be determined according to the encoding system of the displacement vector, for example. Furthermore, when inter prediction is not performed, information for inter prediction need not be included. Accordingly, the code amount of the header can be reduced.

Hereinafter, coding units included in a submesh will be described with reference to FIG. 117.

FIG. 117 is an explanatory diagram illustrating an example of a P full mesh according to the present embodiment. The P full mesh illustrated in FIG. 117 may be an example of the P full mesh illustrated in FIG. 116.

For submeshes, a plurality of types of coding units may be defined within a submesh, such as an intra mesh (Intra-mesh) and an inter mesh (Inter-mesh).

For example, a coding unit that encodes or decodes three-dimensional data (including mesh data) included in a submesh using inter prediction may be defined as an intra mesh, and a coding unit that encodes or decodes three-dimensional data (including mesh data) included in the submesh using intra prediction or inter prediction may be defined as an inter mesh.

Information for inter prediction may be added to a coding unit header corresponding to a coding unit. For example, information for inter prediction may be added to a header corresponding to an inter mesh to which inter prediction may be applied, and information for inter prediction may not be added to a header corresponding to an intra mesh to which inter prediction is not applied. Accordingly, the header amount of the intra mesh can be reduced, and inter prediction can be performed using the inter prediction information added to the header in the case of an inter mesh. With this, the decoding device can correctly decode the bitstream encoded with high efficiency by the encoding device using inter prediction for the inter mesh by applying the same inter prediction.

The encoding device may also add different information for inter prediction for each inter mesh. With this, the decoding device can correctly decode the bitstream encoded by the encoding device using information for inter prediction appropriate for each inter mesh by using the information for inter prediction for each inter mesh.

Note that the encoding device may add information A for inter prediction to header information common to sequences (see FIG. 113), may add information B for inter prediction to header information common to P full meshes, and may add information C for inter prediction to header information common to P submeshes (see FIG. 116). In such cases, the encoding device may add information D or E for inter prediction updated for the inter mesh to a coding unit header corresponding to the inter mesh (see FIG. 117). Information D or E for inter prediction may represent the updated portion to information A for inter prediction, information B for inter prediction, or information C for inter prediction. Accordingly, the code amount of the coding unit header can be reduced by adding information representing the updated portion from information A for inter prediction, information B for inter prediction, or information C for inter prediction to the coding unit header corresponding to the inter mesh.

Information for inter prediction may also include a flag indicating whether to apply inter prediction included in the syntax illustrated in FIG. 54, for example, in either the P full mesh or the P submesh. Whether to include information for inter prediction may be determined according to the encoding system of the displacement vector, for example. Furthermore, when inter prediction is not performed, information for inter prediction need not be included. Accordingly, the code amount of the header can be reduced.

FIG. 118 is an explanatory diagram illustrating an example of header information common to sequences according to the present embodiment.

The header information illustrated in FIG. 118 includes sequence_header. sequence_header includes disp_num_reflist_sps and disp_reflist(i).

disp_num_reflist_sps is information indicating the number of reference frame lists (disp_reflist) included in the header common to sequences. When the value of disp_num_reflist_sps is 0, this may indicate that the header common to sequences does not include a reference frame list, and otherwise, this may indicate that reference frame lists of a number equal to the value of disp_num_reflist_sps are included in the header common to sequences.

disp_reflist(i) is information indicating a reference frame list.

By using the above header information, a plurality of reference frame lists can be prepared in the header common to sequences, and encoding efficiency can be improved by selecting and encoding an appropriate reference frame list for each full mesh, submesh, or coding unit.

FIG. 119 is an explanatory diagram illustrating an example of syntax of a reference frame list according to the present embodiment.

The syntax illustrated in FIG. 119 includes disp_reflist(idx).

disp_reflist(idx) is information indicating the idx-th reference frame list. disp_reflist(idx) includes num_ref_entry_minus1[idx], abs_delta_foc[idx][i], and sign_flag[idx][i].

num_ref_entry_minus1[idx] is information indicating the number of reference frames included in the idx-th reference frame list. The number of reference frames may be calculated as num_ref_entry_minus1[idx]+1. Stated differently, when num_ref_entry_minus1[idx]=0, the number of reference frames may be one.

abs_delta_foc[idx][i] and sign_flag[idx][i] are information regarding the FOC of the i-th reference frame in the idx-th reference frame list.

abs_delta_foc[idx][i] represents the absolute value of the difference between (i) the FOC of the frame to be encoded or decoded or the FOC of the (i-1)-th reference frame, and (ii) the FOC of the i-th reference frame.

sign_flag[idx][i] may be information indicating whether the difference value between (i) the FOC of the frame to be encoded or decoded or the FOC of the (i-1)-th reference frame, and (ii) the FOC of the i-th reference frame is positive or negative.

The FOC of the i-th reference frame (refFOC[i]) may be calculated using the following equation, where currFOC is the FOC of the frame to be encoded or decoded. Here, the symbol "<<" indicates a bit shift operation.

When i = 0: 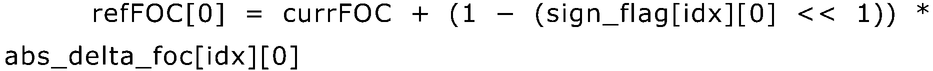 refFOC[0] = currFOC + (1 - (sign_flag[idx][0] << 1)) * abs_delta_foc[idx][0]

When i > 0: 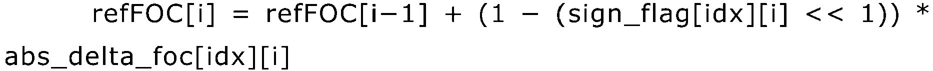 refFOC[i] = refFOC[i-1] + (1 - (sign_flag[idx][i] << 1)) * abs_delta_foc[idx][i]

In this way, the code amount can be reduced by adding to the header not the FOC value itself of the reference frame, but rather the difference value from the FOC of the frame to be encoded or decoded or from the FOC of the (i-1)-th reference frame.

FIG. 120 is an explanatory diagram illustrating an example of a reference frame list according to the present embodiment.

FIG. 120 illustrates (a) a specific example of reference frame list disp_reflist[idx] and (b) the FOC of frames that are actually referenced, when the number of reference frames included in the reference frame list num_ref_entry[idx] is 3 and the FOC of the frame to be encoded or decoded is 10.

For example, in (a) in FIG. 120, it is indicated that for the frame whose reference frame index is 0 (i.e., i=0), abs_delta_foc[0] is 1 and sign_flag[0] is 1. In such cases, refFOC[0], which is the FOC of the referenced frame, is calculated as follows using the expression for "when i = 0" described above.$refFOC \left[0\right] = 10 + \left(1-\left(1≪1\right)\right) * 1 = 9$

In this way, 9 is calculated as the FOC of the frame whose reference frame index is 0 (i.e., i = 0) (see (b) in FIG. 120).

For example, in (a) in FIG. 120, it is indicated that for the frame whose reference frame index is 1 (i.e., i=1), abs_delta_foc[1] is 1 and sign_flag[1] is 1. In such cases, refFOC[1], which is the FOC of the referenced frame, is calculated as follows using the expression for "when i > 0" described above.$refFOC \left[1\right] = refFOC \left[0\right] + \left(1-\left(1≪1\right)\right) * 1 = 9 - 1 = 8$

In this way, 8 is calculated as the FOC of the frame whose reference frame index is 1 (i.e., i = 1) (see (b) in FIG. 120).

By providing one or more reference frames in the reference frame list in this way, the encoding device may improve encoding efficiency by selecting and encoding an appropriate reference frame for each full mesh, submesh, or coding unit. At that time, the reference frame list used for encoding and the reference frame index related to the reference frame may be added to any one of the header of the full mesh, the submesh, or the coding unit. With this, the decoding device can apply inter prediction using the reference frame list and reference frame index added to the header in the same manner as the decoding device, and can appropriately decode the bitstream.

Hereinafter, an example of header information corresponding to a full mesh frame, submesh, or coding unit will be described.

FIG. 121 is an explanatory diagram illustrating an example of header information corresponding to a full mesh frame according to the present embodiment.

The header information illustrated in FIG. 121 includes frame_header. frame_header includes frame_order_cnt and disp_num_refidx_active.

frame_order_cnt is information of the FOC of the frame to be encoded or decoded.

disp_num_refidx_active is information indicating the number of reference frames, among the reference frames included in the reference frame list, to be used in the frame to be encoded or decoded related to this header information. For example, when the number of reference frames in the reference frame list is 10 and the value of disp_num_refidx_active is 2, the frame to be encoded or decoded related to this header information may be encoded or decoded using a total of two reference frames: the reference frame with a reference frame index of 0 and the reference frame with a reference frame index of 1. Note that a condition "disp_num_refidx_active ≤ number of reference frames in the reference frame list" may be specified in a standard or the like, and when this condition is violated, the decoding device may output a standard conformance error.

FIG. 122 is an explanatory diagram illustrating an example of header information corresponding to a submesh or coding unit according to the present embodiment.

The header information illustrated in FIG. 122 includes codingunit_header. codingunit_header includes ref_frame_list_sps_flag, disp_reflist(0), reflist_idx, NumLoD, disp_lod_inter_mode[i], and lod_refidx[i].

ref_frame_list_sps_flag is information indicating whether to use the reference frame list included in the header common to sequences. When ref_frame_list_sps_flag has a value of 1, this may indicate that the reference frame list included in the header common to sequences is used, and when ref_frame_list_sps_flag has a value of 0, this may indicate that the reference frame list included in the header common to sequences is not used. Note that when ref_frame_list_sps_flag has a value of 0, a new reference frame list disp_reflist(0) may be added to this header, and "reflist_idx=0" described later may be set in order to use that list.

disp_reflist(0) is the same as the value when i=0 of disp_reflist(i) illustrated in FIG. 118, or in other words, is disp_reflist(i) when i=0.

reflist_idx is information for indicating the reference frame list to be used by the submesh or coding unit associated with this header. The encoding device may improve encoding efficiency by switching the reference frame list to be used for each submesh or coding unit. At that time, by the encoding device adding reflist_idx corresponding to the reference frame list used for encoding to any one of the header of each submesh or coding unit, the decoding device can apply inter prediction using the reference frame list corresponding to reflist_idx added to the header in the same manner as the encoding device, and can appropriately decode the bitstream. Note that when the encoding device does not need to add reflist_idx to the bitstream, for example, when the number of reference frame lists is one, reflist_idx need not be added to the header. Accordingly, the code amount can be reduced. When reflist_idx is not added to the bitstream, the decoding device may set the value of reflist_idx to 0.

NumLoD is information indicating the number of LoD layers.

disp_lod_inter_mode[i] is information indicating whether displacement vectors that belong to the i-th LoD were encoded using inter prediction when generating LoDs and encoding displacement vectors. For example, when disp_lod_inter_mode[i] has a value of 1, this may indicate that displacement vectors of three-dimensional points that belong to the i-th LoD were encoded using inter prediction, and when disp_lod_inter_mode[i] has a value of 0, this may indicate that inter prediction was not applied to displacement vectors of three-dimensional points that belong to the i-th LoD. With this, the decoding device can determine whether displacement vectors of three-dimensional points belonging to the i-th LoD were encoded using inter prediction, and can appropriately decode the bitstream.

lod_refidx[i] is information indicating a reference frame index in the i-th LoD. The encoding device may improve encoding efficiency by providing one or more reference frames in the reference frame list and selecting and encoding an appropriate reference frame for each LoD. At that time, by the encoding device adding a reference frame index related to the reference frame used for encoding for each LoD, the decoding device can apply inter prediction using the reference frame index for each LoD added to the header in the same manner as the encoding device, and can appropriately decode the bitstream. Note that when inter prediction is not applied in the i-th LoD, lod_refidx[i] need not be added. Accordingly, the code amount can be reduced.

FIG. 123 is an explanatory diagram illustrating an example of header information corresponding to a submesh or coding unit according to the present embodiment.

The header information illustrated in FIG. 123 includes codingunit_header. codingunit_header includes disp_frame_inter_mode and refidx[i].

disp_frame_inter_mode is information indicating whether displacement vectors within a frame were encoded using inter prediction. For example, when disp_frame_inter_mode has a value of 1, this may indicate that displacement vectors in the frame were encoded using inter prediction, and when disp_frame_inter_mode has a value of 0, this may indicate that inter prediction was not applied.

refidx[i] is information indicating a reference frame index. The encoding device may improve encoding efficiency by providing one or more reference frames in the reference frame list and selecting and encoding an appropriate reference frame for each submesh or coding unit. At that time, by the encoding device adding a reference frame index related to the reference frame used for encoding to the header, the decoding device can apply inter prediction using the reference frame index added to the header in the same manner as the encoding device, and can appropriately decode the bitstream. Note that when inter prediction is not applied, refidx[i] need not be added. Accordingly, the code amount can be reduced.

FIG. 124 is a flowchart illustrating a specific example of processing for specifying FOC of a reference frame according to the present embodiment.

In step S12401, reconstructor 5004 decodes the syntax of the reference frame list and creates one or more reference frame lists.

In step S12402, reconstructor 5004 decodes reflist_idx. Reconstructor 5004 can also identify the reflist_idx-th reference frame list among the plurality of reference frame lists (also referred to as reference frame list [reflist_idx]) as the reference frame list to be used for decoding the frame to be decoded.

In step S12403, reconstructor 5004 performs start processing for loop A that repeatedly executes the processing of steps S12404 to S12405 described below. In loop A, focus is placed on each of the one or more LoDs, processing is performed for the focused LoD, and ultimately control is carried out so that processing is performed for all LoDs. In loop A, an integer i that varies from 0 to a number that is one less than the number of LoDs is used as an index. Note that the LoD being focused on (i.e., LoD(i)) is also referred to as the focused LoD or focused LoD(i). Loop A can also be referred to as an LoD loop.

In step S12404, reconstructor 5004 decodes lod_refidx[i] of the focused LoD(i).

In step S12405, reconstructor 5004 identifies the lod_refidx-th reference frame in reference frame list [reflist_idx] as the reference frame of the frame to be decoded. Reconstructor 5004 also identifies the FOC of the reference frame from reference frame list [reflist_idx] and uses it for inter prediction.

In step S12406, reconstructor 5004 performs end processing for loop A. More specifically, reconstructor 5004 determines whether the processing of steps S12404 to S12405 has been executed for all LoDs, and if not executed, controls so that processing is executed by focusing on an LoD that has not yet been executed.

Hereinafter, a variation of header information will be described.

The encoding device may add, to a header, information indicating an encoding method for encoding or decoding displacement vectors, and may switch whether to add information for inter prediction to the header according to the information. For example, the encoding device may switch between a video encoding system or an arithmetic encoding system as an example of the encoding system.

For example, when a predetermined encoding system (also referred to as CODEC_A) is used, the encoding device may add information for inter prediction in a sequence common header, a full mesh header, or a header of a submesh or coding unit, and otherwise, may not add information for inter prediction.

Here, CODEC_A indicates, for example, one of a video encoding system or an arithmetic encoding system.

When information for inter prediction is not added to the header, the encoding device may improve encoding efficiency by applying inter prediction with a previous frame in encoding or decoding order as a reference frame. With this, the encoding device can switch between improving encoding efficiency by adding information for inter prediction according to the encoding system of displacement vectors, and improving encoding efficiency while reducing header code amount by performing inter prediction with a reference frame automatically set instead of adding information for inter prediction.

Header information common to sequences, header information corresponding to a full mesh frame, and header information corresponding to a submesh or coding unit in this case will be described.

FIG. 125 is an explanatory diagram illustrating an example of sequence-common header information according to the present embodiment.

The header information illustrated in FIG. 125 includes sequence_header. sequence_header includes disp_codec_type, disp_num_reflist_sps, and disp_reflist(i).

The header information illustrated in FIG. 125 has disp_codec_type added to the header information illustrated in FIG. 118, and also has a conditional statement "if (disp_codec_type == CODEC_A)" added.

disp_codec_type is information indicating an encoding method for encoding or decoding a displacement vector.

By adding the conditional statement "if (disp_codec_type == CODEC_A)", when disp_codec_type=CODEC_A, sequence_header includes disp_num_reflist_sps and disp_reflist(i) as information for inter prediction, and otherwise does not include the information for inter prediction.

FIG. 126 is an explanatory diagram illustrating an example of header information corresponding to a full mesh frame according to the present embodiment.

The header information illustrated in FIG. 126 includes frame_header. frame_header includes frame_order_cnt and disp_num_refidx_active.

The header information illustrated in FIG. 126 has a conditional statement "if (disp_codec_type == CODEC_A)" added to the header information illustrated in FIG. 121.

By adding the conditional statement "if (disp_codec_type == CODEC_A)", when disp_codec_type=CODEC_A, frame_header includes disp_num_refidx_active as information for inter prediction, and otherwise does not include the information for inter prediction.

FIG. 127 is an explanatory diagram illustrating an example of header information corresponding to a submesh or coding unit according to the present embodiment.

The header information illustrated in FIG. 127 includes codingunit_header. codingunit_header includes ref_frame_list_sps_flag, disp_reflist(0), reflist_idx, NumLoD, disp_lod_inter_mode[i], and lod_refidx[i].

The header information illustrated in FIG. 127 has a conditional statement "if (disp_codec_type == CODEC_A)" added to the header information illustrated in FIG. 122.

By adding the conditional statement "if (disp_codec_type == CODEC_A)", when disp_codec_type=CODEC_A, codingunit_header includes ref_frame_list_sps_flag, disp_reflist(0), reflist_idx, NumLoD, disp_lod_inter_mode[i], and lod_refidx[i] as information for inter prediction, and otherwise does not include the information for inter prediction.

Note that, when disp_codec_type is not CODEC_A, the encoding device may automatically determine a reference frame and perform inter prediction encoding without adding information for inter prediction to the header. Accordingly, inter prediction can be applied while reducing the code amount of the header. Note that, as a method of automatic determination, encoding efficiency may be improved by applying inter prediction with a previous frame in encoding or decoding order as a reference frame.

Note that, when disp_codec_type is not CODEC_A, among the information for inter prediction, some information may be added to the header, and some may be automatically determined without being added to the header. For example, information for a reference frame list may be added to the header, and a reference frame index may be fixed to a value of 0 and encoded or decoded without being added to the header. In such cases, the code amount can be reduced by not adding the reference frame index to the header.

Hereinafter, a variation of header information will be described.

The encoding device may add, to a header, information indicating whether to encode or decode displacement vectors using inter prediction, and may switch whether to add information for inter prediction to the header according to the information.

With this, when inter prediction may be applied in the sequence, information for inter prediction is added, and when inter prediction is not applied, the header code amount can be reduced by not adding information for inter prediction.

Header information common to sequences, header information corresponding to a full mesh frame, and header information corresponding to a submesh or coding unit in this case will be described.

FIG. 128 is an explanatory diagram illustrating an example of sequence-common header information according to the present embodiment.

The header information illustrated in FIG. 128 includes sequence_header. sequence_header includes disp_seq_inter_mode, disp_num_reflist_sps, and disp_reflist(i).

The header information illustrated in FIG. 128 has disp_seq_inter_mode added to the header information illustrated in FIG. 118, and also has a conditional statement "if (disp_seq_inter_mode == 1)" added.

disp_seq_inter_mode is information indicating whether to encode or decode displacement vectors using inter prediction. When disp_seq_inter_mode has a value of 1, this may indicate that inter prediction is applied, and when disp_seq_inter_mode has a value of 0, this may indicate that inter prediction is not applied.

By adding the conditional statement "if (disp_seq_inter_mode == 1)", when disp_seq_inter_mode is 1, sequence_header includes disp_num_reflist_sps and disp_reflist(i) as information for inter prediction, and otherwise does not include the information for inter prediction.

FIG. 129 is an explanatory diagram illustrating an example of header information corresponding to a full mesh frame according to the present embodiment.

The header information illustrated in FIG. 129 includes frame_header. frame_header includes frame_order_cnt and disp_num_refidx_active.

The header information illustrated in FIG. 129 has a conditional statement "if (disp_codec_type == CODEC_A)" added to the header information illustrated in FIG. 121.

By adding the conditional statement "if (disp_seq_inter_mode == 1)", when disp_seq_inter_mode is 1, frame_header includes disp_num_refidx_active as information for inter prediction, and otherwise does not include the information for inter prediction.

FIG. 130 is an explanatory diagram illustrating an example of header information corresponding to a submesh or encoding unit according to the present embodiment.

The header information illustrated in FIG. 130 includes codingunit_header. codingunit_header includes ref_frame_list_sps_flag, disp_reflist(0), reflist_idx, NumLoD, disp_lod_inter_mode[i], and lod_refidx[i].

The header information illustrated in FIG. 130 has a conditional statement "if (disp_seq_inter_mode == 1)" added to the header information illustrated in FIG. 122.

By adding the conditional statement "if (disp_seq_inter_mode == 1)", when disp_seq_inter_mode is 1, codingunit_header includes ref_frame_list_sps_flag, disp_reflist(0), reflist_idx, NumLoD, disp_lod_inter_mode[i], and lod_refidx[i] as information for inter prediction, and otherwise does not include the information for inter prediction.

FIG. 131 is a flowchart illustrating an example of encoding processing according to the present embodiment.

The encoding processing illustrated in FIG. 131 is an encoding method that the encoding device executes.

In step S13101, the encoding device obtains a first frame that is to be encoded.

In step S13102, the encoding device encodes first data using second data as a reference, the first data included in the first frame and including one or more layers, the second data included in the second frame and including one or more layers. When encoding the first data, the encoding device, for each layer among the one or more layers included in the first data, determines one process among a plurality of processes, using a value indicating the layer and a value related to the one or more layers included in the second data, and executes the one process determined on the first data of the layer.

With this, the encoding method can execute different processes for each layer among the one or more layers included in the first frame that is to be encoded, according to a value related to the one or more layers included in the second data. In this way, the encoding processing may be able to be improved. As seen from the above, the encoding method can contribute toward improving encoding processing.

For example, when encoding the first data, the encoding device may execute different processes on the first data depending on whether a total number of the one or more layers included in the first data is identical to a total number of the one or more layers included in the second data.

With this, the encoding method can execute different processes on the first data depending on whether the total number of the one or more layers included in the first frame that is to be encoded is identical to the total number of the one or more layers included in the second frame that is referenced during encoding. With this, processing that can be executed on the first data when the total number of the one or more layers included in the first frame is identical to the total number of the one or more layers included in the second frame, and that cannot be executed on the first data when the total number of the one or more layers included in the first frame is not identical to the total number of the one or more layers included in the second frame, can be appropriately used in the encoding processing. In this way, the encoding processing may be able to be improved. As seen from the above, the encoding method can contribute toward improving encoding processing.

For example, when encoding the first data, the encoding device may, for each layer among the one or more layers included in the first data, determine whether the second data includes a same layer as the layer, and execute different processes on the layer depending on whether it is determined that the second data includes the same layer as the layer or it is determined that the second data does not include the same layer as the layer.

With this, the encoding method can more easily determine whether the total number of the one or more layers included in the first frame is identical to the total number of the one or more layers included in the second frame, and can use the determination result to execute different processes on the first data depending on whether the total numbers are identical. As seen from the above, the encoding method can more easily contribute toward improving encoding processing.

For example, the first data includes first displacement data included in the first frame and including one or more layers, when encoding the first data, the encoding device may determine whether a total number of the one or more layers included in the first data is identical to a total number of the one or more layers included in the second data, execute a first process on the first data when it is determined that the total number of the one or more layers included in the first data is identical to the total number of the one or more layers included in the second data, and execute a second process different from the first process on the first data when it is determined that the total number of the one or more layers included in the first data is not identical to the total number of the one or more layers included in the second data. The first process may include encoding the first displacement data by generating a prediction residual using (i) a prediction value of the first displacement data and (ii) the first displacement data, and encoding the prediction residual generated, the prediction value of the first displacement data being generated by performing inter prediction using second displacement data corresponding to a different time than the first displacement data. The second process may include encoding the first displacement data without performing the inter prediction.

With this, the encoding method can determine whether the total number of the one or more layers included in the first frame is identical to the total number of the one or more layers included in the second frame, and can selectively enable or disable inter prediction for the encoding processing of the first displacement data included in the first data according to the determination result. With this, the encoding method may be able to reduce the code amount that is the target of the encoding processing of the first displacement data. As seen from the above, the encoding method can contribute toward improving encoding processing.

For example, when encoding the first data, the encoding device may, for each layer among the one or more layers included in the first data, determine whether a total number of three-dimensional points belonging to the layer is identical to a total number of three-dimensional points belonging to a same layer as the layer among the one or more layers included in the second data, and execute the second process on the layer when it is determined that the total number of three-dimensional points belonging to the layer is not identical to the total number of three-dimensional points belonging to the same layer as the layer among the one or more layers included in the second data.

With this, the encoding method can disable inter prediction for the encoding processing of the first displacement data included in the first data when the total number of three-dimensional points belonging to a layer is not identical between the one or more layers included in the first frame and the one or more layers included in the second frame. With this, the encoding method may be able to reduce the code amount that is the target of the encoding processing of the first displacement data. As seen from the above, the encoding method can contribute toward improving encoding processing.

For example, the one or more layers included in the first data may be two or more layers including a first base layer and one or more first sub-layers sequentially generated by performing a first subdivision process based on the first base layer, and the one or more layers included in the second data may be two or more layers including a second base layer and one or more second sub-layers sequentially generated by performing a second subdivision process based on the second base layer. When encoding the first data, the encoding device may, for each first sub-layer among the one or more first sub-layers included in the first data, determine whether the first subdivision process used to generate the layer is identical to the second subdivision process used for a same layer as the layer among the one or more second sub-layers included in the second data, and execute the second process on the layer when it is determined that the first subdivision process used to generate the layer is not identical to the second subdivision process used for the same layer as the layer among the one or more second sub-layers included in the second data.

With this, the encoding method can disable inter prediction for the encoding processing of the first displacement data included in the first data when the subdivision process used to generate a layer is not identical between the one or more sub-layers included in the first frame and the one or more sub-layers included in the second frame. With this, the encoding method may be able to reduce the code amount that is the target of the encoding processing of the first displacement data. As seen from the above, the encoding method can contribute toward improving encoding processing.

For example, when encoding the first data, the encoding device may determine whether a structure of the first base layer is identical to a structure of the second base layer, and execute the second process when it is determined that the structure of the first base layer is not identical to the structure of the second base layer.

With this, the encoding method can disable inter prediction for the encoding processing of the first displacement data included in the first data when the structure is not identical between the base layer included in the first frame and the base layer included in the second frame. With this, the encoding method may be able to reduce the code amount that is the target of the encoding processing of the first displacement data. As seen from the above, the encoding method can contribute toward improving encoding processing.

For example, when encoding the first data, the encoding device may, for each first three-dimensional point among one or more first three-dimensional points belonging to each layer among the one or more layers included in the first data, determine whether a second three-dimensional point corresponding to the first three-dimensional point belongs to a same layer as the layer among the one or more layers included in the second data, and execute the second process when it is determined that the second three-dimensional point corresponding to the first three-dimensional point does not belong to the same layer as the layer among the one or more layers included in the second data.

With this, the encoding method can disable inter prediction for the encoding processing of the first displacement data included in the first data when, among the one or more layers of the first frame and the one or more layers of the second frame, three-dimensional points corresponding to each other do not belong to the same layer. With this, the encoding method may be able to reduce the code amount that is the target of the encoding processing of the first displacement data. As seen from the above, the encoding method can contribute toward improving encoding processing.

For example, when encoding the first data, the encoding device may, for each first three-dimensional point among one or more first three-dimensional points belonging to each layer among the one or more layers included in the first data, determine whether a third three-dimensional point within a predetermined distance from a position corresponding to the first three-dimensional point belongs to a same layer as the layer among the one or more layers included in the second data, and execute the second process when it is determined that the third three-dimensional point within the predetermined distance from the position corresponding to the first three-dimensional point does not belong to the same layer as the layer among the one or more layers included in the second data.

With this, the encoding method can disable inter prediction for the encoding processing of the first displacement data included in the first data when, among the one or more layers of the first frame and the one or more layers of the second frame, three-dimensional points within a predetermined distance from three-dimensional points corresponding to each other do not belong to the same layer. With this, the encoding method may be able to reduce the code amount that is the target of the encoding processing of the first displacement data. As seen from the above, the encoding method can contribute toward improving encoding processing.

FIG. 132 is a flowchart illustrating an example of decoding processing according to the present embodiment.

The decoding processing illustrated in FIG. 132 is an encoding method that the decoding device executes.

In step S13201, the decoding device obtains a first frame that is a target of decoding.

In step S13202, the decoding device decodes first data using second data as a reference, the first data included in the first frame and including one or more layers, the second data included in the second frame and including one or more layers. When decoding the first data, the decoding device, for each layer among the one or more layers included in the first data, determines one process among a plurality of processes, using a value indicating the layer and a value related to the one or more layers included in the second data, and executes the one process determined on the first data of the layer.

With this, the decoding method can execute different processes for each layer among the one or more layers included in the first frame that is to be decoded, according to a value related to the one or more layers included in the second data. In this way, the decoding processing may be able to be improved. As seen from the above, the decoding method can contribute toward improving decoding processing.

For example, when decoding the first data, the decoding device may execute different processes on the first data depending on whether a total number of the one or more layers included in the first data is identical to a total number of the one or more layers included in the second data.

With this, the decoding method can execute different processes on the first data depending on whether the total number of the one or more layers included in the first frame that is to be decoded is identical to the total number of the one or more layers included in the second frame that is referenced during decoding. With this, processing that can be executed on the first data when the total number of the one or more layers included in the first frame is identical to the total number of the one or more layers included in the second frame, and that cannot be executed on the first data when the total number of the one or more layers included in the first frame is not identical to the total number of the one or more layers included in the second frame, can be appropriately used in the decoding processing. In this way, the decoding processing may be able to be improved. As seen from the above, the decoding method can contribute toward improving decoding processing.

For example, when decoding the first data, the decoding device may, for each layer among the one or more layers included in the first data, determine whether the second data includes a same layer as the layer, and execute different processes on the layer depending on whether it is determined that the second data includes the same layer as the layer or it is determined that the second data does not include the same layer as the layer.

With this, the decoding method can more easily determine whether the total number of the one or more layers included in the first frame is identical to the total number of the one or more layers included in the second frame, and can use the determination result to execute different processes on the first data depending on whether the total numbers are identical. As seen from the above, the decoding method can more easily contribute toward improving decoding processing.

For example, the first data includes first displacement data included in the first frame and including one or more layers, when decoding the first data, the decoding device may determine whether a total number of the one or more layers included in the first data is identical to a total number of the one or more layers included in the second data, execute a first process on the first data when it is determined that the total number of the one or more layers included in the first data is identical to the total number of the one or more layers included in the second data, and execute a second process different from the first process on the first data when it is determined that the total number of the one or more layers included in the first data is not identical to the total number of the one or more layers included in the second data. The first process includes obtaining a prediction value of the first displacement data by decoding the first displacement data encoded, the prediction value of the first displacement data being generated by performing inter prediction using second displacement data corresponding to a different time than the first displacement data, and obtaining the first displacement data using the prediction value of the first displacement data obtained. The second process may include obtaining the first displacement data generated without performing the inter prediction, by decoding the first displacement data encoded.

With this, the decoding method can determine whether the total number of the one or more layers included in the first frame is identical to the total number of the one or more layers included in the second frame, and can selectively enable or disable inter prediction for the decoding processing of the first displacement data included in the first data according to the determination result. With this, the decoding method may be able to reduce the code amount that is the target of the decoding processing of the first displacement data. As seen from the above, the decoding method can contribute toward improving decoding processing.

For example, when decoding the first data, the decoding device may, for each layer among the one or more layers included in the first data, determine whether a total number of three-dimensional points belonging to the layer is identical to a total number of three-dimensional points belonging to a same layer as the layer among the one or more layers included in the second data, and execute the second process on the layer when it is determined that the total number of three-dimensional points belonging to the layer is not identical to the total number of three-dimensional points belonging to the same layer as the layer among the one or more layers included in the second data.

With this, the decoding method can disable inter prediction for the decoding processing of the first displacement data included in the first data when the total number of three-dimensional points belonging to a layer is not identical between the one or more layers included in the first frame and the one or more layers included in the second frame. With this, the decoding method may be able to reduce the code amount that is the target of the decoding processing of the first displacement data. As seen from the above, the decoding method can contribute toward improving decoding processing.

For example, the one or more layers included in the first data may be two or more layers including a first base layer and one or more first sub-layers sequentially generated by performing a first subdivision process based on the first base layer, and the one or more layers included in the second data may be two or more layers including a second base layer and one or more second sub-layers sequentially generated by performing a second subdivision process based on the second base layer. When decoding the first data, the decoding device may, for each first sub-layer among the one or more first sub-layers included in the first data, determine whether the first subdivision process used to generate the layer is identical to the second subdivision process used for a same layer as the layer among the one or more second sub-layers included in the second data, and execute the second process on the layer when it is determined that the first subdivision process used to generate the layer is not identical to the second subdivision process used for the same layer as the layer among the one or more second sub-layers included in the second data.

With this, the decoding method can disable inter prediction for the decoding processing of the first displacement data included in the first data when the subdivision process used to generate a layer is not identical between the one or more sub-layers included in the first frame and the one or more sub-layers included in the second frame. With this, the decoding method may be able to reduce the code amount that is the target of the decoding processing of the first displacement data. As seen from the above, the decoding method can contribute toward improving decoding processing.

For example, when decoding the first data, the decoding device may determine whether a structure of the first base layer is identical to a structure of the second base layer, and execute the second process when it is determined that the structure of the first base layer is not identical to the structure of the second base layer.

With this, the decoding method can disable inter prediction for the decoding processing of the first displacement data included in the first data when the structure is not identical between the base layer included in the first frame and the base layer included in the second frame. With this, the decoding method may be able to reduce the code amount that is the target of the decoding processing of the first displacement data. As seen from the above, the decoding method can contribute toward improving decoding processing.

For example, when decoding the first data, the decoding device may, for each first three-dimensional point among one or more first three-dimensional points belonging to each layer among the one or more layers included in the first data, determine whether a second three-dimensional point corresponding to the first three-dimensional point belongs to a same layer as the layer among the one or more layers included in the second data, and execute the second process when it is determined that the second three-dimensional point corresponding to the first three-dimensional point does not belong to the same layer as the layer among the one or more layers included in the second data.

With this, the decoding method can disable inter prediction for the decoding processing of the first displacement data included in the first data when, among the one or more layers of the first frame and the one or more layers of the second frame, three-dimensional points corresponding to each other do not belong to the same layer. With this, the decoding method may be able to reduce the code amount that is the target of the decoding processing of the first displacement data. As seen from the above, the decoding method can contribute toward improving decoding processing.

For example, when decoding the first data, the decoding device may, for each first three-dimensional point among one or more first three-dimensional points belonging to each layer among the one or more layers included in the first data, determine whether a third three-dimensional point within a predetermined distance from a position corresponding to the first three-dimensional point belongs to a same layer as the layer among the one or more layers included in the second data, and execute the second process when it is determined that the third three-dimensional point within the predetermined distance from the position corresponding to the first three-dimensional point does not belong to the same layer as the layer among the one or more layers included in the second data.

With this, the decoding method can disable inter prediction for the decoding processing of the first displacement data included in the first data when, among the one or more layers of the first frame and the one or more layers of the second frame, three-dimensional points within a predetermined distance from three-dimensional points corresponding to each other do not belong to the same layer. With this, the encoding method may be able to reduce the code amount that is the target of the decoding processing of the first displacement data. As seen from the above, the decoding method can contribute toward improving decoding processing.

### <Other Examples>

Although the aspects of the encoding device and the decoding device have thus far been described according to the embodiment, the aspects of the encoding device and the decoding device are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing the decoding device to perform decoding processing may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

In the above embodiment, each element may be configured using dedicated hardware, or may be implemented by executing a software program suitable for the element. Each element may be implemented by a program execution unit such as a CPU or processor reading and executing a software program recorded on a recording medium such as a hard disk or semiconductor memory. Here, software that implements the encoding device according to the above embodiment is a program as follows.

Stated differently, the software is a program that causes a computer to execute an encoding method including: obtaining a first frame to be encoded; and encoding first data using second data as a reference, the first data included in the first frame and including one or more layers, the second data included in a second frame and including one or more layers, wherein the encoding of the first data includes: for each layer among the one or more layers included in the first data, determining one process among a plurality of processes, using a value indicating the layer and a value related to the one or more layers included in the second data, and executing the one process determined on the first data of the layer.

Software that implements the decoding device according to the above embodiment is a program as follows.

Stated differently, the software is a program that causes a computer to execute a decoding method including: obtaining a first frame to be decoded; and decoding first data using second data as a reference, the first data included in the first frame and including one or more layers, the second data included in a second frame and including one or more layers, wherein the decoding of the first data includes: for each layer among the one or more layers included in the first data, determining one process among a plurality of processes, using a value indicating the layer and a value related to the one or more layers included in the second data, and executing the one process determined on the first data of the layer.

### [Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

### [Reference Signs List]

100 encoding device
101, 121, 144 vertex information encoder
102, 145 connection information encoder
103, 122 attribute information encoder
104, 204, 1103 preprocessor
105, 205, 2106 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
300 network
310 external connector
613 base mesh decoder
614 displacement decoder
615 attribute decoder
616 decoder of other type
617 three-dimensional reconstructor
631 frame header decoder
632 vertex geometry coordinate predictor
633 vertex geometry coordinate difference decoder
634 reconstructor
1231 demultiplexer
1232 switch
1233 static mesh decoder
1234 mesh buffer
1235 motion decoder
1236 base mesh reconstructor
1237 inverse quantizer
1238, 1243 video decoder
1239 image unpacker
1240 inverse quantizer
1241 inverse wavelet transformer
1242 reconstructor
1244 color converter
1251 decoded base mesh
1252 subdivider
1253 subdivided mesh
1254 decoded displacement data
1255 displacer
1256 decoded 3D mesh
4801, 5701, 11001 decimator
4802, 5702, 11002 subdivider
4803, 5703, 11003 displacement vector calculator
4804, 5704, 11004 wavelet transformer
4805 inter predictor
4806, 5706, 11006 quantizer
4807, 5708, 11008 image packer
4808, 5709, 11009 video encoder
4811, 5003, 5711, 5805, 11011inverse quantizer
4812, 5004, 5006, 5712, 5806, 5808, 11012 reconstructor
4813, 5713, 11013, 5811 reference buffer
5001, 5801, 11021 video decoder
5002, 5802, 11022 image unpacker
5005, 5807 inverse wavelet transformer
5705, 11005 LoD-based inter predictor
5707, 5804, 11007, 11024 switch
5710, 11010 arithmetic encoder
5803, 11023 arithmetic decoder

## Claims

1. An encoding method comprising:
obtaining a first frame to be encoded; and
encoding first data using second data as a reference, the first data included in the first frame and including one or more layers, the second data included in a second frame and including one or more layers, wherein
the encoding of the first data includes:
for each layer among the one or more layers included in the first data, determining one process among a plurality of processes, using a value indicating the layer and a value related to the one or more layers included in the second data, and executing the one process determined on the first data of the layer.

2. The encoding method according to claim 1, wherein
the encoding of the first data includes:
executing different processes on the first data depending on whether a total number of the one or more layers included in the first data is identical to a total number of the one or more layers included in the second data.

3. The encoding method according to claim 2, wherein
the encoding of the first data includes:
for each layer among the one or more layers included in the first data, determining whether the second data includes a same layer as the layer, and executing different processes on the layer depending on whether it is determined that the second data includes the same layer as the layer or it is determined that the second data does not include the same layer as the layer.

4. The encoding method according to claim 2, wherein
the first data includes first displacement data included in the first frame and including one or more layers,
the encoding of the first data includes:
determining whether a total number of the one or more layers included in the first data is identical to a total number of the one or more layers included in the second data;
executing a first process on the first data when it is determined that the total number of the one or more layers included in the first data is identical to the total number of the one or more layers included in the second data; and
executing a second process different from the first process on the first data when it is determined that the total number of the one or more layers included in the first data is not identical to the total number of the one or more layers included in the second data,
the first process includes encoding the first displacement data by generating a prediction residual using (i) a prediction value of the first displacement data and (ii) the first displacement data, and encoding the prediction residual generated, the prediction value of the first displacement data being generated by performing inter prediction using second displacement data corresponding to a different time than the first displacement data, and
the second process includes encoding the first displacement data without performing the inter prediction.

5. The encoding method according to claim 4, wherein
the encoding of the first data includes:
for each layer among the one or more layers included in the first data, determining whether a total number of three-dimensional points belonging to the layer is identical to a total number of three-dimensional points belonging to a same layer as the layer among the one or more layers included in the second data; and
executing the second process on the layer when it is determined that the total number of three-dimensional points belonging to the layer is not identical to the total number of three-dimensional points belonging to the same layer as the layer among the one or more layers included in the second data.

6. The encoding method according to claim 4, wherein
the one or more layers included in the first data are two or more layers including a first base layer and one or more first sub-layers sequentially generated by performing a first subdivision process based on the first base layer,
the one or more layers included in the second data are two or more layers including a second base layer and one or more second sub-layers sequentially generated by performing a second subdivision process based on the second base layer, and
the encoding of the first data includes:
for each first sub-layer among the one or more first sub-layers included in the first data, determining whether the first subdivision process used to generate the layer is identical to the second subdivision process used for a same layer as the layer among the one or more second sub-layers included in the second data; and
executing the second process on the layer when it is determined that the first subdivision process used to generate the layer is not identical to the second subdivision process used for the same layer as the layer among the one or more second sub-layers included in the second data.

7. The encoding method according to claim 6, wherein
the encoding of the first data includes:
determining whether a structure of the first base layer is identical to a structure of the second base layer; and
executing the second process when it is determined that the structure of the first base layer is not identical to the structure of the second base layer.

8. The encoding method according to claim 4, wherein
the encoding of the first data includes:
for each first three-dimensional point among one or more first three-dimensional points belonging to each layer among the one or more layers included in the first data, determining whether a second three-dimensional point corresponding to the first three-dimensional point belongs to a same layer as the layer among the one or more layers included in the second data; and
executing the second process when it is determined that the second three-dimensional point corresponding to the first three-dimensional point does not belong to the same layer as the layer among the one or more layers included in the second data.

9. The encoding method according to claim 4, wherein
the encoding of the first data includes:
for each first three-dimensional point among one or more first three-dimensional points belonging to each layer among the one or more layers included in the first data, determining whether a third three-dimensional point within a predetermined distance from a position corresponding to the first three-dimensional point belongs to a same layer as the layer among the one or more layers included in the second data; and
executing the second process when it is determined that the third three-dimensional point within the predetermined distance from the position corresponding to the first three-dimensional point does not belong to the same layer as the layer among the one or more layers included in the second data.

10. A decoding method comprising:
obtaining a first frame to be decoded; and
decoding first data using second data as a reference, the first data included in the first frame and including one or more layers, the second data included in a second frame and including one or more layers, wherein
the decoding of the first data includes:
for each layer among the one or more layers included in the first data, determining one process among a plurality of processes, using a value indicating the layer and a value related to the one or more layers included in the second data, and executing the one process determined on the first data of the layer.

11. The decoding method according to claim 10, wherein
the decoding of the first data includes:
executing different processes on the first data depending on whether a total number of the one or more layers included in the first data is identical to a total number of the one or more layers included in the second data.

12. The decoding method according to claim 11, wherein
the decoding of the first data includes:
for each layer among the one or more layers included in the first data, determining whether the second data includes a same layer as the layer, and executing different processes on the layer depending on whether it is determined that the second data includes the same layer as the layer or it is determined that the second data does not include the same layer as the layer.

13. The decoding method according to claim 11, wherein
the first data includes first displacement data included in the first frame and including one or more layers,
the decoding of the first data includes:
determining whether a total number of the one or more layers included in the first data is identical to a total number of the one or more layers included in the second data;
executing a first process on the first data when it is determined that the total number of the one or more layers included in the first data is identical to the total number of the one or more layers included in the second data; and
executing a second process different from the first process on the first data when it is determined that the total number of the one or more layers included in the first data is not identical to the total number of the one or more layers included in the second data,
the first process includes obtaining a prediction value of the first displacement data by decoding the first displacement data encoded, the prediction value of the first displacement data being generated by performing inter prediction using second displacement data corresponding to a different time than the first displacement data, and obtaining the first displacement data using the prediction value of the first displacement data obtained, and
the second process includes obtaining the first displacement data generated without performing the inter prediction, by decoding the first displacement data encoded.

14. The decoding method according to claim 13, wherein
the decoding of the first data includes:
for each layer among the one or more layers included in the first data, determining whether a total number of three-dimensional points belonging to the layer is identical to a total number of three-dimensional points belonging to a same layer as the layer among the one or more layers included in the second data; and
executing the second process on the layer when it is determined that the total number of three-dimensional points belonging to the layer is not identical to the total number of three-dimensional points belonging to the same layer as the layer among the one or more layers included in the second data.

15. The decoding method according to claim 13, wherein
the one or more layers included in the first data are two or more layers including a first base layer and one or more first sub-layers sequentially generated by performing a first subdivision process based on the first base layer,
the one or more layers included in the second data are two or more layers including a second base layer and one or more second sub-layers sequentially generated by performing a second subdivision process based on the second base layer, and
the decoding of the first data includes:
for each first sub-layer among the one or more first sub-layers included in the first data, determining whether the first subdivision process used to generate the layer is identical to the second subdivision process used for a same layer as the layer among the one or more second sub-layers included in the second data; and
executing the second process on the layer when it is determined that the first subdivision process used to generate the layer is not identical to the second subdivision process used for the same layer as the layer among the one or more second sub-layers included in the second data.

16. The decoding method according to claim 15, wherein
the decoding of the first data includes:
determining whether a structure of the first base layer is identical to a structure of the second base layer; and
executing the second process when it is determined that the structure of the first base layer is not identical to the structure of the second base layer.

17. The decoding method according to claim 13, wherein
the decoding of the first data includes:
for each first three-dimensional point among one or more first three-dimensional points belonging to each layer among the one or more layers included in the first data, determining whether a second three-dimensional point corresponding to the first three-dimensional point belongs to a same layer as the layer among the one or more layers included in the second data; and
executing the second process when it is determined that the second three-dimensional point corresponding to the first three-dimensional point does not belong to the same layer as the layer among the one or more layers included in the second data.

18. The decoding method according to claim 13, wherein
the decoding of the first data includes:
for each first three-dimensional point among one or more first three-dimensional points belonging to each layer among the one or more layers included in the first data, determining whether a third three-dimensional point within a predetermined distance from a position corresponding to the first three-dimensional point belongs to a same layer as the layer among the one or more layers included in the second data; and
executing the second process when it is determined that the third three-dimensional point within the predetermined distance from the position corresponding to the first three-dimensional point does not belong to the same layer as the layer among the one or more layers included in the second data.

19. An encoding device comprising:
memory; and
a circuit having access to the memory, wherein
in operation, the circuit performs:
obtaining a first frame to be encoded; and
encoding first data using second data as a reference, the first data included in the first frame and including one or more layers, the second data included in a second frame and including one or more layers, wherein
the encoding of the first data includes:
for each layer among the one or more layers included in the first data, determining one process among a plurality of processes, using a value indicating the layer and a value related to the one or more layers included in the second data, and executing the one process determined on the first data of the layer.

20. A decoding device comprising:
memory; and
a circuit having access to the memory, wherein
in operation, the circuit performs:
obtaining a first frame to be decoded; and
decoding first data using second data as a reference, the first data included in the first frame and including one or more layers, the second data included in a second frame and including one or more layers, wherein
the decoding of the first data includes:
for each layer among the one or more layers included in the first data, determining one process among a plurality of processes, using a value indicating the layer and a value related to the one or more layers included in the second data, and executing the one process determined on the first data of the layer.
